(19) Europäisches Patentamt
European Patent Office
Office européen des brevets

(11) **EP 3 050 660 B1**

(12) **EUROPÄISCHE PATENTSCHRIFT**

(45) Veröffentlichungstag und Bekanntmachung des Hinweises auf die Patenterteilung:
**20.10.2021 Patentblatt 2021/42**

(51) Int Cl.:
**B23F 5/04** *(2006.01)* **B23F 5/22** *(2006.01)*
**B23F 19/00** *(2006.01)*

(21) Anmeldenummer: **15195128.2**

(22) Anmeldetag: **18.11.2015**

(54) **VERFAHREN ZUR VERZAHNBEARBEITUNG EINES WERKSTÜCKES DURCH EIN DIAGONALWÄLZVERFAHREN**

METHOD FOR GEAR CUTTING A PIECE BY MEANS OF A DIAGONAL GENERATING METHOD

PROCÉDÉ D'USINAGE DE DENTURES D'UNE PIÈCE À USINER SELON UN PROCÉDÉ DE LAMINAGE DIAGONAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2015 DE 102015000907**

(43) Veröffentlichungstag der Anmeldung:
**03.08.2016 Patentblatt 2016/31**

(73) Patentinhaber: **Liebherr-Verzahntechnik GmbH 87437 Kempten (DE)**

(72) Erfinder: **Würfel, Robert 87499 Wildpoldsried (DE)**

(74) Vertreter: **Behr, Wolfgang
Lorenz Seidler Gossel
Rechtsanwälte Patentanwälte
Partnerschaft mbB
Widenmayerstraße 23
80538 München (DE)**

(56) Entgegenhaltungen:
**DE-A1- 19 706 867** **DE-A1- 19 844 388**
**DE-A1-102009 000 774** **DE-A1-102012 015 846**

• **None**

**Beschreibung**

Die vorliegende Erfindung betrifft ein Verfahren zur Herstellung eines Werkstückes mit korrigierter Verzahnungsgeometrie und / oder modifizierter Oberflächenstruktur durch ein Diagonalwälzverfahren mittels eines modifizierten Werkzeuges. Insbesondere kann es sich bei dem Diagonalwälzverfahren dabei um ein Diagonalschleifverfahren handeln, bei welchem eine modifizierte abrichtbare oder nicht abrichtbare Schleifschnecke eingesetzt wird.

Aus der EP 1 995 010 B1 ist dabei ein Verfahren zur Erzeugung einer Verzahnung mit einer geforderten Balligkeit und einer geforderten Schränkung dargestellt. Hierfür wird zum einen ein balliges Werkzeug eingesetzt, welches dadurch hergestellt wird, dass beim Abrichten der Schleifschnecke während der Verschiebung der Schnecke in Richtung ihrer Achse der Abstand zwischen der Abrichtscheibe und der Schnecke geändert wird. Dabei wird in der Schneckenmitte ein bestimmter Achsabstand verwirklicht und zu den beiden Schneckenenden hin entsprechend dem Quadrat des Abstands von der Schneckenmitte vergrößert bzw. verkleinert. Zusätzlich wird während des Diagonalschleifverfahrens der Achsabstand zwischen der Schleifschnecke und dem Werkstück zur Erzeugung einer balligen Modifikation geändert. Die Verschränkung selbst wird dabei über die Differenz von Profilwinkelabweichungen in zwei unterschiedlichen Stirnschnitt-Ebenen bestimmt. Das aus der EP 1995 010 B1 bekannte Verfahren führt jedoch dazu, dass außerhalb der Ebenen, in welchen die Schränkung bestimmt wird, Formabweichungen vorliegen.

DE 10 2009 000774 A1 zeigt ein Verfahren zur Bestimmung des Profils einer im Wesentlichen evolventischen Schleifschnecke, welche zum Wälzschleifen von schräg verzahnten Zahnrädern im kontinuierlichen Diagonalwälzverfahren verwendet wird, wobei sich der Achsabstand der Schleifschnecke zum Zahnrad zur Erzeugung einer Breitenballigkeit und der Eingriffswinkel der Schleifschnecke über deren Länge zur Eliminierung von verfahrensbedingten Verschränkungen und zur Erzeugung gezielter Verschränkungen ändern. Dabei soll in einem ersten Iterationsverfahren das kontinuierlich ablaufende Wälzschleifverfahren auf der Basis des Durchdringungsprinzips nachgebildet (simuliert) werden, das dabei in mehrere diskrete Verfahrensschritte der Wälzbewegung zerlegt wird, wobei durch Verschneidung des Hüllkörpers der Schleifschnecke mit den Flanken des Zahnrades eine Schnittkurve gebildet wird, und der resultierende Verschnitt an der Zahnflanke durch Berechnung ermittelt und dass in einem zweiten anschließenden Iterationsverfahren das Profil der Schleifschnecke oder eines Abrichters zur Eliminierung des ermittelten Verschnitts angepasst wird.

DE 197 06867 A1, die die Basis für den Oberbegriff des Anspruchs 15 bildet, zeigt Methoden für die Profilierung ein- oder mehrgängiger Schleifschnecken für das Schleifen von Zahnflanken nach dem Prinzip des kontinuierlichen Diagonalwälzschleifens sowie ein Werkzeug und eine Vorrichtung zur Durchführung der Methoden Dazu wird eine Schleifschnecke in Richtung ihrer Achse in mindestens zwei Bereiche unterteilt, wobei ein Bereich unmodifiziert bleibt und ein zweiter Bereich für das Erzeugen von Zahnflankenmodifikationen mittels besonderer Profiliermethoden Modifikationen der Schneckengangflanken erhält. Das Hauptmerkmal dieser Profiliermethoden liegt in Zusatzbewegungen, die dem scheibenförmigen Profilierwerkzeug und/oder der Schleifschnecke in Abhängigkeit von der momentanen Profilierhublage überlagert werden und zu den Modifikationen der Schneckengangflanken führen. Durch das anschließende Diagonalwälzschleifen über einen so profilierten Schleifschneckenbereich bilden sich die Modifikationen der Schneckengangflanken auf den Flanken der Verzahnung ab.

Aus der DE 10 2012 015 846 A1, die die Basis für die Oberbegriffe der Ansprüche 1, 3 und 5 bildet, ist ein Verfahren bekannt, bei welchem eine gezielte Modifikation der Oberflächengeometrie eines Werkzeuges erzeugt wird, indem die Position des Abrichters zum Werkzeugabrichten in Abhängigkeit von dem Werkzeugdrehwinkel und / oder der Werkzeugbreitenposition variiert wird, wobei die Modifikation des Werkzeuges eine entsprechende Modifikation auf der Oberfläche des Werkstückes erzeugt. Als Modifikation sind dabei insbesondere periodische Flankenwelligkeiten auf der aktiven Oberfläche des Werkstückes vorgesehen.

Aufgabe der vorliegenden Erfindung ist es, die Verfahren zur Herstellung eines Werkstückes mit korrigierter Verzahnungsgeometrie gemäß dem Stand der Technik weiterzuentwickeln und / oder deren Anwendungsbereich zu erweitern.

Diese Aufgabe wird durch die unabhängigen Ansprüche der vorliegenden Erfindung gelöst. Vorteilhafte Ausgestaltungen sind Gegenstand der abhängigen Ansprüche.

Die vorliegende Erfindung umfasst ein Verfahren zur Herstellung eines Werkstückes mit korrigierter Verzahnungsgeometrie und / oder modifizierter Oberflächenstruktur durch ein Diagonalwälzverfahren mittels eines modifizierten Werkzeuges. Dabei wird eine gezielte Modifikation der Oberflächengeometrie des Werkzeuges erzeugt, welche im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist. Diese Modifikation des Werkzeuges erzeugt durch das Diagonalwälzverfahren eine entsprechende Modifikation auf der Oberfläche des Werkstückes. Erfindungsgemäß ist dabei vorgesehen, dass die gezielte Modifikation auf der Oberfläche des Werkstückes eine gerichtete Balligkeit ohne Formabweichungen ist.

Der Erfinder der vorliegenden Erfindung hat dabei erkannt, dass durch eine gezielte Modifikation der Oberflächengeometrie des Werkzeuges eine Balligkeit auf dem Werkstück erzeugt werden kann, welche nicht nur in zwei Ebenen eine vorgegebene Schränkung aufweist, sondern in sämtlichen Stirnschnitt-Ebenen, und daher in einer Richtung senkrecht zu der vorgegebenen Schränkung bzw. zum Verlauf der Balligkeit keine Formabweichungen aufweist. Eine solche Modifikation wird vorliegend als gerichtete Balligkeit bezeichnet.

Die erfindungsgemäß erzeugbare gerichtete Balligkeit kann dabei verschränkungsfrei sein oder eine Verschränkung mit einer frei vorgegebenen Richtung auf der Zahnflanke aufweisen. Eine verschränkungsfreie Balligkeit stellt dabei eine reine Flankenlinienmodifikation ohne Profilmodifikation dar. Diese ist durch das erfindungsgemäße Verfahren nun auch auf Schrägverzahnungen ohne Formabweichungen, d. h. ohne eine Profilmodifikation, herstellbar.

Die Richtung der Balligkeit, d. h. der Verlauf der Modifikation auf der Zahnflanke kann jedoch durch das erfindungsgemäße Verfahren frei vorgegeben werden. Senkrecht zu dieser vorgegebenen Richtung ergeben sich erfindungsgemäß anders als im Stand der Technik keine Formabweichungen.

Bevorzugt wird die Richtung der Verschränkung, d. h. die Richtung des Verlaufes der Balligkeit auf der Zahnflanke, dabei so gewählt, dass die Linien konstanter Modifikation mit einem Winkel kleiner 60° zur Eingriffslinie der Verzahnung verlaufen. Vorteilhafterweise verlaufen die Linien konstanter Modifikation mit einem Winkel kleiner 30°, weiter vorteilhafter Weise kleiner 10° zu dieser Eingriffslinie. Besonders bevorzugt verlaufen die Linien konstanter Modifikation parallel zur Eingriffslinie der Verzahnung. Hierdurch rollt das Zahnrad mit seiner Balligkeit auf einem Gegenzahnrad ab.

Erfindungsgemäß können damit anstelle einer natürlichen Verschränkung, wie sie beispielsweise bei einer Erzeugung einer Balligkeit durch Modifikation der Maschinenkinematik während des Bearbeitungsprozesses der Werkstückes entsteht, eine in eine vorgebbare Richtung verlaufende Balligkeit eingesetzt werden. Dies hat den Vorteil, dass statt der natürlichen Verschränkung, welche üblicherweise eine für den Anwendungsfall ungünstige Richtung aufweist, eine für die Anwendung vorteilhafte Richtung der Verschränkung gewählt werden.

Eine gerichtete Balligkeit gemäß der vorliegenden Erfindung bedeutet, dass die Modifikation auf der Zahnflanke in einer ersten Richtung, welche senkrecht auf der Richtung der Balligkeit bzw. der Verschränkung steht, einen konstanten Wert aufweist, und in einer zweiten Richtung, welche die Richtung der Balligkeit bzw. der Verschränkung definiert, durch eine Funktion $F_{Ft2}$ gegeben ist, welche die Form der Balligkeit definiert. Senkrecht zur zweiten Richtung sind damit keine Modifikationen und damit keine Formabweichungen gegeben.

Erfindungsgemäß ist vorgesehen, dass eine vorgegebene Richtung der Balligkeit durch eine entsprechende Wahl der ersten bzw. zweiten Richtung der Modifikation auf dem Werkzeug und des Diagonalverhältnisses erreicht wird. Insbesondere werden die erste Richtung der Modifikation auf dem Werkzeug und das Diagonalverhältnis dabei so gewählt, dass die erste Richtung auf dem Werkzeug auf eine senkrecht zu der gewünschten Richtung der Balligkeit auf dem Werkstück verlaufende Richtung abgebildet wird.

Erfindungsgemäß kann in einer möglichen Ausgestaltung die gerichtete Balligkeit ausschließlich über die Modifikation des Werkzeuges und ohne eine Modifikation der Maschinenkinematik bei der Bearbeitung des Werkstückes erzeugt werden. Hierdurch werden ungewünschte Formabweichungen vermieden, und zusätzlich das Bearbeitungsverfahren vereinfacht.

Die erfindungsgemäße Balligkeit kann zunächst eine beliebige ballige Form aufweisen, d. h. einen in einem mittleren Bereich angeordneten Hochpunkt aufweisen, von welchem aus sie zu den Seiten hin stetig abfällt. Insbesondere kann die Balligkeit dabei kreisförmig oder parabelförmig oder logarithmisch sein oder aus mehreren kreisförmigen, parabelförmigen oder logarithmischen Segmenten zusammengesetzt sein. Die Balligkeit wird dabei durch die Funktion $F_{Ft2}$ definiert, welche zur Erzeugung der Modifikation auf dem Werkzeug herangezogen wird und mit umgekehrtem Vorzeichen und gegebenenfalls gestaucht auf das Werkstück übertragen wird.

Die vorliegende Erfindung umfasst ein weiteres Verfahren zur Herstellung eines Werkstückes mit korrigierter Verzahnungsgeometrie und / oder modifizierter Oberflächenstruktur durch ein Diagonalwälzverfahren mittels eines modifizierten Werkzeuges. Dabei wird eine gezielte Modifikation der Oberflächengeometrie des Werkzeuges erzeugt, welche im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist. Dabei erzeugt die Modifikation des Werkzeuges durch das Diagonalwälzverfahren eine entsprechende Modifikation auf der Oberfläche des Werkstückes. Erfindungsgemäß ist dabei vorgesehen, dass die gezielte Modifikation eine reine Flankenlinienmodifikation darstellt.

Der Erfinder der vorliegenden Erfindung hat dabei erkannt, dass durch das erfindungsgemäße Verfahren reine Flankenlinienmodifikationen erzeugbar sind, und zwar auch bei Schrägverzahnungen. Gemäß dem Stand der Technik ergaben sich dagegen zusätzlich zu den gewünschten Flankenlinienmodifikationen ungewünschte Profilmodifikationen wie beispielsweise eine unerwünschte Schränkung. Der Erfinder hat weiterhin erkannt, dass durch das erfindungsgemäße Verfahren frei vorgebbare Flankenlinienmodifikationen erzeugbar sind.

Bevorzugt ist daher vorgesehen, dass die Flankenlinienmodifikation zumindest innerhalb bestimmter Randbedingungen frei vorgegeben wird. Insbesondere kann die Flankenlinienmodifikation dabei als eine Funktion $F_{Ft2}$ vorgegeben werden, welche auf dem modifizierten Werkzeug erzeugt wird und dann auf das Werkstück übertragen wird. Insbesondere kann dabei die Position des Abrichters zum Werkzeug beim Abrichten in Abhängigkeit von dem Werkzeugdrehwinkel und / oder der Werkzeugbreitenposition gemäß einer Funktion $F_{Ft1}$ variiert werden.

Erfindungsgemäß wird die erste bzw. zweite Richtung der Modifikation des Werkzeuges und das Diagonalverhältnis so gewählt, dass die erste Richtung auf eine Stirnschnittebene des Werkstückes abgebildet wird. Dies hat zur Folge, dass die Modifikation des Werkzeuges mit ihrer ersten Richtung, in welcher sie konstant ist, auf die Stirnschnittebene des Werkstücks abgebildet wird, so dass keine Profilabweichungen vorliegen. Durch den Verlauf der Modifikationen in der zweiten Richtung wird dann der Verlauf der Flankenlinienmodifikation definiert.

Die vorliegende Erfindung umfasst ein weiteres Verfahren zur Herstellung eines Werkstückes mit korrigierter Verzahnungsgeometrie und / oder modifizierter Oberflächenstruktur durch ein Diagonalwälzverfahren mittels eines modifizierten Werkzeuges. Dabei wird eine gezielte Modifikation der Oberflächengeometrie des Werkzeuges erzeugt, welche im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist. Dabei erzeugt die Modifikation des Werkzeuges durch das Diagonalwälzverfahren eine entsprechende Modifikation auf der Oberfläche des Werkstückes. Erfindungsgemäß ist dabei vorgesehen, dass die gezielte Modifikation eine Endrücknahme ist.

Der Erfinder der vorliegenden Erfindung hat dabei erkannt, dass durch das erfindungsgemäße Verfahren gezielt Endrücknahmen erzeugbar sind. Bevorzugt können die Endrücknahmen dabei mit einer definierten Richtung erzeugt werden. Insbesondere kann dabei eine gewünschte Richtung vorgegeben werden und durch entsprechende Umsetzung des erfindungsgemäßen Verfahrens eine Endrücknahme in diese Richtung erzeugt werden.

In einer möglichen Ausführungsform der vorliegenden Erfindung können die Linien konstanter Modifikation mit einem Winkel kleiner 60° zur Eingriffslinie der Verzahnung verlaufen. Weiter bevorzugt verlaufen die Linien konstanter Modifikation mit einem Winkel kleiner 30°, weiterhin vorteilhafter Weise kleiner 10° zur Eingriffslinie der Verzahnung. Besonders bevorzugt verlaufen die Linien konstanter Modifikation dabei parallel zur Eingriffslinie der Verzahnung. Dies hat den Vorteil, dass das Zahnrad auf der Endrücknahme abrollt.

Alternativ oder zusätzlich kann die erfindungsgemäße Endrücknahme eine Dreiecksrücknahme sein, bei welcher die Linien konstanter Modifikation einen Winkel $\alpha \neq 0$ mit der Zahnkante aufweisen. Auch eine solche Dreiecksrücknahme erlaubt eine verbesserte Anordnung der Endrücknahme und ein verbessertes Laufverhalten.

Der Verlauf der Endrücknahme senkrecht zu den Linien konstanter Modifikation kann zunächst beliebig vorgegeben werden, wobei der Verlauf von einem Bereich, mit welchem die Endrücknahme an einen modifizierten Abschnitt oder einen Abschnitt mit einer anderen Modifikation der Verzahnung angrenzt, bevorzugt stetig nach außen hin abfällt. Der Verlauf der Endrücknahme kann dabei beispielsweise planar, parabelförmig, teilkreisförmig, logarithmisch, exponentiell oder elliptisch sein oder abschnittsweise aus solchen Formen bestehen oder abschnittsweise solche Formen sowie Übergangsbereiche umfassen. Sind Übergangsbereiche vorgesehen, stellen diese bevorzugt einen tangentialen Übergang bereit.

Insbesondere kann der Verlauf der Endrücknahme dabei senkrecht zu den Linien konstanter Modifikation in einem ersten Abschnitt planar sein und in einem Übergangsbereich in einen unmodifizierten Abschnitt oder einen Abschnitt mit einer anderen Modifikation übergehen. Insbesondere kann der Übergangsbereich dabei einen tangentialen Übergang bereitstellen.

Wie bereits oben dargestellt, kann erfindungsgemäß eine Richtung der Endrücknahme vorgegeben und durch das erfindungsgemäße Verfahren umgesetzt werden.

Erfindungsgemäß werden die erste bzw. zweite Richtung der Modifikation des Werkzeuges und das Diagonalverhältnis in Abhängigkeit von der gewünschten Richtung der Endrücknahme gewählt. Insbesondere werden die erste bzw. zweite Richtung der Modifikation des Werkzeuges und das Diagonalverhältnis dabei so gewählt, dass die Linien konstanter Modifikation auf dem Werkzeug auf die gewünschten Linien konstanter Modifikation der Endrücknahme abgebildet werden.

Gemäß dem erfindungsgemäßen Verfahren können an der Ober- und Unterkante des Werkstücks unterschiedliche Endrücknahmen vorgesehen werden. Insbesondere können sich die Endrücknahmen an der Ober- und Unterkante dabei im Bezug auf ihre Form und / oder ihre Ausrichtung unterscheiden.

Insbesondere können dabei an der Ober- und Unterkante Endrücknahmen mit unterschiedlichen Verläufen der Linien konstanter Modifikation vorgesehen werden. Alternativ oder zusätzlich können die Linien konstanter Modifikation an der Ober- und Unterkante jeweils unterschiedliche Winkel $\alpha_1$ bzw. $\alpha_2$ mit der jeweiligen Zahnkante aufweisen.

Gemäß einer ersten Ausführungsform der vorliegenden Erfindung kann dabei zur Bearbeitung der beiden Endrücknahmen mit unterschiedlichen Diagonalverhältnissen gearbeitet werden. Hierdurch können unterschiedliche Richtungen der beiden Endrücknahmen hervorgerufen werden.

Alternativ oder zusätzlich kann das Werkzeug mindestens einen modifizierten und einen unmodifizierten Bereich aufweisen. Die erste Endrücknahme kann dann beispielsweise über den modifizierten Bereich erzeugt werden, die zweite Endrücknahme durch eine Veränderung der Maschinenkinematik bei der Bearbeitung des Werkstückes.

Bevorzugt weist das Werkzeug jedoch mindestens zwei Bereiche mit unterschiedlichen Modifikationen auf, insbesondere mit Modifikationen mit unterschiedlicher Ausrichtung. Insbesondere können dabei in den beiden Bereichen Modifikation mit unterschiedlicher erster bzw. zweiter Richtung vorgesehen sein. Hierdurch werden zur Erzeugung der Endrücknahme und der Ober- und Unterkante jeweils Bereiche mit unterschiedlicher Modifikation eingesetzt.

Alternativ oder zusätzlich kann das Werkzeug zwei modifizierte Bereiche aufweisen, zwischen welchen ein unmodifizierter Bereich liegt. Die beiden modifizierten Bereiche werden dann zur Herstellung der Endrücknahmen an der Ober- und Unterkante eingesetzt. Durch den dazwischenliegenden unmodifizierten Bereich kann das Diagonalverhältnis für den ersten und zweiten modifizierten Bereich unterschiedlich gewählt werden, um so die Richtung der Endrücknahmen für die Ober- und Unterkante unterschiedlich einzustellen. Bevorzugt wird daher in mindestens zwei Bereichen mit unterschiedlichen Diagonalverhältnissen gearbeitet.

Die zwei modifizierten Bereiche, zwischen welchen ein unmodifizierter Bereich liegt, können alternativ oder zusätzlich auch unterschiedliche erste bzw. zweite Richtungen der Modifikation aufweisen.

In einer möglichen Ausgestaltung der vorliegenden Erfindung ist vorgesehen, dass die Linien konstante Modifikation auf dem Werkstück mit einem Winkel kleiner 60° zur Eingriffslinie der Verzahnung verlaufen.

Das erfindungsgemäße Verfahren erlaubt dabei bevorzugt die Vorgabe der Richtung der gewünschten Modifikation, welche dann durch das erfindungsgemäße Verfahren bereitgestellt wird. Insbesondere kann die Richtung der Modifikation dabei so gewählt werden, dass sich ein günstiges Abrollverhalten ergibt.

Bevorzugt verlaufen die Linien konstanter Modifikation auf dem Werkstück dabei mit einem Winkel kleiner 30°, weiterhin vorteilhafter Weise kleiner 10° zur Eingriffslinie der Verzahnung. Bevorzugt verlaufen die Linien konstanter Modifikation dabei parallel zur Eingriffslinie der Verzahnung. Hierdurch rollt das Werkstück auf der Modifikation ab und steht jeweils mit einer Linie, auf welcher die Modifikation konstant ist, mit der Gegenverzahnung in Kontakt.

Vorteilhafterweise wird dabei erfindungsgemäß die erste bzw. zweite Richtung der Modifikation des Werkzeuges und das Diagonalverhältnis in Abhängigkeit von der gewünschten Richtung der Modifikation bzw. der gewünschten Richtung der Linien konstanter Modifikation auf dem Werkstück gewählt. Insbesondere werden die erste bzw. zweite Richtung der Modifikation auf dem Werkzeug und das Diagonalverhältnis so gewählt, dass die Linien konstanter Modifikation auf dem Werkzeug auf die gewünschten Linien konstanter Modifikation auf dem Werkstück abgebildet werden.

Bei sämtlichen der oben dargestellten Verfahren wird bevorzugt eine Modifikation der Oberflächengeometrie des Werkstückes erzeugt, welche auf der Zahnflanke im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist. Bevorzugt handelt es sich bei der Funktion $F_{Ft1}$ auf dem Werkzeug dabei um die gleiche, gegebenenfalls linear um einen Faktor gestauchte Funktion wie die Funktion $F_{Ft2}$ auf dem Werkstück. Die lineare Stauchung kann dabei das Argument der Funktion betreffen, und/oder die Größe der Funktion. Natürlich ändert sich dabei das Vorzeichen der Funktion zwischen Werkstück und Werkzeug, da erhabene Stellen auf dem Werkzeug abgesenkte Stellen auf dem Werkstück erzeugen und umgekehrt. Im Normalschnitt kann dabei insbesondere $F_{Ft1}(x) = - F_{Ft2}(cx)$ gelten, d.h. es liegt lediglich in Bezug auf das Argument eine Stauchung vor, im Stirnschnitt kann dagegen ein zusätzlicher konstanter Faktor k im Hinblick auf die Größe der Funktion vorliegen, d.h. $F_{Ft1}(x) = - k * F_{Ft2}(cx)$. Die Faktoren k und c können dabei je nach den konkreten Randbedingungen größer oder kleiner 1 sein.

Weiterhin kann bei allen erfindungsgemäßen Verfahren die Makrogeometrie des Werkzeuges und / oder die Eingriffslinie des Abrichtwerkzeuges und / oder das Diagonalverhältnis und / oder der Stauchungsfaktor so gewählt werden, dass die Modifikation des Werkzeuges entlang einer ersten Linie, auf welcher sich der Berührpunkt bei der Bearbeitung des Werkstückes auf dem Werkzeug bewegt, der gewünschten Modifikation des Werkstückes entlang einer zweiten Linie, auf welcher sich der Berührpunkt auf dem Werkstück bewegt, entspricht. Insbesondere können dabei die Eingriffslinie des Abrichtwerkzeuges und das Diagonalverhältnis so gewählt werden, dass die erste Richtung des Werkzeuges auf die erste Richtung des Werkstückes abgebildet wird.

Weiterhin kann bei sämtlichen erfindungsgemäßen Verfahren die gezielte Modifikation der Oberflächengeometrie des Werkzeuges bevorzugt durch eine Veränderung der Maschinenkinematik während des Abrichtprozesses in Abhängigkeit von dem Werkzeugdrehwinkel und / oder der Werkzeugbreitenposition erzeugt werden. Insbesondere kann dies dadurch erfolgen, dass eine oder mehrere der folgenden Korrekturen der Achsbewegung zur herkömmlichen Abrichtkinematik vorgenommen werden:

a) Variation des Achsabstandes des Abrichters zum Werkzeug in Abhängigkeit des Werkzeugdrehwinkels oder der Werkzeugbreite (Zustellung)

b) Variation des Axialvorschubs des Werkzeugs bzw. des Abrichters in Abhängigkeit des Werkzeugdrehwinkels oder der Werkzeugbreite (Shiften)

c) Variation des Achskreuzwinkels des Werkzeuges und des Abrichters in Abhängigkeit des Werkzeugdrehwinkels oder der Werkzeugbreite (Schwenken)

d) Variation der Werkzeugdrehzahl in Abhängigkeit des Werkzeugdrehwinkels oder der Werkzeugbreite.

Das Abrichten des Werkzeuges kann dabei einflanking oder zweiflankig erfolgen. Bevorzugt wird dabei eine Profilrolle eingesetzt, mittels welcher das Werkzeug abgerichtet wird. Das Abrichten der Zahnflanke kann dabei in einem oder mehreren Hüben erfolgen.

Insbesondere kann die Profilrolle dabei beim Abrichten vom Fußbereich bis zum Kopfbereich mit dem Zahn des Werkzeuges in Kontakt stehen, so dass die Modifikation über die gesamte Zahnhöhe in einem Hub erfolgt.

Alternativ kann die Profilrolle beim Abrichten nur in Teilbereichen zwischen Fuß und Kopf mit dem Zahn des Werkzeuges in Kontakt stehen, so dass die Modifikation über die Zahnhöhe in mehreren Hüben erfolgt.

Das Abrichten des Zahnkopfes kann über einen Kopfabrichter erfolgen.

Die vorliegende Erfindung kann jedoch auch bei nicht-abrichtbaren Werkzeugen zum Einsatz kommen. In diesem Fall werden die Modifikationen des Werkzeugs nicht während des Abrichtens, sondern bereits bei der Herstellung der Werkzeuge erzeugt. Hierzu kann jedoch ggf. ein dem Abrichten entsprechendes Verfahren eingesetzt werden. Bevorzugt kommt die vorliegende Erfindung aber bei abrichtbaren Werkzeugen zum Einsatz.

Bei den erfindungsgemäßen Verfahren zur Herstellung eines Werkstückes mit korrigierter Verzahnungsgeometrie und / oder modifizierter Oberflächenstruktur handelt es sich bevorzugt um Wälzschleifverfahren, bei welchen weiterhin bevorzugt modifizierte Schleifschnecken zum Einsatz kommen. Insbesondere kommen dabei abrichtbare Schleifschnecken zum Einsatz, welche erfindungsgemäß modifiziert werden.

Die vorliegende Erfindung umfasst weiterhin eine Verzahnmaschine mit einer Ansteuerungsfunktion, welche ausgebildet ist, im Rahmen der Bearbeitung eines Werkstückes die gezielte Modifikation durch Durchführung eines oder mehrerer der oben dargestellten Verfahren zu erzeugen. Insbesondere weist die Verzahnmaschine dabei eine Eingabe- und / oder Berechnungsfunktion auf, über welche eine Modifikation und / oder die Ausrichtung einer Modifikation vorgebbar oder / oder bestimmbar ist. Weiterhin kann eine Ansteuerungsfunktion vorgesehen sein, welche im Rahmen der Bearbeitung eines Werkstückes die gezielte Modifikation erzeugt.

Bevorzugt erlaubt die Eingabefunktion dabei die Eingabe einer gewünschten Modifikation, während die Berechnungsfunktion die zu deren Herstellung notwendigen Modifikationen und / oder die zur Erzeugung der Modifikation benötigten Veränderungen der Maschinenkinematik während des Bearbeitungsprozesses und / oder des Abrichtprozesses bestimmt. Bevorzugt ist dabei eine Ansteuerungsfunktion vorgesehen, welche die Maschinenkinematik während des Bearbeitungsprozesses und / oder Abrichtprozesses entsprechend verändert.

Die Maschine kann dabei eine oder mehrere der folgenden Funktionen aufweisen:

Eine Balligkeits-Eingabe-Funktion, über welche einer oder mehrere Parameter einer zu erzeugenden Balligkeit eingebbar sind. Insbesondere kann dabei die Richtung der Balligkeit vorgegeben werden. Weiterhin bevorzugt kann durch die Balligkeits-Eingabe-Funktion die Form der Balligkeit vorgegeben werden. Bevorzugt stehen dabei für die Form der Balligkeit eine oder mehrere der folgenden Optionen zur Verfügung: kreisförmig, parabelförmig, logarithmisch. Alternativ oder zusätzlich kann die Balligkeits-Eingabe-Funktion das Zusammensetzen der Balligkeit aus mehreren kreisförmigen, parabelförmigen und / oder logarithmischen Segmenten erlauben. Weiterhin bevorzugt kann die Größe der Balligkeit vorgegeben werden.

Eine Flankenlinienmodifikations-Eingabe-Funktion. Bevorzugt kann über diese Eingabefunktion eine reine Flankenlinienmodifikation vorgegeben werden. Bevorzugt kann die Form der Flankenlinienmodifikation dabei frei vorgegeben werden.

Eine Endrücknahmen-Eingabe-Funktion. Bevorzugt erlaubt die Endrücknahmen-EingabeFunktion dabei die Vorgabe mindestens einer Endrücknahme. Bevorzugt können dabei Parameter der Endrücknahme eingegeben werden. Besonders bevorzugt kann dabei die Richtung, die Länge und / oder die Höhe der Endrücknahme vorgegeben werden. Weiterhin bevorzugt kann die Form der Endrücknahme vorgegeben werden, wobei bevorzugt eine oder mehrere der folgenden Formen für die Endrücknahme vorgesehen sein können: planar, parabelförmig, teilkreisförmig, logarithmisch, exponentiell oder elliptisch. Weiterhin kann vorgesehen sein, dass die Endrücknahmen-Eingabe-Funktion die abschnittsweise Vorgabe der Endrücknahmen aus solchen Formen erlaubt, und weiterhin bevorzugt tangentiale Übergangsbereiche erzeugt.

Bevorzugt erlaubt die Endrücknahmen-Eingabe-Funktion die Vorgabe von Endrücknahmen an der Ober- und Unterkante. Bevorzugt ermöglicht die Endrücknahmen-Eingabe-Funktion dabei die Vorgabe unterschiedlicher Endrücknahmen an der Ober- und Unterkante. Bevorzugt können dabei zumindest die Richtungen und weiter bevorzugt die Größe und / oder Länge der Endrücknahme und weiter bevorzugt die Form der Endrücknahmen an der Ober- und Unterkante separat eingegeben werden.

Bevorzugt erlauben die jeweiligen Eingabefunktionen dabei die Eingabe spezifischer, für die jeweils vorgebbare Modifikation charakteristischer Parameter.

Bevorzugt weist die Verzahnmaschine eine Auswahlfunktion auf, durch welche eine gewünschte Eingabefunktion aus einer Auswahl von mindestens zwei der oben genannten Eingabefunktionen ausgewählt werden kann.

Bevorzugt berechnet die Verzahnmaschine dabei aus den Werten, welche über die jeweilige Eingabefunktion eingegeben werden, die zur Herstellung dieser Modifikation benötigten Modifikationen beim Abrichten und / oder das beim Bearbeiten des Werkstückes notwendige Diagonalverhältnis.

Weiterhin bevorzugt handelt es sich bei der erfindungsgemäßen Verzahnmaschine um eine Verzahnschleifmaschine. Bevorzugt weist die Verzahnschleifmaschine eine Werkzeugspindel, eine Werkstückspindel und/oder eine Spindel für die Aufnahme eines Abrichters, insbesondere einer Abrichtscheibe auf, und Maschinenachsen zur Durchführung der erfindungsgemäßen Verfahren notwendigen Relativbewegungen zwischen Werkstück und Werkzeug und / oder zwischen Werkzeug und Abrichter gemäß der vorliegenden Erfindung.

Die vorliegende Erfindung umfasst weiterhin ein Computersystem und / oder Softwareprogramm zur Bestimmung der zur Herstellung eines Werkstückes mit einer gewünschten Modifikation notwendigen Modifikation des Werkzeuges und / oder der notwendigen Bearbeitungsparameter bei der Durchführung eines oder mehrerer der Verfahren, wie sie oben dargestellt wurden. Das Computersystem bzw. Softwareprogramm umfasst dabei eine Funktion zur Eingabe einer der gewünschten Modifikation, wie sie oben dargestellt wurden. Weiterhin umfasst es eine Berechnungsfunktion, welche aus der gewünschten Modifikation des Werkstückes die zu deren Erzeugung benötigten Parameter des Bearbeitungsvorgangs des Werkstückes und die benötigte Modifikation des Werkzeugs bestimmt. Insbesondere kann das Computersystem und / oder Softwareprogramm dabei eine der Eingabe- und / oder Berechnungsfunktionen umfassen, welche oben im Hinblick auf die erfindungsgemäße Verzahnmaschine näher beschrieben wurden.

Insbesondere kann das Computersystem und / oder Softwareprogramm dabei eine oder mehrere der oben genannten spezifischen Eingabefunktionen aufweisen, und/oder die oben beschriebene Auswahlfunktion.

Bevorzugt weist das Computersystem und / oder Softwareprogramm dabei eine Schnittstelle zu einer Verzahnmaschine auf, und / oder ist das Softwareprogramm auf einer Verzahnmaschine installierbar, sodass durch das Computersystem und / oder Softwareprogramm die Veränderungen der Maschinenkinematik während des Abrichtprozesses und / oder die Parameter des Bearbeitungsvorgangs vorgebbar und / oder bestimmbar sind. Insbesondere wird dabei durch das erfindungsgemäße Softwareprogramm eine Verzahnmaschine, wie sie oben dargestellt wurde, implementiert.

Die vorliegende Erfindung umfasst weiterhin ein verzahntes Werkstück, insbesondere Zahnrad, mit mindestens einer Endrücknahme, wobei die Modifikation im Wälzbild zumindest lokal in einer ersten Richtung ei-nen konstanten Wert aufweist und in einer zweiten Richtung, welche senk-recht zur ersten Richtung verläuft, durch eine Funktion $F_{Ft2}$ gegeben ist, wobei an der Ober- und Unterkante als Modifikation unterschiedliche Endrücknahmen vorgesehen sind. Dabei sind die Endrücknahmen in unterschiedliche Richtungen ausgerichtet. Bevorzugt sind die verzahnten Werkstücke dabei so ausgestaltet, dass sie die oben im Hinblick auf die Verfahren näher dargestellten Modifikationen aufweisen. Bevorzugt sind die erfindungsgemäßen verzahnten Werkstücke dabei durch ein erfindungsgemäßes Verfahren herstellbar.

Bevorzugt kann es sich bei den verzahnten Werkstücken jeweils um Zahnräder handeln. Bevorzugt handelt es sich dabei um schräg-verzahnte Zahnräder.

Gemäß der vorliegenden Erfindung werden bevorzugt evolventische Verzahnungen erzeugt. Die erfindungsgemäß angegebenen Modifikationen beziehen sich dabei auf eine Modifikation gegenüber einer durch eine Evolventenverzahnung gegebenen Oberflächengeometrie. Vorteilhafterweise werden dabei evolventische Werkzeuge, welche ggf. entsprechend modifiziert sind, eingesetzt.

Die vorliegende Erfindung umfasst weiterhin ein Getriebe mit einem oder mehreren der oben beschriebenen modifizierten Werkstücke, insbesondere einem oder mehreren erfindungsgemäß modifizierten Zahnrädern. Insbesondere kann es sich dabei um ein KfZ-Getriebe handeln. Bei der oben in bestimmten Aspekten erwähnten Eingriffslinie der Werkstücke handelt es sich dabei bevorzugt um die Linie, mit welcher ein erfindungsgemäßes Zahnrad mit einem anderen Zahnrad des Getriebes beim Abrollen in Kontakt steht.

Die vorliegende Erfindung wird nun anhand von Ausführungsbeispielen und Figuren näher erläutert.

Kurzbeschreibung der Figuren

Die Figuren zeigen beispielhaft nur w-z-Diagramme zylindrischer Verzahnungen. Die *w-z*-Diagramme konischer Verzahnungen sind im Allgemeinen nicht rechteckig, meist trapezförmig, da sich der Auswertebereich des Wälzwegs über die Verzahnbreite ändert.

Figur 1: Figur 1 zeigt ein w-z-Diagramm einer Modifikation, bestehend aus gemäß Gleichung (1) modifizierten Bereichen 41 und 41', sowie aus nicht modifizierten Bereichen 42, 42' und 42". Die Geraden 40 und 40' verlaufen in der durch $\rho_{F2}$ gegebenen Richtung. Die Geraden 43 und 43' entsprechen dem Verlauf des Kontaktpunkts.

Figur 2: Figur 2 zeigt ein w-z-Diagramm einer Modifikation, bestehend aus gemäß Gleichung (1) modifizierten Bereichen 51 und 51', sowie aus nicht modifizierten Bereichen 52, 52' und 52". Die Bereiche 51 und 51' haben Modifikationen mit unterschiedlichen Richtungen $\rho_{F2}$. Die Geraden 50 und 50' verlaufen in der durch die jeweiligen $\rho_{F2}$ gegebene Richtung. Die Geraden 53 und 53' entsprechen dem Verlauf des Kontaktpunkts.

Figur 3: Figur 3a zeigt am Beispiel einer rechten Flanke eines rechtsschrägen zylindrischen Werkstücks vier Kurven 60-63, welche jeweils den Verlauf der Punkte im *w-z*-Diagramm auf dem Werkstück beschreiben, welche auf eine Gerade auf der Schnecke abgebildet werden. Die vier Kurven entsprechen vier verschiedenen Werten $X_{F1}$ und somit vier verschiedenen Geraden auf der Schnecke. Die Kurven sind gegeneinander entlang der parallelen Geraden 65 bzw. 66 verschoben.

Figur 3b zeigt, passend zu Figur 3a, die Funktion $F_{z_{V1}}(z_{V2})$, welche die Abhängigkeit von $z_{V1}$ von $z_{V2}$ beschreibt.

Figur 4: Figur 4 zeigt ein $w$-$z$-Diagramm einer rechten Flanke eines linkschrägen zylindrischen Werkstücks, auf welches eine Modifikation mittels variablen Diagonalverhältnisses aufgebracht wurde. Linie 70 markiert den Verlauf der Punkte, welche auf die durch $X_{F1} = 0$ definierte Gerade auf der Schnecke abgebildet werden. Line 71 markiert den Verlauf der Punkte, welche auf die durch ein $X_{F1} > 0$ definierten Gerade auf der Schnecke abgebildet werden. Entlang der jeweiligen Verläufe ist der Wert der Modifikation konstant.

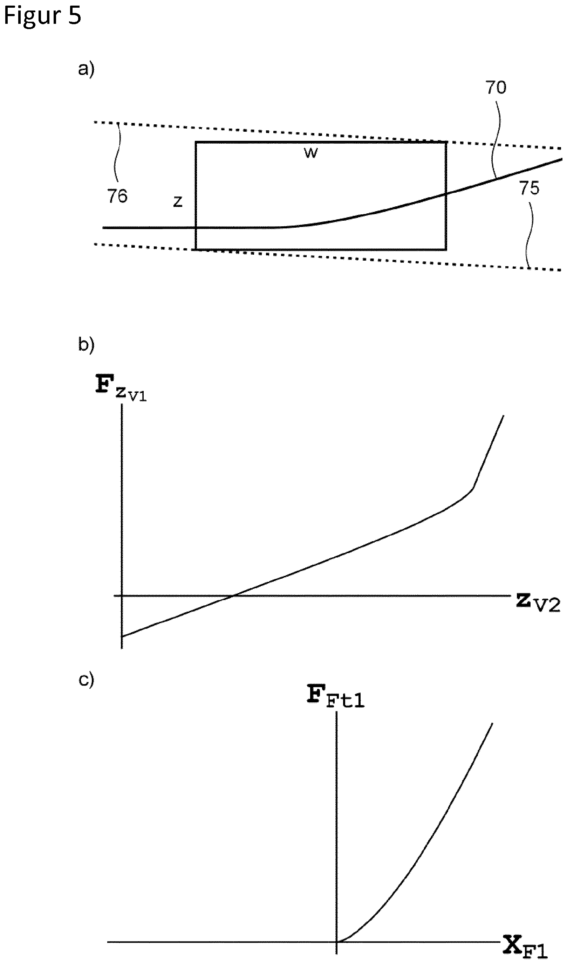

Figur 5: Figur 5a zeigt, in einem Schema wie in Figur 3, den Verlauf 70 der Punkte auf dem Werkstück, welche in dem Beispiel aus Figur 4 auf die durch $X_{F1} = 0$ definierte Gerade auf der Schnecke abgebildet werden. Die Geraden 75 bzw. 76 definieren die Richtung, entlang der die Verläufe für verschiedene $X_{F1}$ gegeneinander verschoben werden.

Figur 5b zeigt die im Beispiel in Figur 4 verwendete Funktion $F_{Z_{V1}}(z_{V2})$, welche die Abhängigkeit von $z_{V1}$ von $z_{V2}$ beschreibt.

Figur 5c zeigt die im Beispiel in Figur 4 verwendete Funktion $F_{Ft1}(X_{F1})$, welche die Modifikation auf der Schnecke gemäß Gleichung (1) definiert.

Figur 6: Figur 6 zeigt ein $w$-$z$-Diagramm einer natürlichen verschränkten Flankenlinienballigkeit. Linie 10 markiert einen Kontaktpfad. Dieser entspricht hier einer Linie mit konstantem Wert der Modifikation.

Figur 7: Figur 7 zeigt ein $w$-$z$-Diagramm einer reinen Flankenlinienballigkeit. Linie 11 markiert einen Kontaktpfad. Line 12 markiert eine Gerade mit konstantem Wert der Modifikation.

Figur 8: Figur 8 zeigt ein $w$-$z$-Diagramm einer in einer gezielten Richtung verlaufenden Balligkeit. Linie 13 markiert einen Kontaktpfad. Line 14 markiert eine Gerade mit konstantem Wert der Modifikation.

Figur 9: Figur 9 zeigt eine lineare Endrücknahme 16 ohne Übergangsbereich, wie diese durch korrigierte Schleifkinematik nach dem Stand der Technik gefertigt wird. Line 15 markiert einen Kontaktpfad, welcher gleichzeitig einer Geraden mit konstantem Wert der Modifikation entspricht.

Figur 10: Figur 10 zeigt eine lineare Endrücknahme 19 ohne Übergangsbereich, wie diese mit dem hier beschriebenen Verfahren gefertigt werden kann. Line 17 markiert einen Kontaktpfad. Line 18 markiert eine Gerade mit konstantem Wert der Modifikation.

Figur 11: Figur 11 zeigt eine lineare dreieckförmige Endrücknahme 22 ohne Übergangsbereich, wie diese mit dem hier beschriebenen Verfahren gefertigt werden kann. Line 20 markiert einen Kontaktpfad. Line 21 markiert eine Gerade mit konstantem Wert der Modifikation.

Figur 12: Figur 12 zeigt eine Darstellung zweier Verzahnungen in einem Schraubwälzgetriebe inklusive der gemeinsamen Zahnstange und den Eingriffsebenen beider Verzahnungen. Zur besseren Darstellung entspricht die relative Lage der beiden Verzahnungen nicht der im Schraubwälzgetriebe. Diese Figur zeigt auch die relative Lage einer zylindrischen Verzahnung zur generierenden Zahnstange. (Aus Niemann, G; Winter, H: Maschinenelemente Band 3 2. Auflage, Springer Verlag, Berlin, 1983)

Figur 13: Figur 13 zeigt eine Darstellung einer konischen Verzahnung mit einer sie generierenden Zahnstange. Die Zahnstange ist um den Schrägungswinkel $\beta_k = \beta_w$ geschwenkt und um den Konuswinkel $\theta = \vartheta$ gekippt. (Aus Zierau, S: Die geometrische Auslegung konischer Zahnräder und Paarungen mit parallelen Achsen, Bericht Nr. 32, Institut für Konstruktionslehre, Technische Universität Braunschweig)

Figur 14: Figur 14 zeigt den Eingriff einer rechten Flanke mit einer generierenden asymmetrischen Zahnstange im Stirnschnitt. Der Profilwinkel im Stirnschnitt $\alpha_{twr}$ definiert die Neigung der Eingriffsebenen $P_r$. Die Verzahnung ist um den Drehwinkel $\varphi$ gedreht.

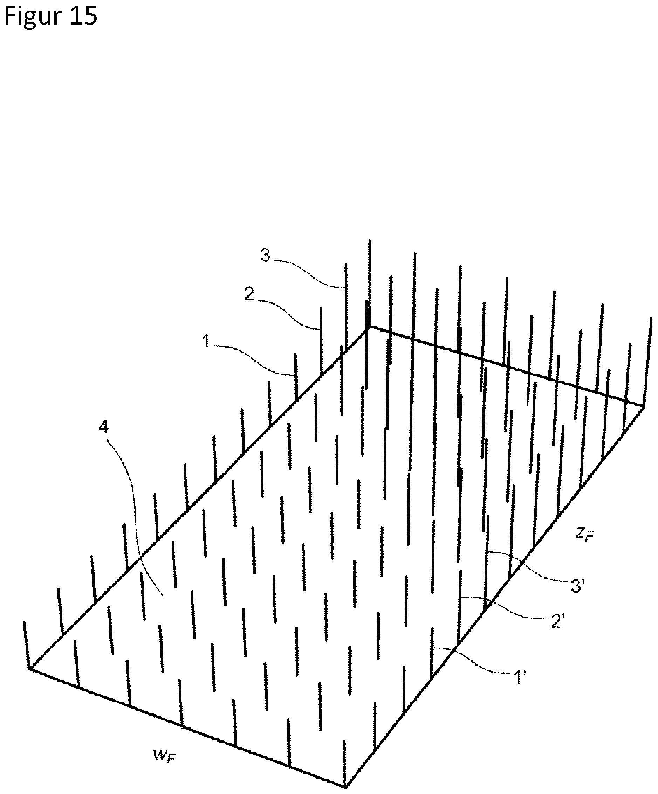

Figur 15: Figur 15 zeigt schematisch einen Abschnitt der Flanke eines Werkstückzahns mit Vektoren in Normalenrichtung für ein nicht über die ganze Breite geschliffenes Werkstück. Die Anzahl der Vektoren wurde im Vergleich zu einer Simulationsrechnung hier deutlich reduziert. Die hier schematisch gezeigte Ebene 4 entspricht der im Allgemeinen gekrümmten Flanke des nicht modifizierten Werkstücks, auf die die Vektoren gestellt werden. Die Vektoren 1 und 1' wurden bereits vom Kontaktpfad überstrichen und sind somit vollständig gekürzt. Die Vektoren 2 und 2' wurden bereits mindestens einmal gekürzt, jedoch noch nicht vom Kontaktpfad überstrichen. Die Vektoren 3 und 3' wurden noch nicht gekürzt und haben somit noch die Länge dem gewählten Aufmaß entsprechend.

Figur 16: Figur 16 zeigt schematisch eine Verzahnmaschine mit den hier als Beispiele aufgeführten Bewegungsapparaten.

**Detaillierte Darstellung der Erfindung**

Die Erfindung beschreibt ein Verfahren zur Erzeugung einer bestimmten Klasse an topologischen Oberflächenmodifikationen auf Zahnflanken sowohl zylindrischer als auch konischer (Beveloids) Evolventenverzahnungen. Die Verzahnungen können sowohl symmetrisch als auch asymmetrisch sein, d.h. die Profilwinkel der linken und rechten Flanken können, müssen aber nicht unterschiedlich sein. Das Verfahren kann unter anderem bei folgenden Fertigungsverfahren angewandt werden:

- Wälzfräsen

- Schälwälzfräsen

- Schaben

- Wälzschleifen

- Honen

Wird das Verfahren beim Wälzschleifen angewandt, können sowohl abrichtbare als auch nicht abrichtbare Werkzeuge eingesetzt werden. Das Abrichten kann mit einer Profilrolle einoder zweiflankig erfolgen, aber ebenso einoder zweiflankig im Zeilenabrichten.

Der Bearbeitungsprozess erfolgt mit einem über die Werkzeuglänge modifizierten Werkzeug, welches während des Prozesses in axialer Richtung verschoben wird (Diagonalwälzverfahren).

Größen, die für linke und rechte Flanken unterschiedlich sind bzw. sein können, werden mit dem Index $F$ versehen. $F$ kann $l$ (links) oder $r$ (rechts) sein. Gleichungen, in den der Index $F$ vorkommt, gelten immer für linke und rechte Flanken. Die hier betrachteten Evolventenverzahnungen werden abhängig von den Grundkreisradien ($r_{bn}, r_{bl}$) und den Grundschrägungswinkeln ($\beta_{br}, \beta_{bl}$) in folgende vier Typen unterteilt.

1. Zylindrisch symmetrisch: $r_b := r_{br} = r_{bl}$ und $\beta_b := \beta_{br} = \beta_{bl}$

2. Zylindrisch asymmetrisch: $r_{br} \neq r_{bl}$ und $\dfrac{\tan \beta_{br}}{r_{br}} = \dfrac{\tan \beta_{bl}}{r_{bl}}$

3. Konisch symmetrisch: $\beta_{br} \neq \beta_{bl}$ und $r_{br} \cos \beta_{br} = r_{bl} \cos \beta_{bl}$

4. Konisch asymmetrisch: $\beta_{br} \neq \beta_{bl}$ und $r_{br} \cos \beta_{br} \neq r_{bl} \cos \beta_{bl}$ und $\dfrac{\tan \beta_{br}}{r_{br}} \neq \dfrac{\tan \beta_{bl}}{r_{bl}}$

Im Folgenden wird die Klasse der topologischen Oberflächenmodifikationen definiert, welche mit dem hier zunächst beschriebenen Verfahren erzeugt werden können. Zunächst wird dazu die übliche Beschreibung topologischer Oberflächenmodifikationen betrachtet. Diese werden beschrieben über eine Funktion $f_{Ft}(w_F, z_F)$, wobei $w_F$ der Wälzweg und $z_F$ die Position in Breitenlinienrichtung ist. Eine topologische Oberflächenmodifikation gehört zur hier betrachten Klasse an Oberflächenmodifikationen, wenn eine Funktion $F_{Ft}$ existiert, mit

$$f_{Ft}(w_F, z_F) = F_{Ft}(w_F \tan \rho_F + z_F) . \qquad (1)$$

Anschaulich gesprochen bedeutet dies, dass die Oberflächenmodifikation für alle $w_F$ und $z_F$ auf der Zahnflanke mit

$$w_F \tan \rho_F + z_F = X_F , \qquad (2)$$

wobei $X_F$ eine beliebige reelle Zahl ist, denselben Wert hat. Jedes $X_F$ definiert so eindeutig eine Gerade auf der Flanke in den Koordinaten $w_F$ und $z_F$. Für den Spezialfall $\rho_F = 0$, ist die Oberflächenmodifikation eine reine Flankenlinienmodifikation, d.h. die Oberflächenmodifikation ist in jedem gegebenen Stirnschnitt über das gesamte Profil konstant. Die folgende Aufzählung nennt bekannte Beispiele der hier betrachteten Oberflächenmodifikationen, von denen einige in FVA Nr. 609 detailliert beschrieben sind:

- Flankenlinienendrücknahme

- Flankenlinienballigkeit
- Dreieckförmige Endrücknahme (Kopf, Fuß oder beidseitig)
- Freie Flankenlinienform

Bisher ist kein Verfahren bekannt, mit dem mit einem der hier betrachteten Fertigungsverfahren die hier betrachteten Oberflächenmodifikation abweichnungsfrei hergestellt werden können, mit Ausnahme reiner Flankenlinienmodifikation bei geradverzahnten zylindrischen Rädern. Mit abweichnungsfrei herstellbaren Oberflächenmodifikationen sind hier Oberflächenmodifikationen gemeint, die sich, abgesehen von Vorschubmarkierungen und ggf. Hüllschnitten theoretisch ohne Abweichung von der Sollmodifikation herstellen lassen.

Eine bisher gebräuchliche Methode, reine Flankenlinienmodifikation zu erzeugen, besteht darin, den Achsabstand zwischen Werkzeug und Werkstück, während das Werkstück axial verschoben wird, zu verändern. Diese Methode liefert jedoch nur bei geradverzahnten zylindrischen Rädern die gewünschte Flankenlinienmodifikation, da nur bei diesen der Verlauf des Kontaktpunkts, im Folgenden auch als Kontaktpfad bezeichnet, zwischen Werkzeug und Werkstück auf beiden Flanken in einer Stirnschnittebenen verläuft und sich so, die durch die Achsabstandsänderung verursachte Oberflächenmodifikation in nur einer Stirnschnittebene auswirkt. Bei allen andern Verzahnungen entsteht auf mindestens einer Flanke eine Verzerrung der Modifikation, auf welche im weiteren Verlauf der Beschreibung dieser Erfindung noch detailliert eingegangen wird.

Für den Spezialfall der Flankenlinienballigkeit, ist diese als Verschränkung bekannte ungewollte Verzerrung schon lange bekannt und es existieren Methoden, diese in gewissem Maße zu kompensieren.

In DE 3704607 (Sulzer) wird für das Wälzschleifen vorgeschlagen, das Diagonalwälzschleifen in Verbindung mit einer Schnecke anzuwenden, welche einen über die Schneckenbreite veränderten Eingriffswinkel aufweist, wobei die Änderung des Eingriffswinkels so gewählt wird, dass die Verschränkung kompensiert wird.

In EP1995010 (Faulstich) wird ebenfalls für das Wälzschleifen vorgeschlagen, das Diagonalwälzschleifen mit einem in weiten Grenzen frei wählbaren Diagonalverhältnis in Verbindung mit einer darauf abgestimmten (hohl-)balligen Schnecke anzuwenden.

Bei diesen beiden Methoden werden nur die Profilwinkelfehler $f_{H\alpha}$ in einer oberen und einer unteren Stirnschnittebene betrachtet und aus diesen die Verschränkung ermittelt bzw. auf diese Weise die Verschänkung so eingestellt, dass sie der Sollvorgabe entspricht. Diese, auf nur zwei Stirnschnittebenen beschränkte Betrachtung, führt jedoch zu Formabweichungen auf der Flanke, welche bei einer typischen Verschränkungsmessung nicht erfasst werden, jedoch bei topologischen Messungen sichtbar werden. Die Methode nach Sulzer hat zudem den Nachteil, dass sie Profilballigkeiten verursacht. Diese können zwar durch einen entsprechenden Vorhalt im Abrichter kompensiert werden, dieser Vorhalt ist dann jedoch nur für eine bestimmte Flankenlinienballigkeit passend. Darüber hinaus berücksichtigen beide Methoden weder das Bearbeiten asymmetrischer und/oder konischer Verzahnungen, noch das Erzeugen asymmetrischer Balligkeiten beim zweiflankigen Bearbeiten.

Im Folgenden wird näher auf die der Erfindung zu Grunde liegende Idee eingegangen. Diese wird am Beispiel des Wälzschleifens beschrieben, sie ist jedoch auf Grund der Ähnlichkeit der hier betrachteten Fertigungsverfahren für all diese gleichermaßen anwendbar. Für das Wälzschleifen evolventischer Verzahnungen wird eine Schnecke verwendet, welche ebenfalls eine Evolventenverzahnung, in der Regel mit großem Schrägungswinkel ist. Während des Bearbeitungsprozesses gibt es theoretischen Punktkontakt zwischen der Schnecke und der Endgeometrie der zu fertigenden Verzahnung. Die Oberflächen der Zahnflanken, sowohl des Werkstücks als auch des Werkzeugs, werden typischerweise über den Wälzweg ($w_F$) und die Position in Breitenlinienrichtung ($z_F$) parametrisiert.

$$E_F(w_F, z_F)$$

$$= \begin{pmatrix} r_{bF} \cdot \sin\left(s_F \cdot \left(\frac{w}{r_{bF}} + \eta_{bF}\right) - \frac{z \cdot \tan(\beta_{bF})}{r_{bF}}\right) - s_F \cdot w \cdot \cos\left(s_F \cdot \left(\frac{w}{r_{bF}} + \eta_{bF}\right) - \frac{z \cdot \tan(\beta_{bF})}{r_{bF}}\right) \\ r_{bF} \cdot \cos\left(s_F \cdot \left(\frac{w}{r_{bF}} + \eta_{bF}\right) - \frac{z \cdot \tan(\beta_{bF})}{r_{bF}}\right) + s_F \cdot w \cdot \sin\left(s_F \cdot \left(\frac{w}{r_{bF}} + \eta_{bF}\right) - \frac{z \cdot \tan(\beta_{bF})}{r_{bF}}\right) \\ z \end{pmatrix}$$

$$(3)$$

$\eta_{bF}$: siehe auch Anmeldung DE 10 2012 015 846 A1

$s_F$ dient dazu, Gleichungen für linke und rechte Flanken in einer kompakten Form zu schreiben und ist definiert durch:

$$s_F := \begin{cases} +1, \text{ für linke Flanken} \\ -1, \text{für rechte Flanken} \end{cases}$$

Diese Parametrisierung erlaubt es einfache Beziehungen für den Verlauf des Kontaktpunkts auf Werkzeug und Werkstück zu berechnen. Dieser Verlauf wird sowohl auf dem Werkstück als auch auf dem Werkzeug durch den Axialvorschub des Werkstücks und der Shiftbewegung des Werkzeugs kontinuierlich verschoben. Die Kenntnis über diese Verläufe ermöglicht es, einem Punkt auf dem Werkzeug eindeutig einen Punkt auf dem Werkstück zuzuordnen und umgekehrt. Mit dieser Zuordnung lassen sich das Verhältnis zwischen Axialvorschub des Werkstücks und Shiftbewegung des Werkzeugs, im Folgenden Diagonalverhältnis genannt, und die Oberflächenmodifikation auf dem Werkzeug so abstimmen, dass auf dem Werkstück die gewünschte Modifikation erzeugt wird.

Um die Zusammenhänge mathematisch zu formulieren werden folgende Definitionen gemacht:
Für Transformationen werden folgende Bezeichnungen verwendet:

- $R_x(\varphi)$ Rotation um den Winkel $\varphi$ um die *x*-Achse. Analog für *y* und *z*
- $T_x(v)$ Translation um die Strecke *v* in *x*-Richtung. Analog für *y* und *z*
- $H(A_1, ..., A_N)$ allgemeine Transformation beschreibbar durch eine homogene Matrix mit insgesamt *N* Koordinaten $A_1$ bis $A_N$.

Der Begriff "Koordinaten" wird hier für generalisierte, nicht notwendigerweise unabhängige Koordinaten verwendet.

Die Rotationsachse einer Verzahnung fällt in ihrem Ruhesystem immer mit der z-Achse zusammen. Die Verzahnungsmitte liegt bei *z* = 0.

Weiterhin wichtig für die Formulierung der Zusammenhänge ist es, die kinematischen Ketten, welche die Relativstellungen zwischen Werkstück und Werkzeug beschreiben, zu definieren. Diese hängt davon ab, ob Werkzeug bzw. Werkstück zylindrisch oder konisch ausgeführt sind. Betrachtet werden hier alle vier möglichen Kombinationen. Im Folgenden werden Größen, welche sich auf das Werkzeug beziehen mit Index 1 versehen und solche, die sich auf das Werkstück beziehen mit Index 2.

**Kinematische Kette für zylindrisches Werkzeug und Werkstück**

Die relative Lage zwischen Werkzeug und Werkstück wird durch die folgende kinematische Kette $K_R$ beschrieben:

$$K_R = R_z(-\varphi_1) \cdot T_z(-z_{V1}) \cdot T_y(d) \cdot R_y(\gamma) \cdot T_z(z_{V2}) \cdot R_z(\varphi_2) \tag{4}$$

- $\varphi_1$: Drehwinkel Werkzeug.
- $\varphi_2$: Drehwinkel Werkstück.
- $z_{V1}$: Axialvorschub des Werkzeugs (auch Shiftposition genannt).
- $z_{V2}$: Axialvorschub des Werkstücks.
- *d:* Achsabstand (Werkzeug/Werkstück)
- *y:* Achskreuzwinkel (Werkzeug/Werkstück)

**Kinematische Kette für konisches Werkzeug und zylindrisches Werkstück**

Die relative Lage zwischen Werkzeug und Werkstück wird durch die folgende kinematische Kette $K_R$ beschrieben:

$$K_R = R_z(-\varphi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_z(\varphi_2) \tag{5}$$

- $\varphi_1$: Drehwinkel Werkzeug.
- $\varphi_2$: Drehwinkel Werkstück.
- $z_{V1}$: Vorschub des Werkzeug (auch Shiftposition genannt).
- $z_{V2}$: Axialvorschub des Werkstücks.
- *d:* Maß für Achsabstand (Werkzeug/Werkstück)
- *y:* Achskreuzwinkel (Werkzeug/Werkstück)

- $\vartheta_1$: Konuswinkel Werkzeug
- $r_{w1}$: Wälzkreisradius des Werkzeugs

**Kinematische Kette für zylindrisches Werkzeug und konisches Werkstück**

Die relative Lage zwischen Werkzeug und Werkstück wird durch die folgende kinematische Kette $K_R$ beschrieben:

$$K_R = R_z(-\varphi_1) \cdot T_z(-z_{V1}) \cdot T_y(d) \cdot R_y(\gamma) \cdot T_z(z_{V2}) \cdot R_x(-\vartheta_2) \cdot T_y(-r_{w2}) \cdot R_z(\varphi_2) \qquad (6)$$

- $\varphi_1$: Drehwinkel Werkzeug.
- $\varphi_2$: Drehwinkel Werkstück.
- $z_{V1}$: Axialvorschub des Werkzeugs (auch Shiftposition genannt).
- $z_{V2}$: Vorschub des Werkstücks.
- d: Maß für Achsabstand (Werkzeug/Werkstück)
- y: Achskreuzwinkel (Werkzeug/Werkstück)
- $\vartheta_2$: Konuswinkel Werkstück
- $r_{w2}$: Wälzkreisradius des Werkstücks

**Kinematische Kette für konisches Werkzeug und konisches Werkstück**

Die relative Lage zwischen Werkzeug und Werkstück wird durch die folgende kinematische Kette $K_R$ beschrieben:

$$\begin{aligned} K_R = R_z(-\varphi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_x(-\vartheta_2) \cdot \\ T_y(-r_{w2}) \cdot R_z(\varphi_2) \end{aligned} \qquad (7)$$

- $\varphi_1$: Drehwinkel Werkzeug.
- $\varphi_2$: Drehwinkel Werkstück.
- $z_{V1}$: Vorschub des Werkzeugs (auch Shiftposition genannt).
- $z_{V2}$: Vorschub des Werkstücks.
- d: Maß für Achsabstand (Werkzeug/Werkstück)
- y: Achskreuzwinkel (Werkzeug/Werkstück)
- $\vartheta_1$: Konuswinkel Werkzeug
- $\vartheta_2$: Konuswinkel Werkstück
- $r_{w1}$: Wälzkreisradius des Werkzeugs
- $r_{w2}$: Wälzkreisradius des Werkstücks

Diese kinematischen Ketten dienen zunächst erst einmal nur der mathematischen Beschreibung der hier beschriebenen Erfindung. Sie müssen nicht mit den physikalischen Achsen der Maschine, auf der die Erfindung angewendet wird, übereinstimmen. Verfügt die Maschine über einen Bewegungsapparat, der Relativstellungen zwischen Werkzeug und Werkstück gemäß einer Transformation

$$H(A_1, \dots, A_{N_s}) \text{ mit } N_s \geq 1 \qquad (8)$$

ermöglicht, so kann die Erfindung auf dieser Maschine angewendet werden, wenn zu jedem Satz an Koordinaten aus den gerade beschriebenen kinematischen Ketten, welcher in dieser Erfindung berechnet wird, Koordinaten $A_1, \dots, A_{N_S}$ existieren, mit

$$H(A_1, \dots, A_{N_s}) = K_R \qquad (9)$$

Die Berechnung der Koordinaten $A_1, \dots, A_{N_s}$ kann mittels einer Koordinatentransformation durchgeführt werden.
Typische Bewegungsapparate, die alle geforderten Relativstellungen ermöglichen sind beispielsweise durch folgende kinematischen Ketten beschrieben:

$$H_{Bsp1} = R_z(\phi_{B1}) \cdot T_z(-v_{V1}) \cdot R_x(90° - \phi_{A1}) \cdot T_z(-v_{Z1}) \cdot T_x(-v_{X1}) \cdot R_z(\phi_{C2}) \qquad (10)$$

$$H_{Bsp2} = R_z(\phi_{B1}) \cdot R_x(90° - \phi_{A1}) \cdot T_z(-v_{V1}) \cdot T_z(-v_{Z1}) \cdot T_x(-v_{X1}) \cdot R_z(\phi_{C2}) \qquad (11)$$

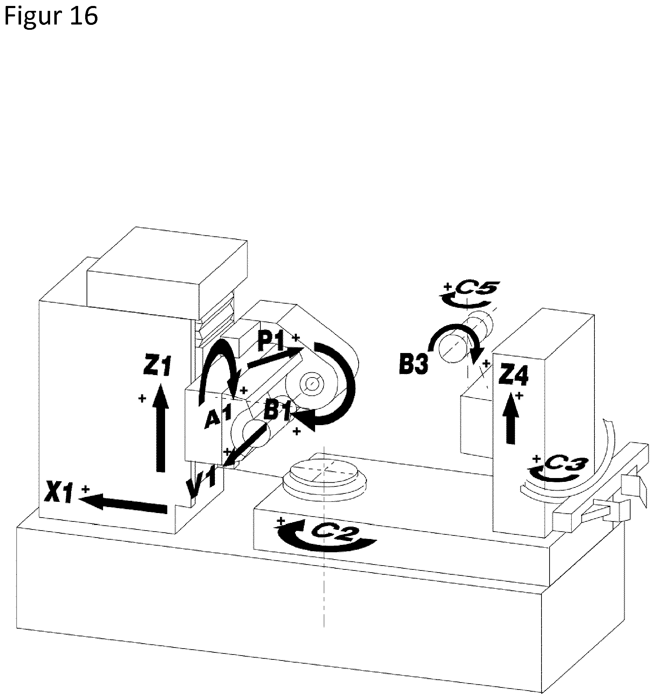

Figur 16 zeigt schematisch eine Verzahnmaschine mit einem durch $H_{Bsp1}$ beschriebenen Bewegungsapparat.

Während des Bearbeitungsprozesses wird die $z_{V2}$-Koordinate verfahren und so der Vorschub des Werkstücks realisiert. Bei zylindrischen Rädern ist dies der Axialvorschub, bei konischen Rädern ist dieser Vorschub nicht axial, sondern um den Konuswinkel $\vartheta_2$ gegenüber der Achse der Verzahnung verkippt.

Wird im Diagonalwälzverfahren bearbeitet, wird zusätzlich die $z_{V1}$-Koordinate verfahren, welche den Vorschub des Werkzeugs realisiert. Bei zylindrischen Werkzeugen ist dies der Axiavorschub, bei konischen Rädern ist dieser Vorschub nicht axial, sondern um den Konuswinkel $\vartheta_1$ gegenüber der Achse des Werkzeugs verkippt.

Im weiteren Verlauf wird jedoch auch für zylindrische Werkzeuge bzw. Werkstücke für $z_{V1}$ bzw. $z_{V2}$ der Begriff Vorschub verwendet.

Wird mit einem konstanten Diagonalverhältnis geschliffen, so ist $z_{V1}$ eine Funktion von $z_{V2}$ und es gilt folgender Zusammenhang:

$$z_{V1}(z_{V2}) = K_{ZV1} \cdot z_{V2} + z_{V01} \qquad (12)$$

$K_{ZV1}$ ist hierbei das Diagonalverhältnis und $z_{V01}$ ein fixer Offset, der es ermöglicht, die hier beschriebenen Modifikationen auf unterschiedlichen Stellen auf dem Werkzeug zu platzieren bzw. den Bereich auf der Schnecke auszuwählen, der genutzt werden soll. Ist $K_{ZV1} \neq 0$ wird vom Diagonalwälzverfahren gesprochen.

Wie sich die Drehzahl des Werkstücks und/oder des Werkzeugs und/oder der Vorschub des Werkzeugs und/oder des Werkstücks während der Bearbeitung zeitlich und/oder relativ zu einander verhalten, spielt bei diesem Verfahren keine Rolle, da allein die Kopplung zwischen $z_{V1}$ und $z_{V2}$ betrachtet wird. Die Drehzahlen und Vorschübe können während der Bearbeitung verändert werden, solange die geforderten Kopplungen eingehalten werden.

Die vier möglichen Kombinationen aus zylindrischen bzw. konischen Werkzeugen und Werkstücken werden separat betrachtet. Ausgangspunkt ist jeweils die mathematische Beschreibung des Verlaufs des Kontaktpunkts auf Werkzeug und Werkstück beim Wälzschleifen als Relation zwischen dem Wälzweg ($w$) und der Position in Breitenlinienrichtung ($z$) in Abhängigkeit der Vorschubpositionen $z_{V1}$ und $z_{V2}$.

Vorbereitend hierfür werden zunächst die hierfür benötigten Modifikationen auf den Schnecken sowie deren Erzeugung mittels Abrichten diskutiert.

Die Werkzeuge, zylindrische und konische Schnecken, symmetrisch oder asymmetrisch, welche hier betrachtet werden, haben ebenfalls eine Modifikation gemäß Gleichung (1). Diese Art der Modifikation ist insbesondere bei abrichtbaren Schleifschnecken sehr vorteilhaft, da sich diese leicht beim Abrichten mit einer Abrichtscheibe auf der Schnecke erzeugen lässt. Beim Abrichten mit einer Abrichtscheibe besteht ein Linienkontakt zwischen Abrichtscheibe und den Flanken der Schnecke. Beschreibt man diese Berührlinie als Relation zwischen $w_{F1}$ und $z_{F1}$ für beide Flanken, so erhält man in sehr guter Näherung eine Gerade, gegeben durch:

$$w_{F1} \tan \rho_{F1} + z_{F1} = X_{F1} \ . \qquad (13)$$

$\rho_{F1}$ definiert die Richtung dieser Geraden. Diese kann durch die Gangzahl, den Durchmesser der Schnecke, den Durchmesser der Abrichtscheibe, den Profilwinkel der Schnecke und die Relativstellung der Schnecke zum Abrichter geringfügig beeinflusst werden.

$X_{F1}$ definiert die Lage der Geraden auf der Schnecke. Während die Schnecke entlang ihrer Länge abgerichtet wird, verändert sich $X_{F1}$ entsprechend. Werden während des Abrichtvorgangs Korrekturen der Relativstellung zwischen Schnecke und Abrichtscheibe vorgenommen, so lassen sich Modifikationen auf der Schnecke aufbringen. Diese Korrekturen wirken sich immer entlang der aktuellen Berührlinie aus.

Die relative Lage zwischen Schnecke und Abrichter wird durch die folgende kinematische Kette $K_{BR}$ beschrieben:

$$K_{BR} = R_z(-\varphi_S) \cdot T_z(-z_S) \cdot R_x(-\gamma_B) \cdot T_x(-d) \cdot T_y(y_A) \cdot R_z(\varphi_A) \qquad (14)$$

- $\varphi_S$: Drehwinkel Schnecke
- $\varphi_A$: Drehwinkel Abrichter
- $y_A$: $y$-Position des Abrichters
- $z_S$: Axiale Position der Schnecke
- $d$: Achsabstand
- $\gamma_B$: Achskreuzwinkel

Diese kinematische Kette dient zunächst erst einmal nur der mathematischen Beschreibung der hier beschriebenen Erfindung. Sie muss nicht mit den physikalischen Achsen der Maschine, auf der die Erfindung angewendet wird, übereinstimmen. Verfügt die Maschine über einen Bewegungsapparat, der Relativstellungen zwischen Schnecke und Abrichter gemäß einer Transformation

$$H(B_1, \ldots, B_{N_A}) \text{ mit } N_A \geq 1 \tag{15}$$

ermöglicht, so kann die Erfindung auf dieser Maschine angewendet werden, wenn zu jedem Satz an Koordinaten aus der gerade beschriebenen kinematischen Kette, welcher in dieser Erfindung berechnet wird, Koordinaten $B_1, \ldots, B_{N_A}$ existieren, mit

$$H\left(B_1, \ldots, B_{N_A}\right) = K_{BR} \tag{16}$$

Die Berechnung der Koordinaten $B_1, \ldots, B_{N_A}$ kann mittels einer Koordinatentransformation durchgeführt werden.

Typische Bewegungsapparate, die alle geforderten Relativstellungen ermöglichen sind beispielsweise durch folgende kinematischen Ketten beschrieben:

$$H_{BBsp1} = R_z(-\varphi_{B1}) \cdot T_z(-v_{V1}) \cdot R_x(-\varphi_{A1}) \cdot T_x(-v_{X1}) \cdot T_y(v_{Z1}) \cdot R_y(\varphi_{C5}) \cdot R_z(\varphi_{B3}) \tag{17}$$

$$H_{BBsp2} = R_z(-\varphi_{B1}) \cdot T_z(-v_{V1}) \cdot R_x(-\varphi_{A1}) \cdot T_x(-v_{X1}) \cdot T_y(v_{Z1}) \cdot R_z(\varphi_{B3}) \tag{18}$$

Figur 16 zeigt schematisch eine Verzahnmaschine mit einem durch $H_{BBsp1}$ bzw. $H_{BBsp2}$ beschriebenen Bewegungsapparat.

- Achsabstand und/oder
- Axiale Position der Schnecke und/oder
- $\gamma$-Position des Abrichters und/oder
- Drehwinkel der Schnecke und/oder
- Achskreuzwinkel zwischen der Schnecken- und der Abrichterachse

können so korrigiert werden, dass eine konstante Modifikation entlang der aktuellen Berührlinie erzeugt wird.

Wird eine Schnecke nicht modifiziert abgerichtet, so werden nur die axiale Position der Schnecke und über die Steigungshöhe der Schnecke gekoppelt der Drehwinkel der Schnecke während des Abrichtvorgangs verändert. Dadurch wandert die Berührlinie gemäß einer Schraubenline entlang der Schneckenlänge und überstreicht einen gewissen Bereich der Flanke und richtet diesen ab. $X_{F1}$ ist somit eine Funktion der axialen Position der Schnecke:

$$X_{F1} = X_{F1}(z_S) \tag{19}$$

Dieser Zusammenhang gilt sowohl für das einflankige als auch für das zweiflankige Abrichten.

Wird zweiflankig abgerichtet, so können die Korrekturen der Relativstellung so gewählt werden, dass auf beiden Flanken der Schnecke unabhängig von einander in gewissen Grenzen beliebige konstante Modifikationen $f_{tl1}$ und $f_{tr1}$ entlang der aktuellen Berührlinien links und rechts aufgebracht werden. Diese, in gewissen Grenzen freie Wahl der Modifikationen auf linker und rechter Flanke rührt daher, dass die oben beschriebenen Korrekturen der Relativstellung sich nicht alle gleichsam auf linke und rechte Flanke auswirken. Beispielsweise führt eine Änderung des Achsabstands zu einer Modifikation auf linker und rechter Flanke mit gleichem Vorzeichen, im Fall einer symmetrischen zylindrischen Schnecke auch mit gleichem Betrag. Eine Änderung des Drehwinkels der Schnecke hingegen führt zu einer Modifikation

14

auf linker und rechter Flanke mit unterschiedlichen Vorzeichen, im Fall einer symmetrischen zylindrischen Schnecke mit gleichem Betrag. Somit können beispielsweise Achsabstand und Drehwinkel der Schnecke so eingestellt werden, dass die gewünschten Modifikationen $f_{tl1}$ und $f_{tr1}$ entlang der aktuellen Berührline erreicht werden. Allgemein lässt sich dies wie folgt beschreiben: Verfügt die Maschine über einen, während des Abrichtvorgangs nutzbaren Bewegungsapparats mit den Koordinaten $B_1,..., B_{N_A}$, welcher die Relativstellung zwischen Schnecke und Abrichtscheibe verändern kann, sodass solche Korrekturen der Relativstellung möglich sind, welche eine freie Wahl der Modifikationen auf linker und rechter Flanke ermöglichen, so sind Korrekturen $\Delta B_1 ..., \Delta B_{N_A}$ dieser Koordinaten im Vergleich zum Abrichten einer unmodifizierten Schnecke abhängig von $f_{tl1}$ und $f_{tr1}$:

$$\Delta B_i = \Delta B_i(f_{tl1}, f_{tr1}) \text{ mit } 1 \leq i \leq N_A \ . \tag{20}$$

Wird eine Schnecke unmodifiziert abgerichtet, so wird nur die axiale Position der Schnecke $z_S$, wie oben beschrieben verändert. Diese Position wird durch die Koordinaten $B_1, ..., B_{NA}$ eingestellt, welche, für den Fall, somit eine Funktion von $z_S$ sind:

$$B_i = B_i(z_S) \text{ mit } 1 \leq i \leq N_A \ . \tag{21}$$

Aus den letzten beiden Beziehungen folgt für die Koordinaten $B_1, ..., B_{NA}$ beim Abrichten einer Schnecke mit den hier beschriebenen Modifikationen:

$$B_i = B_i(z_S) + \Delta B_i(f_{tl1}, f_{tr1}) \text{ mit } 1 \leq i \leq N_A \ . \tag{22}$$

Die Korrekturen der Koordinaten $\Delta B_1, ... , \Delta B_{N_A}$ verursachen im Allgemeinen neben der Modifikation auf der Schnecke auch eine leichte Verschiebung der Lage der aktuellen Berührline gegenüber dem Abrichten einer unmodifizierten Schnecke. Gleichung (19) muss für das Abrichten modifizierter Schnecken somit um eine Abhängigkeit von $\Delta B_1, ... , \Delta B_{N_A}$ erweitert werden:

$$X_{F1} = X_{F1}(z_S, \Delta B_1, ..., \Delta B_{N_A}) \tag{23}$$

Für das hier beschriebene Verfahren, werden Schnecken benötig, die eine Modifikation wie in Gleichung (1) beschrieben haben, wobei die Richtung $\rho_F$ durch die Richtung der Berührline beim Abrichten $\rho_{F1}$ vorgegeben ist. Die Funktion $F_{Ft1}$ ist jedoch in gewissen Grenzen eine frei vorgebbare stetige Funktion. Die oben definierten Modifikationen $f_{tl1}$ und $f_{tr1}$ beschreiben eine konstante Modifikation entlang der durch $\rho_{F1}$ definierten Richtung bei einer bestimmten Lage der Berührline $X_{F1}$ und entsprechen somit genau den Funktionen $F_{tl1}(X_{l1})$ und $Ftr_1(X_{r1})$ für linke und rechte Flanke.
Sind die Modifikationen $F_{tl1}(X_{l1})$ und $F_{tr1}(X_{r1})$ bekannt, so lassen sich diese, zusammen mit Gleichung (20) in Gleichung (23) einsetzten:

$$X_{F1} = X_{F1}(z_S, \Delta B_1(F_{tl1}(X_{l1}), F_{tr1}(X_{r1})), ..., \Delta B_{N_A}(F_{tl1}(X_{l1}), F_{tr1}(X_{r1}))) \tag{24}$$

Mit diesem Gleichungssystem können zu gegebener axialer Position der Schnecke $z$ die Lagen der Berührline $X_{F1}$, im allgemeinen numerisch, berechnet werden. Mit Gleichung (20) lassen sich damit dann die benötigten Korrekturen der Koordinaten $\Delta B_1, ..., \Delta B_{N_A}$ bestimmen. Diese Berechnung wird für alle $z_S$ durchgeführt, die nötig sind, um mit den Berührlinen auf linker und rechter Flanke den abzurichtenden Teil der Schnecke zu überstreichen.
Das hier für das zweiflankige Abrichten vorgestellte Verfahren lässt sich direkt auf das einflankige Abrichten übertragen. In dem Fall entkoppeln die Gleichungen für linke und rechte Flanke vollständig und die Berechnung kann für jede Flanke separat durchgeführt werden.
Eine Modifikation $f_{nF1}$ an einem Punkt auf der Schnecke, definiert in Normalenrichtung auf der Schneckengangoberfläche führt zu einer Modifikation $f_{nF2} = - f_{nF1}$ auf dem Werkstück, definiert in Normalenrichtung auf der Zahnflankenoberfläche, an dem entsprechenden Punkt auf dem Werkstück. Modifikationen auf Zahnrädern werden typischerweise im Stirnschnitt ($f_{Ft}$) definiert, nicht in Normalenrichtung ($f_{Fn}$). Zwischen diesen beiden Definitionen der Modifikationen kann jedoch leicht umgerechnet werden:

$$f_{Fn} = f_{Ft} \cdot \cos \beta_{bF} \tag{25}$$

**Zylindrisches Werkzeug und zylindrisches Werkstück**

Im Folgenden wird für den Fall eines zylindrischen Werkzeugs und eines zylindrischen Werkstücks aufgezeigt, wie mit Hilfe einer Schnecke, welche eine Modifikation gemäß Gleichung (1) hat, im Diagonalwälzschleifen eine Modifikation gemäß derselben Gleichung, jedoch mit in gewissen Grenzen frei vorgebbarem Winkel $\rho_{F2}$ erzeugt werden kann. Dazu wird zunächst der Verlauf des Kontaktpunkts (Kontaktpfad) zwischen Werkstück und Schnecke, abhängig von den Axialvorschüben $z_{V1}$ und $z_{V2}$ beschrieben. Dieser Verlauf hängt von den Grundkreisradien und Grundschrägungswinkeln des Werkstücks und der Schnecke sowie vom Achsabstand $d$ und dem Achskreuzwinkel $\gamma$ ab. Die Relative Lage von Werkstück zu Schnecke wird bei dieser Betrachtung durch Gleichung (4) beschrieben. Mathematisch beschrieben werden kann dieser Verlauf als Relation (R6) zwischen Position in Breitenlinienrichtung ($z_F$) und Wälzweg ($w_F$) für Schnecke (Index 1) und Werkstück (Index 2) wie folgt:

$$z_{F1} = C_{Fw1} \cdot w_{F1} - z_{V1} + C_{Fc1} \tag{26}$$

$$z_{F2} = C_{Fw2} \cdot w_{F2} - z_{V2} + C_{Fc2} \tag{27}$$

Die hier eingeführten Koeffizienten $C_{Fw1}$, $C_{Fc1}$, $C_{Fw2}$ und $C_{Fc2}$ haben folgende Abhängigkeiten:

$$C_{Fw1} = C_{Fw1}(\beta_{bF1}) \tag{28}$$

$$C_{Fc1} = C_{Fc1}(\beta_{bF1}, \beta_{bF2}, r_{bF1}, d, \gamma) \tag{29}$$

$$C_{Fw2} = C_{Fw2}(\beta_{bF2}) \tag{30}$$

$$C_{Fc2} = C_{Fc2}(\beta_{bF1}, \beta_{bF2}, r_{bF2}, d, \gamma) \tag{31}$$

Diese Relation zeigt auf, dass es einen linearen Zusammenhang zwischen $z_F$, $w_F$ und $z_V$ sowohl für Schnecke aus auch für Werkstück gibt.

Betrachtet man im Herstellprozesses alle Punkte auf dem Werkstück mit einen festen Wälzweg $w_{F2}$, so berühren all diese Punkte auf der Schnecke nur Punkte mit einem daraus resultierenden Wälzweg $w_{F1}$. Die Relation (R7) zwischen den Wälzwegen sich berührender Punkte auf Schnecke und Werkstück ist gegeben durch:

$$\hat{C}_{Fw1} \cdot w_{F1} + \hat{C}_{Fw2} \cdot w_{F2} + \hat{C}_{Fc} = 0 \tag{32}$$

Die hier eingeführten Koeffizienten $\hat{C}_{Fw1}$, $\hat{C}_{Fw2}$ und $\hat{C}_{Fc}$ haben folgende Abhängigkeiten:

$$\hat{C}_{Fw1} = \hat{C}_{Fw1}(\beta_{bF1}) \tag{33}$$

$$\hat{C}_{Fw2} = \hat{C}_{Fw2}(\beta_{bF2}) \tag{34}$$

$$\hat{C}_{Fc} = \hat{C}_{Fc}(\beta_{bF1}, r_{bF1}, \beta_{bF2}, r_{bF2}, d, \gamma) \tag{35}$$

Die gerade vorgestellten Relationen folgen direkt aus einer analytischen Berechnung der Berührpunkte zweier Evolventenverzahnungen, welche gemäß der kinematischen Kette aus Gleichung (4) zueinander orientiert sind.

Die Grundidee der Erfindung liegt nun darin, die obigen Beziehungen, zusammen mit dem konstanten Diagonalverhältnis aus Gleichung (12) zu nutzen, um jedem Punkt auf dem Werkstück einen Punkt auf der Schnecke zuzuordnen. Dabei wird ausgenutzt, dass die Schnecke eine in gewissen Grenzen beliebige Modifikation gemäß Gleichung (1) aufweisen kann und auf dem Werkstück eine Modifikation gemäß derselben Gleichung mit gegebener Funktion $F_{F1}$ und gegebenem Winkel $\rho_{F1}$ erzeugt werden soll. Ziel ist es, die Punkte auf der Schnecke die auf einer durch $X_{F1}$ und $\rho_{F1}$ gegebenen Gerade liegen, auf eine durch $X_{F2}$ und $\rho_{F2}$ gegebene Gerade auf dem Werkstück abzubilden. Dazu werden die Gleichungen (26) und (27) nach $z_{V1}$ bzw. $z_{V2}$ aufgelöst und in Gleichung (12) eingesetzt, anschließend Gleichung (2) für Schnecke und Werkstück genutzt um $z_{F1}$ und $z_{F2}$ zu eliminieren und mit Gleichung (32) $w_{F1}$ ersetzt. Dies führt zu einer Relation der Form:

$$\bar{C}_{Fc} + \bar{C}_{Fw2} \cdot w_{F2} = 0 \; , \tag{36}$$

welche für alle $w_{F2}$ gelten muss. $\overline{C}_{Fw2}$ hat unter anderem ein Abhängigkeit von $K_{ZV1}$. $\overline{C}_{Fc}$ hingegen hat zusätzlich eine Abhängigkeit von $X_{F1}$ und $X_{F2}$. Mit Hilfe eines Koeffizientenvergleichs lassen sich so aus dieser Relation $K_{ZV1}$ sowohl für linke als auch für rechte Flanke berechnen, sowie $X_{F2}$ als Funktion von $X_{F1}$, ebenfalls für linke und rechte Flanke . $K_{ZV1}$, wie in Gleichung (12) definiert, bestimmt das Diagonalverhältnis, mit dem der Bearbeitungsprozess durchgeführt werden muss, damit die Abbildung der Punkte auf der Schnecke auf die Punkte auf dem Werkstück entlang der durch $\rho_{F2}$ definierten Richtung erfolgt.

Für $\rho_{l2} = \rho_{r2}$ führt diese Berechnung bei einer symmetrischen Verzahnung zu gleichen Diagonalverhältnissen $K_{ZV1}$ für linke und rechte Flanke. Somit ist ein zweiflankiges, abweichungsfreies Wälzschleifen möglich.

Ist jedoch $\rho_{l2} \neq \rho_{r2}$ und/oder die Verzahnung asymmetrisch, so führt die Berechnung im Allgemeinen zu unterschiedlichen Diagonalverhältnissen $K_{ZV1}$ für linke und rechte Flanke. Ein zweiflankiges, abweichungsfreies Wälzschleifen ist somit in dem Fall mit einem zylindrischen Werkzeug im Allgemeinen nicht mehr möglich.

Ein einflankiges abweichungsfreies Wälzschleifen ist jedoch möglich, wobei für die Bearbeitung der linken und rechten Flanken unterschiedliche Diagonalverhältnisse $K_{ZV1}$ einzustellen sind. Gibt es ein Diagonalverhältnis $K_{ZV1}$ sodass beim Wälzschleifen mit diesem die erzeugte Modifikation auf linker und rechter Flanke noch innerhalb der jeweiligen Toleranz liegt, so ist auch weiterhin ein zweiflankiges, jedoch nicht mehr abweichungsfreies Wälzschleifen möglich. Das hierfür zu wählende Diagonalverhältnis liegt in der Regel zwischen den für linke und rechte Flanke ermittelten Diagonalverhältnissen. Die Richtung $\rho_{F2}$ der auf dem Werkstück erzeugten Modifikation weicht auf mindestens einer der beiden Flanken von der Sollvorgabe ab. Ist diese Sollvorgabe jedoch toleriert, so ist es in bestimmten Fällen möglich, das Diagonalverhältnis so zu wählen, dass beide Richtung $\rho_{F2}$ innerhalb der Toleranz liegen.

Ein Verfahren, mit dem auch Modifikationen mit unterschiedlichen Richtungen $\rho_{F1}$ auf linker und rechter Flanke und/oder asymmetrische Verzahnungen zweiflankig und abweichungsfrei wälzgeschliffen werden können, wird im Folgenden vorgestellt. Dafür wird das zylindrische Werkzeug durch ein konisches ersetzt.

**Konisches Werkzeug und zylindrisches Werkstück**

Bisher ist Wälzschleifen nur mit zylindrischen Schnecken bekannt. Es ist jedoch auch möglich, konische Schnecken als Werkzeug einzusetzen. Die Kinematik dieses Prozesses kann durch ein Schraubwälzgetriebe mit einem konischen und einem zylindrischen Rad beschrieben werden. Diese Kinematik wird durch die in Gleichung (5) angegebene kinematische Kette beschrieben. Wie beim Schraubwälzgetriebe, bestehend aus zwei zylindrischen Rädern, gibt es auch hier zwischen beiden Rädern einen theoretischen Punktkontakt. Dies erlaubt es, denselben Ansatz wie für zylindrische Werkzeuge zu verwenden. d.h. es wird eine Schnecke mit einer Modifikation gemäß Gleichung (1) im Diagonalwälzverfahren verwendet, um auf dem Werkstück eine Modifikation ebenfalls gemäß Gleichung (1) zu erzeugen. Der Verlauf des Kontaktpunkts zwischen Werkstück und Schnecke kann wie folgt mathematisch beschrieben werden.

$$z_{F1} = C_{Fw1} \cdot w_{F1} + C_{Fz_{V1}1} \cdot z_{V1} + C_{Fc1} \tag{37}$$

$$z_{F2} = C_{Fw2} \cdot w_{F2} + C_{Fz_{V1}2} \cdot z_{V1} - z_{V2} + C_{Fc2} \tag{38}$$

Die hier eingeführten Koeffizienten $C_{Fw1}$, $C_{Fc1}$, $C_{Fw2}$, $C_{Fz_{V1}1}$, $C_{Fz_{V1}2}$ und $C_{Fc2}$ haben folgende Abhängigkeiten:

$$C_{Fw1} = C_{Fw1}(\beta_{bF1}) \tag{39}$$

$$C_{Fc1} = C_{Fc1}(\beta_{bF1}, \beta_{bF2}, r_{bF1}, d, \gamma, \vartheta_1) \tag{40}$$

$$C_{Fw2} = C_{Fw2}(\beta_{bF2}) \tag{41}$$

$$C_{Fc2} = C_{Fc2}(\beta_{bF1}, \beta_{bF2}, r_{bF2}, d, \gamma, \vartheta_1) \tag{42}$$

$$C_{Fz_{V1}1} = C_{Fz_{V1}1}(\beta_{bF1}, \beta_{bF2}, r_{bF1}, d, \gamma, \vartheta_1) \tag{43}$$

$$C_{Fz_{V1}2} = C_{Fz_{V1}2}(\beta_{bF1}, \beta_{bF2}, r_{bF2}, d, \gamma, \vartheta_1) \tag{44}$$

Gleichung (32) wird ersetzt durch:

$$\hat{C}_{Fw1} \cdot w_{F1} + \hat{C}_{Fw2} \cdot w_{F2} + \hat{C}_{Fz_{V1}} \cdot z_{V1} + \hat{C}_{Fc} = 0 \tag{45}$$

Die hier eingeführten Koeffizienten $\hat{C}_{Fw1}$, $\hat{C}_{Fw2}$, $\hat{C}_{Fz_{V1}}$ und $\hat{C}_{Fc}$ haben folgende Abhängigkeiten:

$$\hat{C}_{Fw1} = \hat{C}_{Fw1}(\beta_{bF1}) \tag{46}$$

$$\hat{C}_{Fw2} = \hat{C}_{Fw2}(\beta_{bF2}) \tag{47}$$

$$\hat{C}_{Fz_{V1}} = \hat{C}_{Fz_{V1}}(\beta_{bF1}, r_{bF1}, \beta_{bF2}, r_{bF2}, \gamma, \vartheta_1) \tag{48}$$

$$\hat{C}_{Fc} = \hat{C}_{Fc}(\beta_{bF1}, r_{bF1}, \beta_{bF2}, r_{bF2}, d, \gamma, \vartheta_1) \tag{49}$$

Mit der Kenntnis dieser Beziehungen kann analog zum Fall zylindrischer Werkzeuge und Werkstücke eine Abbildung von Punkten auf der Schnecke zu Punkten auf dem Werkstück berechnet werden. Nimmt man hier wieder eine Modifikation auf der Schnecke gemäß Gleichung (1) an, führt dies zu einer Relation analog zu Gleichung (36), jedoch mit anderen Koeffizienten $\overline{C}_{Fw2}$ und $\overline{C}_{Fc}$. Diese Koeffizienten hängen jetzt zusätzlich von $\vartheta_1$ ab. Ein Koeffizientenvergleich ermöglicht auch hier wieder die Berechnung von $K_{Z_{V1}}$ sowie die Berechnung von $X_{F2}$ als Funktion von $X_{F1}$, jeweils für linke und rechte Flanke, jedoch hat $K_{Z_{V1}}$ jetzt zusätzlich eine Abhängigkeit von $\vartheta_1$. Zu beachten ist hier, dass eine Änderung von $\vartheta_1$ im Allgemeinen eine Änderung der Grundkreisradien und Grundschrägungswinkel der Schnecke erfordert, damit Schnecke und Werkstück weiterhin mit einander kämmen und so ein Schraubwälzgetriebe bilden können. Das heißt, die Schnecke muss mit einer, um $\vartheta_1$ gekippten Zahnstange generiert werden können und Schnecke und Werkstück müssen miteinander kämmen. Werden $\vartheta_1$ und somit auch die Grundkreisradien und Grundschrägungswinkel verändert, beeinflusst diese Änderung $K_{Z_{V1}}$ auf linker und rechter Flanke unterschiedlich. Diese unterschiedliche Beeinflussung erlaubt es, ein $\vartheta_1$ zu bestimmen, sodass $K_{Z_{V1}}$ für linke und rechte Flanke gleich sind. Neben dem Konuswinkel $\vartheta_1$ beeinflussen bei konischen Schnecken auch die Profilwinkel der die Schnecke generierenden Zahnstange und der Achskreuzwinkel $\gamma$ den Wert $K_{Z_{V1}}$. Somit können zusätzlich zum Konuswinkel diese Größen variiert werden, um gleiches $K_{Z_{V1}}$ für linke und rechte Flanke zu erhalten. Diese Änderung der Profilwinkel führt ebenfalls zu einer Änderung der Grundkreisradien und Grundschrägungswinkel der Schnecke. Dies Variationsmöglichkeiten erlauben ein zweiflankiges, abweichungsfreies Wälzschleifen, auch für Verzahnungen und gewünschten Modifikationen, bei denen ein zweiflankiges, abweichungsfreies Wälzschleifen mit einer zylindrischen Schnecke nicht möglich wäre. Auch bei konischen Schnecken ist es möglich, einflankig zu schleifen und/oder eine Schnecke und ein Diagonalverhältnis zu wählen, welche die Modifikation nicht abweichungsfrei erzeugen, das heißt, bei denen $\rho_{F2}$ auf mindestens einer Flanke von der Sollvorgabe abweicht. Eine solche Wahl von Schnecke und Diagonalverhältnis kann beispielsweise nötig sein, wenn beide auf Grund anderer Vorgaben nicht frei wählbar sind.

**Zylindrisches Werkzeug und konisches Werkstück**

Das hier beschriebene Verfahren lässt sich direkt auf das Wälzschleifen konischer Werkstücke im Diagonalwälzverfahren übertragen. Zunächst wird hier der Fall einer zylindrischen Schnecke betrachtet, welche eine Modifikation gemäß Gleichung (1) aufweist. Schnecke und Werkstück bilden wieder ein Schraubwälzgetriebe, dessen Kinematik durch Gleichung (6) gegeben ist. Auch hier liegt wieder theoretischer Punktkontakt zwischen Schnecke und Werkstück vor. Der Verlauf des Kontaktpunkts zwischen Werkstück und Schnecke kann wie folgt mathematisch beschrieben werden.

$$z_{F1} = C_{Fw1} \cdot w_{F1} - z_{V1} + C_{Fz_{V2}1} \cdot z_{V2} + C_{Fc1} \tag{50}$$

$$z_{F2} = C_{Fw2} \cdot w_{F2} + C_{Fz_{V2}2} \cdot z_{V2} + C_{Fc2} \tag{51}$$

Die hier eingeführten Koeffizienten $\hat{C}_{Fw1}$, $C_{Fc1}$, $C_{Fw2}$, $C_{Fz_{V2}2}$, $C_{Fz_{V2}1}$ und $C_{Fc2}$ haben folgende Abhängigkeiten:

$$C_{Fw1} = C_{Fw1}(\beta_{bF1}) \tag{52}$$

$$C_{Fc1} = C_{Fc1}(\beta_{bF1}, \beta_{bF2}, r_{bF1}, d, \gamma, \vartheta_2) \tag{53}$$

$$C_{Fw2} = C_{Fw2}(\beta_{bF2}) \tag{54}$$

$$C_{Fc2} = C_{Fc2}(\beta_{bF1}, \beta_{bF2}, r_{bF2}, d, \gamma, \vartheta_2) \tag{55}$$

$$C_{Fz_{V2}2} = C_{Fz_{V2}2}(\beta_{bF1}, \beta_{bF2}, r_{bF2}, d, \gamma, \vartheta_2) \tag{56}$$

$$C_{Fz_{V2}1} = C_{Fz_{V2}1}(\beta_{bF1}, \beta_{bF2}, r_{bF1}, d, \gamma, \vartheta_2) \tag{57}$$

Gleichung (32) wird ersetzt durch:

$$\hat{C}_{Fw1} \cdot w_{F1} + \hat{C}_{Fw2} \cdot w_{F2} + \hat{C}_{Fz_{V2}} \cdot z_{V2} + \hat{C}_{Fc} = 0 \tag{58}$$

Die hier eingeführten Koeffizienten $\hat{C}_{Fw1}$, $\hat{C}_{Fw2}$, $\hat{C}_{Fz_{V2}}$ und $\hat{C}_{Fc}$ haben folgende Abhängigkeiten:

$$\hat{C}_{Fw1} = \hat{C}_{Fw1}(\beta_{bF1}) \tag{59}$$

$$\hat{C}_{Fw2} = \hat{C}_{Fw2}(\beta_{bF2}) \tag{60}$$

$$\hat{C}_{Fz_{V2}} = \hat{C}_{Fz_{V2}}(\beta_{bF1}, r_{bF1}, \beta_{bF2}, r_{bF2}, \gamma, \vartheta_2) \tag{61}$$

$$\hat{C}_{Fc} = \hat{C}_{Fc}(\beta_{bF1}, r_{bF1}, \beta_{bF2}, r_{bF2}, d, \gamma, \vartheta_2) \tag{62}$$

Der bekannte Rechenansatz führt auch hier wieder zu einer Relation analog zu Gleichung (36), jedoch mit

anderen Koeffizienten $\overline{C}_{Fw2}$ und $\overline{C}_{Fc}$. Diese Koeffizienten hängen jetzt zusätzlich von $\vartheta_2$ ab. Ein Koeffizientenvergleich ermöglicht auch hier wieder die Berechnung von $K_{Z_{V1}}$ sowie die Berechnung von $X_{F2}$ als Funktion von $X_{F1}$, jeweils für linke und rechte Flanke, jedoch hat $K_{Z_{V1}}$ jetzt zusätzlich eine Abhängigkeit von $\vartheta_2$. Bei Vorgabe der gleichen durch $\rho_{F2}$ gegebenen Richtung der Modifikation auf linker und rechter Flanke führt die Berechnung von $K_{Z_{V1}}$ im Allgemeinen zu unterschiedlichen Werten für linke und rechte Flanke. Dies ist auch bei symmetrischen Werkstücken im Allgemeinen der Fall. Anders ausgedrückt bedeutet dies, dass beim zweiflankigen Schleifen die Richtung $\rho_{F2}$ der Modifikation auf linker und rechter Flanke im Allgemeinen unterschiedlich ist. Gibt es ein Diagonalverhältnis $K_{Z_{V1}}$, sodass $\rho_{F2}$ auf beiden Seiten erreicht werden kann, bzw. innerhalb der Toleranz liegt, so ist ein zweiflankiges Schleifen mit einem zylindrischen Werkzeug möglich. Andernfalls ist mit einem zylindrischen Werkzeug nur ein einflankiges Schleifen möglich. Wie bei zylindrischen Werkstücken kann durch Nutzung eines konischen Werkzeugs bei unabhängiger Vorgabe der Winkel $\rho_{F2}$ auf linker und rechter Flanke ein abweichungsfreies, zweiflankiges Schleifen ermöglicht werden.

**Konisches Werkzeug und konisches Werkstück**

Die Berechnung für ein konisches Werkzeug und ein konisches Werkstück erfolgt analog zu den bisher behandelten Kombinationen. Schnecke und Werkstück bilden wieder ein Schraubwälzgetriebe, dessen Kinematik durch Gleichung (7) gegeben ist. Auch hier liegt wieder theoretischer Punktkontakt zwischen Schnecke und Werkstück vor. Der Verlauf des Kontaktpunkts zwischen Werkstück und Schnecke kann wie folgt mathematisch beschrieben werden.

$$z_{F1} = C_{Fw1} \cdot w_{F1} + C_{Fz_{V1}1} \cdot z_{V1} + C_{Fz_{V2}1} \cdot z_{V2} + C_{Fc1} \tag{63}$$

$$z_{F2} = C_{Fw2} \cdot w_{F2} + C_{Fz_{V1}2} \cdot z_{V1} + C_{Fz_{V2}2} \cdot z_{V2} + C_{Fc2} \tag{64}$$

Die hier eingeführten Koeffizienten $\hat{C}_{Fw1}$, $C_{Fc1}$, $C_{Fw2}$, $C_{Fz_{V2}2}$, $C_{Fz_{V2}1}$, $C_{Fz_{V1}2}$, $C_{Fz_{V1}1}$ und $C_{Fc2}$ haben folgende Abhängigkeiten:

$$C_{Fw1} = C_{Fw1}(\beta_{bF1}) \tag{65}$$

$$C_{Fc1} = C_{Fc1}(\beta_{bF1}, \beta_{bF2}, r_{bF1}, d, \gamma, \vartheta_1, \vartheta_2) \tag{66}$$

$$C_{Fw2} = C_{Fw2}(\beta_{bF2}) \tag{67}$$

$$C_{Fc2} = C_{Fc2}(\beta_{bF1}, \beta_{bF2}, r_{bF2}, d, \gamma, \vartheta_1, \vartheta_2) \tag{68}$$

$$C_{Fz_{V2}2} = C_{Fz_{V2}2}(\beta_{bF1}, \beta_{bF2}, r_{bF2}, d, \gamma, \vartheta_1, \vartheta_2) \tag{69}$$

$$C_{Fz_{V2}1} = C_{Fz_{V2}1}(\beta_{bF1}, \beta_{bF2}, r_{bF1}, d, \gamma, \vartheta_1, \vartheta_2) \tag{70}$$

$$C_{Fz_{V1}2} = C_{Fz_{V1}2}(\beta_{bF1}, \beta_{bF2}, r_{bF2}, d, \gamma, \vartheta_1, \vartheta_2) \tag{71}$$

$$C_{Fz_{V1}1} = C_{Fz_{V1}1}(\beta_{bF1}, \beta_{bF2}, r_{bF1}, d, \gamma, \vartheta_1, \vartheta_2) \tag{72}$$

Gleichung (32) wird ersetzt durch:

$$\hat{C}_{Fw1} \cdot w_{F1} + \hat{C}_{Fw2} \cdot w_{F2} + \hat{C}_{Fz_{V1}} \cdot z_{V1} + \hat{C}_{Fz_{V2}} \cdot z_{V2} + \hat{C}_{Fc} = 0 \tag{73}$$

Die hier eingeführten Koeffizienten $\hat{C}_{Fw1}$, $\hat{C}_{Fw2}$, $\hat{C}_{Fz_{V1}}$, $\hat{C}_{Fz_{V2}}$ und $\hat{C}_{Fc}$ haben folgende Abhängigkeiten:

$$\hat{C}_{Fw1} = \hat{C}_{Fw1}(\beta_{bF1}) \tag{74}$$

$$\hat{C}_{Fw2} = \hat{C}_{Fw2}(\beta_{bF2}) \tag{75}$$

$$\hat{C}_{Fz_{V1}} = \hat{C}_{Fz_{V1}}(\beta_{bF1}, r_{bF1}, \beta_{bF2}, r_{bF2}, \gamma, \vartheta_1, \vartheta_2) \tag{76}$$

$$\hat{C}_{Fz_{V2}} = \hat{C}_{Fz_{V2}}(\beta_{bF1}, r_{bF1}, \beta_{bF2}, r_{bF2}, \gamma, \vartheta_1, \vartheta_2) \tag{77}$$

$$\hat{C}_{Fc} = \hat{C}_{Fc}(\beta_{bF1}, r_{bF1}, \beta_{bF2}, r_{bF2}, d, \gamma, \vartheta_1, \vartheta_2) \tag{78}$$

Der bekannte Rechenansatz führt auch hier wieder zu einer Relation analog zu Gleichung (36), jedoch mit anderen Koeffizienten $\overline{C}_{Fw2}$ und $\overline{C}_{Fc}$. Diese Koeffizienten hängen jetzt zusätzlich von $\vartheta_1$ und $\vartheta_2$ ab. Ein Koeffizientenvergleich ermöglicht auch hier wieder die Berechnung von $K_{Z_{V1}}$ sowie die Berechnung von $X_{F2}$ als Funktion von $X_{F1}$, jeweils für linke und rechte Flanke, jedoch hat $K_{Z_{V1}}$ jetzt zusätzlich eine Abhängigkeit von $\vartheta_1$ und $\vartheta_2$. Analog zum Schleifen eines zylindrischen Werkstücks mit einer konischen Schnecke, beeinflussen Änderung von $\vartheta_1$, der Profilwinkel der Zahnstange der Schnecke und der Achskreuzwinkel und somit auch die Grundkreisradien und Grundschrägungswinkel das Diagonalverhältnis $K_{Z_{V1}}$ auf linker und rechter Flanke unterschiedlich. Dies ermöglicht es, für gegebene Richtungen $\rho_{F2}$ der Sollmodifikation ein $\vartheta_1$, Profilwinkel der Zahnstange der Schnecke und einen Achskreuzwinkel zu bestimmen, sodass $K_{Z_{V1}}$ für linke und rechte Flanke gleich ist und somit ein zweiflankiges abweichungsfreies Schleifen möglich wird.

Bei allen hier beschriebenen Kombinationen ist die auf der Schnecke nötige Modifikation $F_{t1}(X_{F1})$ gegeben durch:

$$F_{Ft1}(X_{F1}) = -\frac{\cos\beta_{bF2}}{\cos\beta_{bF1}} \cdot F_{Ft2}(X_{F2}(X_{F1})) \tag{79}$$

$F_{Ft2}(X_{F2})$ beschreibt die Modifikation auf dem Werkstück gemäß Gleichung (1).

**Berechnungsansatz zur Berechnung der Kontaktpfade auf Werkzeug und Werkstück**

Im Folgenden wird ein Berechnungsansatz aufgezeigt, mit dem sich die oben verwendeten Kontaktpfade, abhängig von den Vorschüben berechnen lassen. Diese Berechnung der Berührung zwischen Werkstück und Werkzeug wird mit Hilfe zweier theoretischer Zahnstangen (auch Planverzahnungen genannt), je einer für Werkstück und Werkzeug, jeweils mit trapezförmigen im Allgemeinen asymmetrischen Profilen, welche die Verzahnungen generieren können, durchgeführt. Da sowohl Werkzeug als auch Werkstück Evolventenverzahnungen sind, ist diese Betrachtung symmetrisch gegen Vertauschen von Werkzeug und Werkstück.

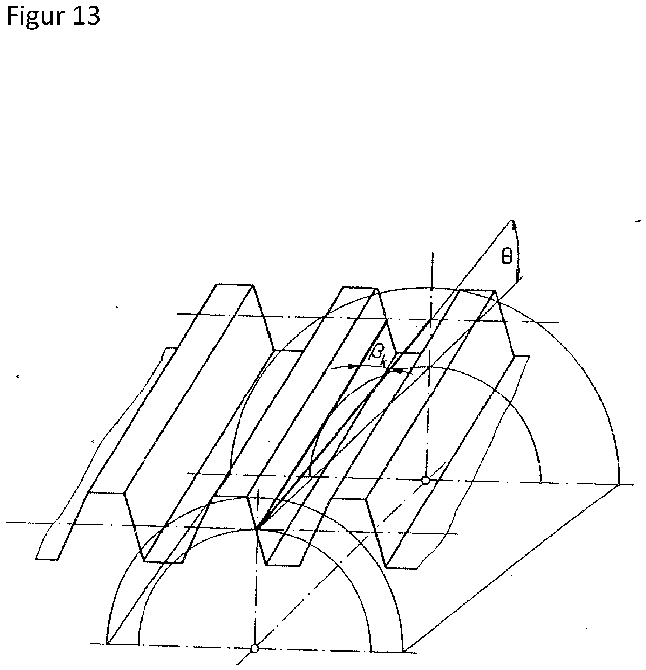

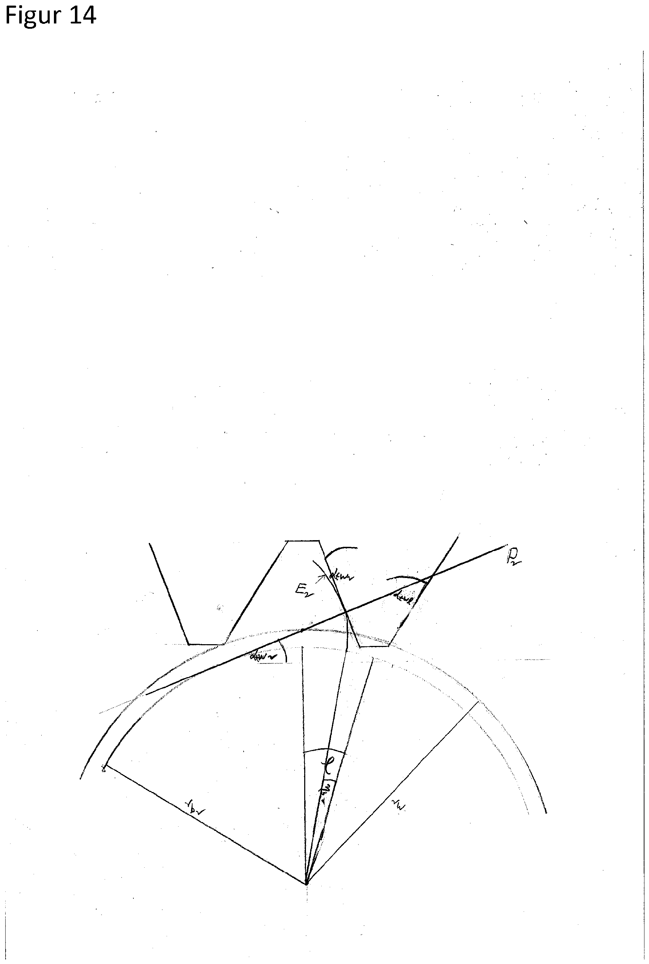

Figur 14 zeigt beispielhaft die Berührung einer rechten evolventischen Flanke mit einer generierenden Zahnstange mit Profilwinkel $\alpha_{twr}$ im Stirnschnitt. Die Verzahnung ist um den Drehwinkel $\varphi$ gedreht. Die Berührung zwischen Flanke und Zahnstange findet in der Eingriffsebene $P_r$ statt, welche um $\alpha_{twr}$ geneigt ist. Der Berührpunkt zwischen Flanke und Zahnstange ergibt sich für alle Drehwinkel $\varphi$ als Schnittpunkt zwischen Flanke und Eingriffsebene. Während die Verzahnung dreht, wird die Zahnstange waagerecht verschoben, so dass sie schlupffrei auf dem Wälzkreis mit Radius $r_w$ abrollt. Dadurch bleiben Flanke und Zahnstange in Berührung. Um die Verzahnung in ihrer ganzen Breite zu beschreiben, muss die relative Lage der Zahnstange zur Verzahnung in 3D betrachtet werden. Für zylindrische Verzahnungen wird diese um den Schrägungswinkel $\beta_w$ geschwenkt. Für den Fall einer konischen Verzahnung ist die Lage der Zahnstange zur Verzahnung in [Zierau] (Die geometrische Auslegung konischer Zahnräder und Paarungen mit parallelen Achsen, Bericht Nr. 32, Institut für Konstruktionslehre, Technische Universität Braunschweig) ausführlich beschrieben. Zusätzlich zum Schwenken um den Schrägungswinkel $\beta_w$ erfolgt ein Kippen um den Konuswinkel $\vartheta$ (siehe Figur 13). In beiden Fällen hat die Zahnstange im Normalschnitt die Profilwinkel $\alpha_{nwF}$. Welche Kombinationen von Winkeln $\alpha_{twF}$, $\alpha_{nwF}$ und $\beta_w$ sowie Normalmodul $m_n$ und Stirnmodul $m_t$ möglich sind, um eine gegebene Verzahnung zu erzeugen, ergibt sich für zylindrische Verzahnungen aus dem Formelwerk der DIN3960 und für konische zusätzlich aus dem Formelwerk aus [Zierau]. Die hierzu nötigen Formeln lassen sich durch Einführung unterschiedlicher Profilwinkel auf linker und rechter Seite direkt auf asymmetrische Verzahnungen übertragen.

Sind Geometrie und relative Lage der Zahnstange zur Verzahnung bekannt, so können die Stirnschnitte für beliebige Breitenpositionen bestimmt werden und in ihnen der Berührpunkt zwischen Zahnstange und Flanke. All diese Berührpunkte in den einzelnen Stirnschnitten bilden für einen Drehwinkel $\varphi$ eine Gerade (Berührgerade) in der Eingriffsebene. Beschreibt man diese Berührpunkte über $w$ und $z$ aus der Parametrisierung in Gleichung (3), so erhält man einen linearen Zusammenhang (R1) zwischen $w$, $z$ und $\varphi$. Wird die Zahnstange im Raum festgehalten, so ist es für zylindrische Verzahnungen möglich, diese in axialer Richtung zu verschieben. Dieser Axialvorschub $z_V$ wird typischerweise für das Werkstück eingestellt, um dieses über die ganze verzahnte Breite zu bearbeiten und für das Werkzeug eingestellt, um das Diagonalverhältnis einzustellen. Damit die Verzahnung weiterhin, in der Regel zweiflankig die Zahnstange berührt, muss die Verzahnung zusätzlich zur Verschiebung um ihre Achse gedreht werden. Der Betrag der Drehung ergibt sich aus der Steigungshöhe der Verzahnung und dem Betrag der Verschiebung, der Drehsinn aus der Steigungsrichtung. Bei konischen Verzahnungen erfolgt der Vorschub $z_V$ nicht in axialer Richtung, sondern gegenüber dieser um den Konuswinkel $\vartheta$ gekippt. Die für die Berechnung der Drehwinkelkorrektur nötige Steigungshöhe errechnet sich nach derselben Formel wie für zylindrische Verzahnungen aus $\beta_w$ und $m_t$. Zur Berechnung der Berührpunkte in den einzelnen Stirnschnitten sind die Stirnschnitte, abhängig vom Axialvorschub bzw. Vorschub mit den entsprechend korrigierten Drehwinkeln zu betrachten. Für die Beschreibung der Berührpunkte ergibt sich aus (R1) ein linearer Zusammenhang (R2) zwischen $w$, $z$, $z_V$ und $\varphi$.

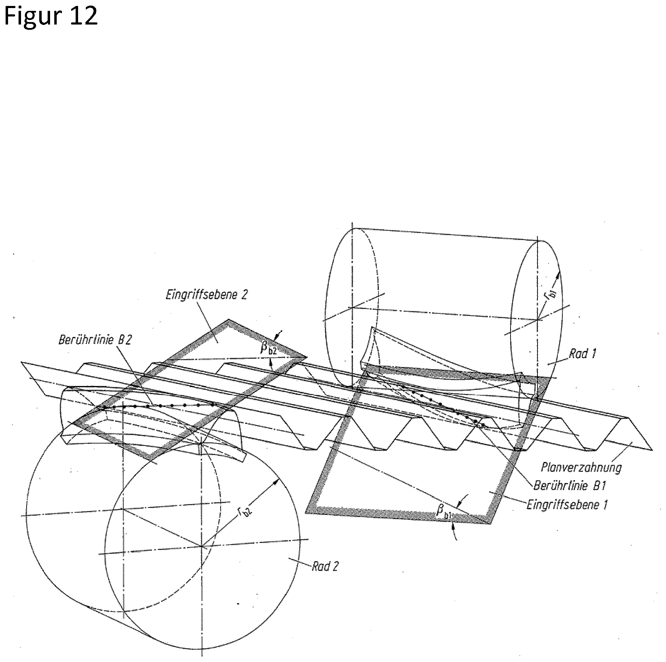

Werden zwei Verzahnungen in einem Schraubwälzgetriebe gepaart, so müssen deren beiden Zahnstangen zu jeder Zeit deckungsgleich sein, wie in Figur 12 gezeigt. Das impliziert, dass die Profilwinkel $\alpha_{nwF}$ für beide Verzahnungen gleich sein müssen. Des Weiteren ergibt sich daraus (R3): $\gamma + \beta_{w1} + \beta_{w2} = 0$. Diese Bedingung erlaubt es, aus einem gegebenen Achskreuzwinkel für zwei gegebene Verzahnungen, welche mit einander kämmen können, die Profilwinkel im Normal- bzw. Stirnschnitt der beiden Zahnstangen zu ermitteln. Eine Änderung der Grundkreisradien und der Grundschrägungswinkel der Schnecke ist somit gleichbedeutend mit einer Änderung des Profilwinkel und/oder des Konuswinkels und/oder des Achskreuzwinkels.

Damit die Zahnstangen zu jeder Zeit deckungsgleich sind, ergibt sich eine lineare Zwangsbedingung (R4) zwischen den beiden Drehwinkel und den beiden Vorschüben.

Sind die beiden Drehwinkel und die beiden Vorschübe bekannt, so lässt sich der Berührpunkt der beiden Verzahnungen direkt durch Berechnung des Schnittpunkts der beiden Berührgeraden bestimmen. Die Parameter $z_{F1}$ und $w_{F1}$ bzw. $z_{F2}$ und $w_{F2}$, welche den Berührpunkt auf Verzahnung 1 bzw. Verzahnung 2 beschreiben, hängen linear von $\varphi_1$, $\varphi_2$, $z_{V1}$ und $z_{V2}$ ab (R5). Eliminiert man in diesen Relationen die Drehwinkel, so folgen die gesuchten Kontaktpfade (R6).

Aus (R4) und (R2) für beide Verzahnungen ergibt sich durch Eliminieren von $\varphi_1$ und $\varphi_2$ ein linearer Zusammenhang (R7) zwischen $w_{F1}$, $w_{F2}$, $z_{V1}$ und $z_{V2}$, welche, abhängig vom Vorschub beschreibt, welcher Wälzweg auf Verzahnung 1 welchen Wälzweg auf Verzahnung 2 berührt.

Damit Werkzeug und Werkstück miteinander kämmen, muss gelten:

$$m_{bF1} \cdot \cos \beta_{bF1} = m_{bF2} \cdot \cos \beta_{bF2} \tag{80}$$

Alternativ zum gerade beschriebenen Ansatz ist es auch möglich, die Kontaktpfade (R6) und den Zusammenhang zwischen den Wälzwinkeln (R7) mit Hilfe einer Simulationsrechnung durchzuführen. Mit solchen Simulationen ist es möglich, aus einem gegebenen Werkzeug, insbesondere einer Schnecke und einer gegebenen Kinematik, insbesondere einer gegebenen Relativstellung zwischen Werkzeug und Werkstück, die exakte Geometrie des Werkstücks zu berechnen. Solche Simulationen lassen sich dahingehend erweitern, dass mit ihnen auch ermittelt werden kann, welcher Punkt auf dem Werkzeug welchen Punkt auf dem Werkstück fertigt, abhängig vom Vorschub des Werkzeugs und des Werkstücks. Ein dazu geeigneter Algorithmus wird im Folgenden beschrieben.

Hierzu wird zunächst eine, in der Regel nicht modifiziertes Werkstück betrachtet. Auf einzelnen Punkten mit den Koordinaten ($w_{F2}$, $z_{F2}$) auf den Zähnen dieses Werkstücks werden Vektoren in Normalenrichtung mit einer zuvor festgelegten Länge platziert. Die Länge der Vektoren entspricht dem Aufmaß des Werkstücks vor dem Schleifen, bezogen auf das nicht modifizierte Werkstück. Das Aufmaß wird typischerweise so groß gewählt, dass jeder Vektor während der nachfolgend beschriebenen Simulation mindestens einmal gekürzt wird. Die Anzahl der Punkte auf den Zähnen bestimmt die Genauigkeit des Ergebnisses. Bevorzugt werden diese Punkte äquidistant gewählt. Die relative Lage des Werkstücks zur Schnecke wird zu jedem Zeitpunkt vorgegeben, beispielsweise durch die kinematischen Ketten $K_r$. Zu jedem der diskreten Zeitpunkte wird der Schnitt aller Vektoren mit der Schnecke berechnet. Schneidet ein Vektor die Schnecke nicht, bleibt dieser unverändert. Schneidet er jedoch die Schnecke, so wird der Schnittpunkt berechnet und der Vektor soweit gekürzt, dass er gerade an dem Schnittpunkt endet. Weiterhin wird der Abstand des Schnittpunkts von der Schneckenachse, das heißt, der Radius auf der Schnecke $r_{F1}$ des Schnittpunkts berechnet und als zusätzliche Information zum gerade gekürzten Vektor abgespeichert. Da die Korrekturen der Koordinaten hier während des Schleifens nicht verändert werden, haben, nachdem die Simulation über die ganze Breite der Schnecke durchgeführt wurde, alle Vektoren auf einem gegebenen Radius des Werkstücks $r_{F2}$ bzw. einem gegebenen Wälzweg $w_{F2}$ annähernd dieselbe Länge.

Die geringfügen Unterschiede in den Längen rühren daher, dass der hier beschriebene Algorithmus aufgrund der Diskretisierung der Zeit Markierungen, ähnlich den Hüllschnitten beim Wälzfräsen verursacht. Diese Markierungen und somit auch die Unterschiede in den Längen der Vektoren auf einem gegebenen Radius des Werkstücks können durch eine feinere Diskretisierung der Zeit, gleichbedeutend mit einer Verkürzung der Zeitschritte reduziert werden. Wird die Simulation nicht über die gesamte Breite des Werkstücks durchgeführt, sondern bei einer gegebenen axialen Shiftposition $z_{V2}$ des Werkstücks abgebrochen, so haben, für einen gegebenen Radius auf der Schnecke nur die Vektoren annähernd dieselbe Länge, die von dem Kontaktpfad bereits überstrichen wurden. Die übrigen Vektoren haben entweder noch die ursprünglich gewählte Länge oder wurden bereits mindestens einmal gekürzt, haben jedoch noch nicht die endgültige Länge, da sie zu einem späteren Zeitpunkt erneut gekürzt werden (siehe Figur 15). Diese Tatsache kann genutzt werden, um den Kontaktpfad für die aktuellen Vorschübe des Werkstücks und der Schnecke sehr genau zu bestimmen. Dazu werden alle Vektoren auf einen gegebenen Radius auf dem Werkstück $r_{F2}$ bzw. Wälzweg $w_V$ betrachtet und bestimmt, an welcher Breitenlinienposition der Übergang von Vektoren mit annährend gleicher Länge zu solchen mit davon abweichender Länger ist. Da das Schraubwälzgetriebe symmetrisch gegen Vertauschen von Werkstück und Schnecke ist, kann auf dieselbe Weise der Kontaktpfad auf der Schnecke bestimmt werden. Sind Werkstück und Schnecke beide zylindrisch, lassen sich aus den so berechneten Punkten auf dem Kontaktpfad die Koeffizienten aus Gleichung (26) bzw. (27), beispielsweise mittels einer Ausgleichsrechung bestimmen. Sind die Vektoren bestimmt, entlang derer der Kontaktpfad verläuft, können die zu diesen zuvor gespeicherten Radien auf der Schnecke $r_{F1}$ ausgelesen werden und so zu jedem Radius auf dem Werkstück $r_{F2}$ ermittelt werden, von welchem Radius auf der Schnecke $r_{F1}$ dieser geschliffen wurde. Diese Radien können in Wälzwege umgerechnet werden. Aus diesen Wertepaaren lassen sich für zylindrische Werkstücke und zylindrische Schnecken die Koeffizienten aus Gleichung (32), beispielsweise mittels einer Ausgleichsrechung bestimmen.

Ist die Schnecke konisch und das Werkstück zylindrisch, so muss der Kontaktpfad für mindestens zwei verschiedene Vorschübe $z_{V1}$ bestimmt werden, um zusätzlich die Koeffizienten vor $z_{V1}$ in den Gleichungen (37), (38) und (45) zu bestimmen. Analog müssen mindestens zwei verschiedene Vorschübe $z_{V2}$ betrachtet werden, wenn Werkstück konisch und Schnecke zylindrisch sind. Sind Werkstück und Schnecke konisch, so müssen die Kontakpfade für mindestens zwei Vorschübe $z_{V1}$ und mindestens zwei Vorschübe $z_{V2}$ betrachtet werden, um alle Koeffizienten aus den Gleichungen (63), (64) und (73) zu bestimmen.

**Wahl der Makrogeometrie der Schnecke**

Das hier berechnete Diagonalverhältnis hängt unter anderem auch von der Makrogeometrie der Schnecke, insbesondere der Gangzahl, dem Grundschrägungswinkel, den Grundkreisradien, dem Außendurchmesser (im Falle eines konischen Werkzeugs an einer definierten $z$-Position) und ggf. dem Konuswinkel ab. Diese Größen können daher genutzt werden, um bei gegebenen Richtungen $\rho_F$ das einzustellende Diagonalverhältnis zu beeinflussen. Dies ermöglicht es somit auch, den Arbeitsbereich zu verlängern oder zu verkürzen, was für die Werkzeugaufteilung von Vorteil sein kann. Auch kann eine Beeinflussung des Diagonalverhältnisses aus technologischen Gründen sinnvoll sein.

**Nicht konstantes Diagonalverhältnis**

Das hier bisher beschriebene Verfahren erfordert, dass der Bearbeitungsprozess mit einem konstanten vorgegebenen Diagonalverhältnis durchzuführen ist. Das Diagonalverhältnis und die Breite des Werkstücks inklusive Überlauf bestimmen den für die Bearbeitung nötigen Vorschub des Werkstücks. Zusammen mit der Ausdehnung des Kontaktpfads auf dem Werkzeug bestimmt der Vorschub die Länge des an der Bearbeitung beteiligten Teils des Werkzeugs, auch als Arbeitsbereich bezeichnet. Die Länge des Arbeitsbereiches bestimmt zum einen die Mindestlänge des Werkzeug bzw. bei kurzen Arbeitsbereichen und langen Werkzeugen die Anzahl der modifizierten Bereiche, die auf der Schnecke platziert werden können. In beiden Fällen kann es von Vorteil sein, die Länge des Arbeitsbereichs zu verlängern oder zu verkürzen. Eine Möglichkeit die Länge des Arbeitsbereichs zu verändern besteht darin, die Geometrie des Werkzeugs zu ändern, insbesondere die Grundkreisradien und Grundschrägungswinkel. Der Einfluss dieser Variante auf die Länge des Arbeitsbereichs ist im Allgemeinen jedoch recht gering. Eine weitere Möglichkeit die Länge des Arbeitsbereichs zu verändern besteht darin, das Diagonalverhältnis während der Bearbeitung zu verändern. Geschieht dies, während der Verlauf des Kontaktpunkts einen modifizierten Bereich überstreicht, so führt dies zu Abweichungen der Modifikation. Ist die Abweichung dann noch innerhalb der Toleranz, ist hier eine Änderung des Diagonalverhältnisses sinnvoll einsetzbar.

Ist die Modifikation so geartet, dass der Verlauf des Kontaktpunkts Bereiche überstreicht, die nicht modifiziert sind, so sind die zu diesem Zeitpunkt im Eingriff befindlichen Teile der Schnecke auch nicht modifiziert. Dies erlaubt es, während dieser Bereich überstrichen wird, das Diagonalverhältnis frei zu wählen. Um beispielsweise die Länge des Arbeitsbereichs zu minimieren, kann das Diagonalverhältnis auf 0 gesetzt werden. Eine Reduktion des Diagonalverhältnisses führt jedoch zu einer stärkeren Beanspruchung des Werkzeugs, was eine technologische Betrachtung nötig macht. Ist der Abtrag besonders groß, während der nicht modifizierte Bereich gefertigt wird, so kann es auch sinnvoll sein, das Diagonalverhältnis in diesen Bereichen zu erhöhen.

Typische Beispiele für Modifikationen, die aus einem nicht modifizierten Bereich bestehen, sind Endrücknahmen oder auch dreieckförmige Endrücknahme.

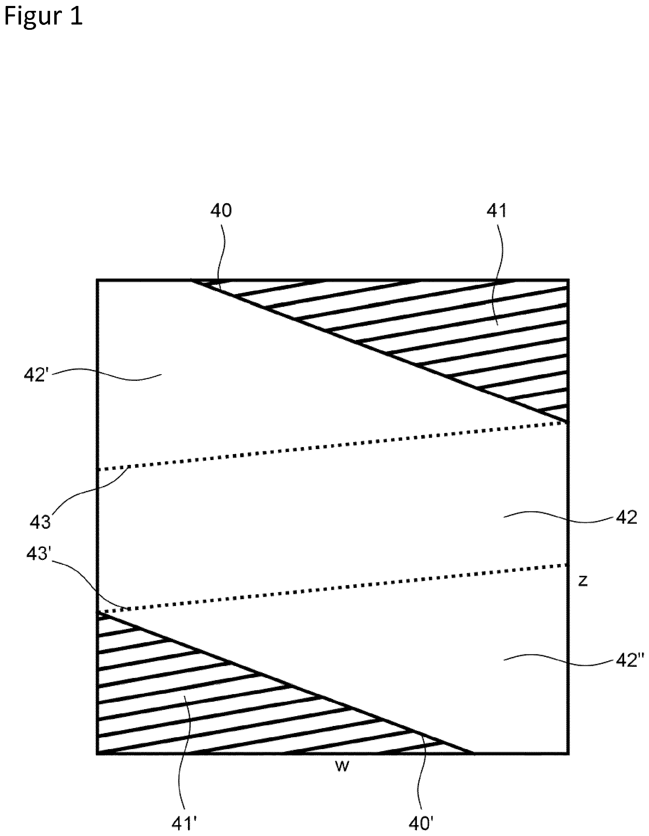

Figur 1 zeigt am Beispiel zweier Dreiecksförmigen Endrücknahme eine Aufteilung in modifizierte (41 und 41') und nicht modifizierte (42, 42', 42") Bereiche. Während der Verlauf des Kotaktpunkts (43 bzw. 43') den Bereich 42 überstreicht, kommen nur nicht modifizierte Bereiche der Schnecke in Eingriff. In diesem Bereiche kann das Diagonalverhältnis frei gewählt werden. Wird ein Bereich oberhalb 43 oder unterhalb 43' überstrichen, verläuft der Kontaktpunt zumindest teilweise über einen modifizierten Bereich. Hier muss das berechnete Diagonalverhältnis eingehalten werden, um abweichungsfrei zu fertigen. Es ist jedoch auch möglich, das Diagonalverhältnis nicht einzuhalten und Abweichungen in Kauf zu nehmen. Wird zweiflankig geschliffen, so müssen bei dieser Betrachtung beide Flanken berücksichtig werden. Soll eine abweichungsfreie Modifikation erzeugt werden, kann das Diagonalverhältnis nur dann frei gewählt werden, während der Kontaktpfad auf beiden Flanken einen nicht modifizierten Bereich überstreicht.

Möglich sind auch Modifikationen, die sich aus nicht modifizierten Bereichen und aus Bereichen mit in unterschiedlichen Richtungen verlaufenden Modifikationen zusammensetzten. Ist die Modifikation so geartet, dass der Verlauf des Kontaktpunkts zwischen den modifizierten Bereichen, Bereiche überstreicht, die nicht modifiziert sind, so kann in diesen Bereichen das Diagonalverhältnis wieder beliebig gewählt werden. Werden modifizierte Bereiche überstrichen, so muss das Diagonalverhältnis entsprechend der Richtung der gerade überstrichenen Modifikation eingestellt werden. Die nicht modifizierten Bereiche können genutzt werden, um das Diagonalverhältnis von einem modifizierten Bereich zum nächsten anzupassen.

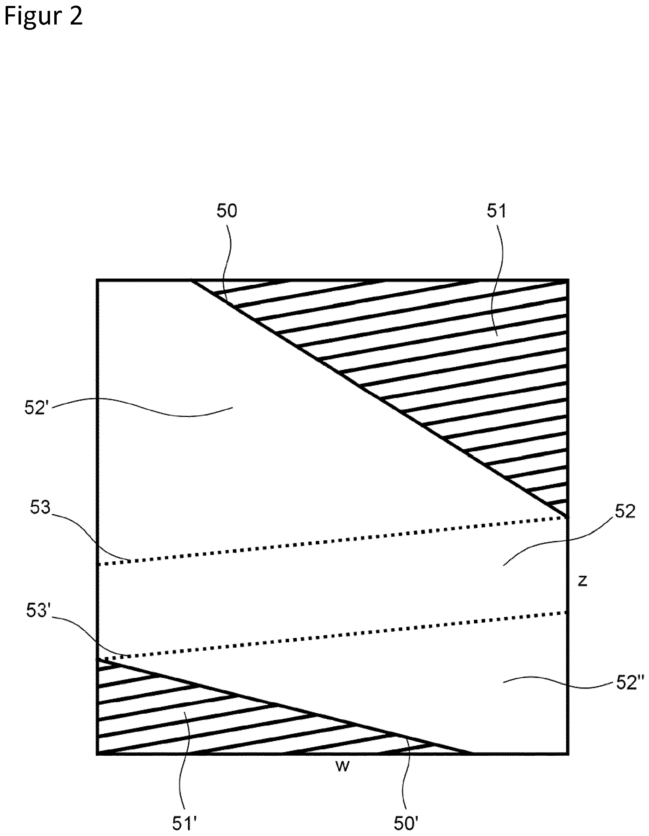

Figur 2 zeigt am Beispiel zweier Dreiecksförmigen Endrücknahme, welche in unterschiedliche Richtungen verlaufen, eine Aufteilung in modifizierte (51 und 51') und nicht modifizierte (52, 52', 52") Bereiche. Die Richtungen $\rho_{F2}$ (50 bzw. 50') der Modifikationen gemäß Gleichung (1) sind bei den modifizierten Bereichen unterschiedlich. Somit sind für die Bearbeitung der beiden Bereiche unterschiedliche Diagonalverhältnisse einzustellen. Während der Verlauf des Kotaktpunkts (53 bzw. 53') den Bereich 52 überstreicht, kann das Diagonalverhältnis frei gewählt werden. Um die Modifikation abweichnungsfrei herstellen zu können, müssen die Geraden 53 und 53' auf gleicher Höhe liegen oder 53 über 53'. Liegt jedoch 53' über 53 so verläuft der Kontaktpunkt sowohl über den Bereich 51 als auch über den Bereich 51', für welche unterschiedliche Diagonalverhältnisse einzustellen sind. Dies führt zu einer Abweichung auf mindestens einem der beiden Bereiche. Wird zweiflankig geschliffen, ist auch hier eine Betrachtung beider Flanken nötig. Soll abweichungsfrei geschliffen werden, so ist darauf zu achten, dass die auf beiden Seiten gleichzeitig geschliffenen Bereiche dasselbe Diagonalverhältnis erfordern. Ist dies nicht der Fall, so wird die Modifikation mit Abweichungen erzeugt.

Es ist jedoch auch möglich, das Diagonalverhältnis gezielt zu verändern, während der Kontaktpfad auf dem Werkstück modifizierte Bereiche überstreicht. Um dies mathematisch zu beschreiben, wird Gleichung (12) durch eine, im Allgemeinen nicht lineare Variante ersetzt:

$$z_{V1}(z_{V2}) = F_{Z_{V1}}(z_{V2}) \qquad\qquad (81)$$

Hierbei ist $F_{Z_{V1}}$ eine beliebige stetige Funktion, welche eine Relation zwischen $z_{V1}$ und $z_{V2}$ beschreibt. Das Diagonalverhältnis ist durch die Ableitung von $F_{Z_{V1}}(Z_{V2})$ nach $z_{V2}$ gegeben und somit im Allgemeinen nicht konstant. Ist $F_{Z_{V1}}$ nicht linear, so werden Geraden auf der Schnecke im $w$-$z$-Diagramm nicht mehr auf Geraden auf dem Werkstück im $w$-$z$-Diagramm abgebildet. Die Kurve, welche den Verlauf der Punkte im $w$-$z$-Diagramm auf dem Werkstück beschreibt, welche auf eine durch $X_{F1}$ definierte Gerade auf der Schnecke abgebildet werden, kann durch eine Funktion $z_{F2}(w_{F2}, X_{F1})$ beschrieben werden. Für den allgemeinsten Fall eines konischen Werkstücks und einer konischen Schnecke, erhält man eine Relation (R20) zwischen $F_{Z_{V1}}(z_{V2})$, $z_{F2}(w_{F2}, X_{F1})$, $w_{F2}$ und $X_{F1}$, indem man das Gleichungssystem aus Gleichung (63) und (64) nach $z_{V1}$ und $z_{V2}$ auflöst, die beiden Vorschübe in Gleichung (81) einsetzt und anschließend $z_{F1}$ und $w_{F1}$ mit Hilfe der Gleichungen (13) und (73) ersetzt. Mit dieser Relation lässt sich für eine gegebene Funktion $F_{Z_{V1}}$ für jedes $X_{F1}$ der durch $z_{F2}(w_{F2}, X_{F1})$ beschriebene Verlauf der Punkte auf der Werkstückflanke, welche auf die durch $X_{F1}$ definierte Gerade auf der Schnecke abgebildet werden, bestimmen. Umgekehrt kann auch aus einem für ein $X_{F1}$

gegebenem Verlauf $z_{F2}(w_{F2}, X_{F1})$ die Funktion $F_{zV1}(z_{V2})$ bestimmt werden. Des Weiteren kann aus der Relation (R20) eine Funktion $F_{X_{F1}}(w_{F2}, z_{F2})$ bestimmt werden, mit der für gegebene $z_{F2}$ und $w_{F2}$ $X_{F1}$ und somit die Gerade auf der Schnecke auf die der Punkt auf der Verzahnung abgebildet wird, bestimmt werden. Für die Fälle in denen Werkstück und/oder Schnecke zylindrisch sind, kann analog verfahren werden.

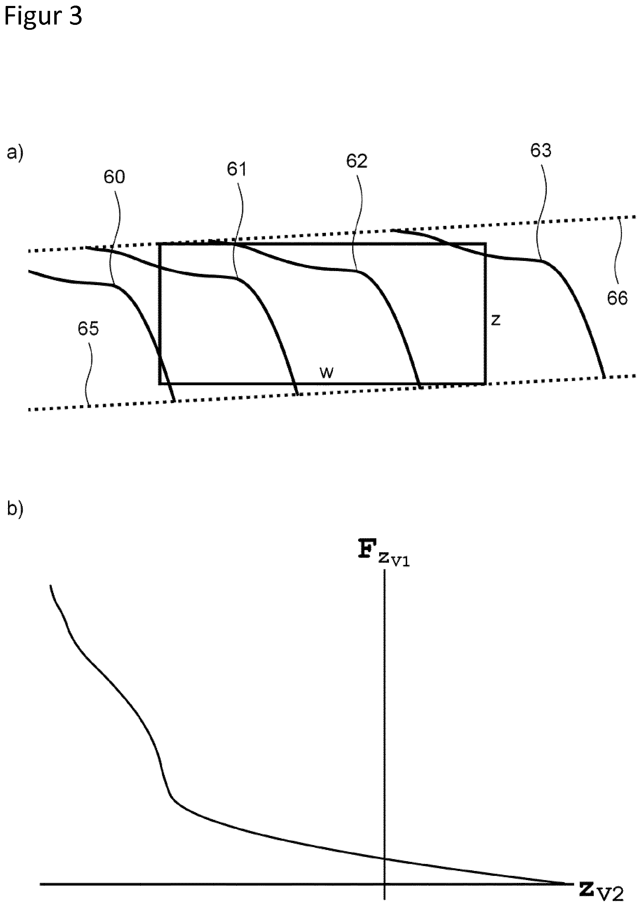

Wird für ein $X_{F1}$ nur der Teil des Verlaufs betrachtet, welcher auf der Flanke, d.h. innerhalb des $w$-$z$-Diagramms liegt, so definiert dies im Allgemeinen die Funktion $F_{zV1}(z_{V2})$ nicht für alle Werte von $z_{V2}$, da für andere Vorschubpositionen des Werkstücks, Teile des dann aktuellen Verlaufs die Flanke überstreichen, welche für $X_{F1}$ noch außerhalb des Diagramms lagen. Figur 3a zeigt dies beispielhaft für ein zylindrisches Werkstück. Dies kann genutzt werden, um $F_{zV1}(z_{V2})$ abschnittsweise aus den Verläufen für verschiedene $X_{F1}$ zusammenzusetzten, bzw. den Definitionsbereich zu erweitern. Alternativ ist es auch möglich, $F_{zV1}(z_{V2})$ aus einem Verlauf für ein $X_{F1}$, welcher über die Grenzen des $w$-$z$-Diagramm hinaus fortgesetzt wurde zu bestimmen. Diese Verlauf wird vorteilhafterweise soweit fortgesetzt, dass jeder Teil des $w$-$z$-Diagramme von dem Verlauf überstrichen wird. Figur 3a zeigt wie ein solcher Verlauf gewählt werden kann. In diesem Beispiel kann die Funktion $F_{zV1}(z_{V2})$ dann aus einem der vier Verläufe 60-63 bestimmt werden.

Insbesondere wenn $F_{zV1}(z_{V2})$ aus der Fortsetzung eines Verlaufs für ein $X_{F1}$ bestimmt werden soll, so ist es von besonderer Bedeutung zu wissen, wie sich der Verlauf von einem $X_{F1}$ zu einem anderen $X_{F1}$ verändert. Für den allgemeinen Fall berechnet sich dies durch die Schritte:

- Berechnen von $F_{zV1}(z_{V2})$ aus dem Verlauf für ein $X_{F1}$
- Berechnen des Verlauf für ein anderes $X_{F1}$ aus dem zuvor bestimmten $F_{zV1}(z_{V2})$

Ist die Verzahnung zylindrisch, so ergibt diese Berechnung, dass sich ein Verlauf $X_{F1}$ aus dem Verlauf durch für ein anderes $X_{F1}$ durch Verschieben entlang einer ausgezeichneten Richtung ergibt. In Figur 3 ist diese Richtung durch die beiden parallelen Geraden 65 und 66 dargestellt. Ist die Schnecke zylindrisch, so ist die Richtung dieser Geraden unabhängig von der Geometrie der Schnecke und hängt somit nur von der Geometrie des Werkstücks ab. Um die Richtung dieser Geraden zu beeinflussen und somit die erzeugten Modifikationen noch variabler zu gestalten, können konische Schnecken eingesetzt. Über die Geometrie der konischen Schnecke ($r_{bF1}$ bzw. $\beta_{bF1}$) und Achskreuzwinkel und Achsabstand, insbesondere des Konuswinkels kann diese Richtung beeinflusst werden.

Ist die Verzahnung konisch, kann die Änderung des Verlaufs von einem $X_{F1}$ zu einem anderen, sowohl für konische als auch für zylindrische Schnecken über die Geometrie der Schnecke ($r_{bF1}$ bzw. $\beta_{bf1}$, $\vartheta_1$) und Achskreuzwinkel beeinflusst werden. Der Zusammenhang lässt sich in dem Fall jedoch nicht mehr leicht anschaulich beschreiben und muss durch die oben beschriebenen Schritte ermittelt werden.

Wird einflankig Wälzgeschliffen, so kann $F_{zV1}(z_{V2})$ und somit der Verlauf für jede Flanke separat vorgegeben werden.

Wird zweiflankig Wälzgeschliffen, so beeinflusst ein $F_{zV1}(z_{V2})$ die Verläufe auf beiden Flanken. Wird der Verlauf auf einer Flanke 1 vorgegeben, so kann der sich daraus ergebende Verlauf auf der anderen Flanke 2 bestimmt werden durch die Schritte:

- Berechnen von $F_{zV1}(z_{V2})$ aus dem Verlauf von Flanke 1
- Berechnen des Verlaufs von Flanke 2 aus $F_{zV1}(z_{V2})$

Ist der Verlauf auf einer Flanke 1 vorgeben, so wird der sich daraus ergebende Verlauf auf Flanke 2 beeinflusst durch die Geometrie der Schnecke ($r_{bF1}$ bzw. $\beta_{bf1}$, $\vartheta_1$) und Achskreuzwinkel und Achsabstand. Diese Beeinflussung kann genutzt werden, um $F_{zV1}(z_{V2})$, die Geometrie der Schnecke und Achskreuzwinkel und Achsabstand so abzustimmen, dass die Verläufe auf beiden Flanken möglichst gut den Soll-Verläufen entsprechen.

Hat die Schnecke eine Modifikation gemäß Gleichung (1), so ist der Wert der Modifikation auf dem Werkstück entlang eines Verlaufs $z_{F2}(w_{F2}, X_{F1})$ gleich :

$$-\frac{\cos \beta_{bF1}}{\cos \beta_{bF2}} \cdot F_{Ft1}(X_{F1}) \tag{82}$$

Sind die Werte der Modifikation für alle Verläufe auf dem Werkstück bekannt, so ergibt sich daraus die Funktion $F_{Ft1}(X_{F1})$, welche die Modifikation auf der Schnecke definiert. Parametrisiert über $w_{F2}$ und $z_{F2}$ kann die Modifikation $f_{Ft2}(w_{F2}, z_{F2})$ auf dem Werkstück geschrieben werden als:

$$f_{Ft2}(w_{F2}, z_{F2}) = -\frac{\cos \beta_{bF1}}{\cos \beta_{bF2}} \cdot F_{Ft1}(F_{X_{F1}}(w_{F2}, z_{F2})) \tag{83}$$

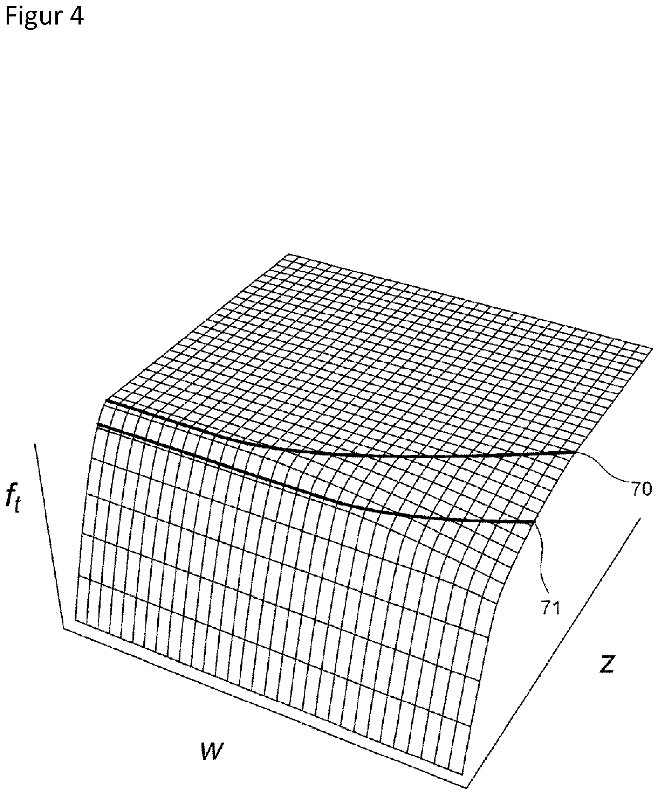

Ein konkretes Anwendungsbeispiel ist in Figur 4 gezeigt. Die Modifikation ist so gewählt, dass sie die Kombination aus einer Dreiecksförmigen Endrücknahme und einer Endrücknahme in Flankenlinienrichtung annähert. Der Übergang zwischen dem Beginn der beiden Rücknahmen ist hier beispielhaft tangential gewählt, wodurch der Verlauf 70 durch eine differenzierbare Kurve gegeben ist. Der Wert der Modifikation entlang 70 ist hier gleich 0 gewählt. Der Wert der Modifikation fällt in Richtung des Verlaufs 71 ab. Da der Abstand zwischen 70 und 71 im Bereich der Endrücknahme in Flankenlinienrichtung kleiner ist, als der Abstand zwischen 70 und 71 im Bereich der Dreiecksförmigen Endrücknahme, ist die Steigung der Modifikation im Bereich der Endrücknahme in Flankenlinienrichtung größer, als im Bereich der Dreiecksförmigen Endrücknahme. Das Verhältnis dieser beiden Steigungen wird maßgeblich durch die Richtung der Verschiebung der Verläufe (75 bzw. 76) beeinflusst. Diese Richtung kann durch die Verwendung konischer Schnecken und durch Wahl einer geeigneten Geometrie der Schnecke angepasst werden. Somit kann auch das Verhältnis zwischen den Steigungen wie gewünscht eingestellt werden.

**Überlagerung mit anderen Modifikationen**

Den mit dem hier beschriebenen Verfahren herstellbaren Modifikationen lassen sich ungestört Modifikationen additiv überlagern, die aus dem Stand der Technik bekannt sind. Zum einen sind das reine Profilmodifikationen. Solche Modifikationen $f_{PFt}$, welche für linke und rechte Flanke separat vorgegeben werden können, hängen nur vom Wälzweg und nicht von der z-Position ab. Mathematisch beschrieben werden können sie durch folgende Gleichung:

$$f_{PFt} = f_{PFt}(w_F) \tag{84}$$

Reine Profilmodifikationen lassen sich durch ein in Profillinienrichtung modifiziertes Werkzeug realisieren. Solche Modifikationen in Profillinienrichtung lassen sich ungestört mit den Modifikationen aus Gleichung (1) additiv überlagern. Beim Wälzschleifen mit abrichtbaren Schnecken wird diese Modifikation in der Regel in den Abrichter gelegt. Der Abrichtprozess kann dann unverändert durchgeführt werden und die Profilmodifikationen bilden sich, wie gewünscht auf der Schnecke und später beim Schleifen auf dem Werkstück ab.

Eine weitere, aus dem Stand der Technik [DE10208531] bekannte Methode, Modifikationen auf Verzahnungen zu erzeugen, besteht darin, die Kinematik während des Schleifprozesses zu korrigieren. Solche Modifikationen lassen sich beispielsweise durch Änderung des Achsabstandes und/oder Korrektur der Drehwinkel und/oder durch Korrektur der Vorschübe realisieren. Solche Korrekturen wirken sich immer entlang des Kontaktpfads aus und haben entlang diesem den gleichen Wert. Die mit dieser Methode erzeugbaren Modifikationen können somit auch durch Gleichung (1) beschreiben werden. Die durch $\rho_{KF}$ gegebene Richtung kann bei diesem Verfahren jedoch nicht beeinflusst werden, da diese nur vom Grundschrägungswinkel des Werkstücks abhängig ist. Mathematisch lässt sich diese Modifikation $f_{KFt}$ wie folgt beschreiben:

$$f_{KFt}(w_F, z_F) = F_{KFt}(w_F \tan \rho_{KF} + z_F) \tag{85}$$

Hierbei können die Funktionen $F_{KFt}$ beliebige stetige Funktionen sein. Aus den Funktionen $F_{KFt}$ für linke und rechte Flanke lassen sich die nötigen Korrekturen der Schleifkinematik berechnen. Mit diesem Verfahren lassen sich beispielsweise natürlich verschränkte Balligkeiten oder auch verzerrte Endrücknahmen herstellen.

Da bei dem dieser Anmeldung zugrunde liegenden Erfindung keine Korrektur der Schleifkinematik nötig ist, abgesehen vom Diagonalshiften, kann eine Korrektur der Schleifkinematik und somit eine Modifikation gemäß Gleichung (85) störungsfrei additiv überlagert werden.

Zusammengefasst lassen sich die herstellbaren Modifikationen $f_{GFt}$ wie folgt beschreiben:

$$f_{GFt}(w_F, z_F) = F_{Ft}(w_F \tan \rho_F + z_F) + f_{PFt}(w_F) + F_{KFt}(w_F \tan \rho_{KF} + z_F) \tag{86}$$

wobei $F_{Ft}$, $f_{PFt}$ und $F_{KFt}$ für beide Flanken freivorgebbare stetige Funktionen sind und die Winkel $\rho_F$ für beide Flanke freivorgebbare Richtungen definieren. Möglich sind insbesondere auch die Spezialfälle, bei denen mindestens eine der Funktionen $F_{Ft}$, $f_{PFt}$ und $F_{KFt}$ konstant, insbesondere 0 ist.

Ist eine Modifikation $f_F$ gegeben, kann diese im Allgemeinen näherungsweise, in Einzelfällen auch exakt beispielsweise mit Hilfe einer Ausgleichsrechnung in die drei Terme aus Gleichung (86) zerlegt werden. Dazu werden die Funktionen $F_{Ft}$, $f_{PFt}$ und $F_{KFt}$ und die Richtungen $\rho_F$ so bestimmt, dass die Abweichungen zwischen $f_{GFT}$ und $f_F$ optimal, insbesondere minimal ist. Diese Abweichung kann beispielsweise an diskreten Punkten ($w_{Fi}$, $z_{Fi}$) oder kontinuierlich über das ganze w-z-Diagramm berechnet werden. Die kontinuierliche Berechnung der Abweichung kann beispielsweise mit Hilfe eines Integrals einer Abstandsfunktion über alle Werte von w und z durchgeführt werden. Möglich ist es auch, die Abweichungen abhängig von der Position der Punkte in einem *w-z*-Diagramm gewichtet zu berechnet. Dies ist insbesondere dann von Vorteil, wenn die einzuhaltende Toleranz nicht überall gleich ist. Um diesen Vorgaben Rechnung zu tragen, ist es als Erweiterung auch möglich, die für die Ausgleichsrechnung verwende Abstandsfunktion nicht für alle Werte von $w_F$ und $z_F$ gleich zu wählen. Eine typische Variante der Ausgleichsrechnung ist die Methode der kleinsten Quadrate, welche als Abstandsfunktion die 2-Norm verwendet.

Die gewünschte Modifikation kann beispielsweise durch eine stetige Funktion $f_F$, durch eine Punktewolke $(w_{Fj}, z_{Fj}, f_{Fj})$ oder eine Kombination aus beidem gegeben sein. Die Funktionen $F_{Ft}$, $f_{PFt}$ und $F_{KFt}$ können mit Hilfe der Ausgleichrechnung als stetige Funktionen berechnet werden. Alternativ ist es auch möglich, die Funktionswerte nur an diskreten Punkten $(w_{Fk}, z_{Fk})$ zu berechnen. Aus diesen diskreten Punkten lassen sich durch Interpolation stetige Funktionen berechnen.

In der Ausgleichsrechnung können optional zusätzlich auch technologische Gesichtspunkte berücksichtig werden. So kann es beispielsweise von Vorteil sein, aus technologischen Gründen die Diagonalverhältnisse und somit die Richtungen $\rho_F$ einzuschränken. Im Allgemeinen kann die in der Ausgleichsrechnung verwendete und zu minimierende Abstandsfunktion, neben der Abweichung zwischen $f_{GFt}$ und $f_F$ auch von technologischen Größen abhängen: Wird das Verfahren mit nicht konstantem Diagonalverhältnis angewendet, so muss Gleichung (86) dahingehend modifiziert werden, dass $F_{Ft}$ durch eine Modifikation gemäß Gleichung (83) zu ersetzten ist. Soll durch eine Ausgleichsrechnung eine gegeben Modifikation durch eine so zusammengesetzte Modifikation angenähert bzw. exakt in eine solche zerlegt werden, können die Funktionen $F_{Ft1}$, $F_{ZV1}$, $f_{PFt}$ und $F_{KFt}$ und Makrogeometrie der Schnecke, insbesondere Konuswinkel und Profilwinkel so bestimmt werden, dass der Abstand zur Sollmodifikation minimal wird. Wird die Option des Schleifens mit einer konischen Schnecke in Betracht gezogen, so können zusätzlich die Geometrie der Schnecke, insbesondere Konuswinkel und die Profilwinkel der erzeugenden Zahnstange, sowie der Achskreuzwinkel bei der Ausgleichsrechnung mit optimiert werden. Dies ist insbesondere dann besonders hilfreich, wenn zweiflankig geschliffen werden soll. In diesem Fall ist die Funktion $F_{ZV1}$ für linke und rechte Flanke gleich. Die Funktionen $F_{Ft1}$, $f_{PFt}$ und $F_{KFt}$ sind für linke und rechte Flanke, sowohl beim einflankigen aus auch beim zweiflankigen Schleifen im Allgemeinen verschieden.

**Aufteilung des Werkzeugs**

Die Bearbeitung der Verzahnungen erfolgt häufig in Schrupp- und Schlichtschnitten. Diese unterschiedlichen Bearbeitungsschritte können sowohl mit denselben Bereichen auf dem Werkzeug als auch mit verschiedenen Bereichen oder mit verschiedenen Werkzeugen durchgeführt werden. Die Schruppschnitte können alle oder teilweise mit dem hier beschriebenen Verfahren durchgeführt werden. Es jedoch auch möglich, für die Schruppschnitte andere Verfahren, insbesondere das Axialschleifen mit Diagonalverhältnis Null oder einem sehr kleinen, technologisch bedingten Diagonalverhältnis durchzuführen. Eine solche Schruppbearbeitung erlaubt es, den oder die Schruppbereiche auf der Schnecke besser auszunutzen, erzeugt jedoch nicht die gewünschte Modifikation auf der Verzahnung. Wird beim Schruppen bereits das hier beschriebene Verfahren eingesetzt, ist das Aufmaß zu Beginn der Schlichtbearbeitung gleichmäßiger verteilt und der Schlichtbereich wird gleichmäßiger belastet. Möglich ist es auch, bei der Schruppbearbeitung das hier beschriebene Verfahren zu verwenden, jedoch die Modifikation betragsmäßig kleiner zu wählen im Vergleich zur Schlichtbearbeitung, um die Schnecke an den Bereichen des Schruppbereichs, die viel Material abtragen müssen, nicht zu überlasten. Werden mehrere Schruppschnitte durchgeführt, kann der Betrag der Modifikation von Schnitt zu Schnitt erhöht werden. Möglich ist es auch, beim Schruppen die auf der Verzahnung erzeugte Modifikation nur anzunähern, insbesondere die durch $\rho_F$ gegebene Richtung, um dadurch den Arbeitsbereich zu verlängern oder zu verkürzen, um so die Schnecke aus technologischen Gesichtspunkten optimiert aufzuteilen. Schrupp- und Schlichtbereiche können, sowohl bei zylindrischen als auch bei konischen Schnecken, beliebig über die Schneckenbreite platziert werden.

**Übertragbarkeit auf andere Fertigungsverfahren**

Bisher wurde das der Erfindung zugrunde liegende Verfahren am Beispiel des Wälzschleifens mit abrichtbaren Werkzeugen und Abrichten mittels einer Profilrolle beschrieben. Es können aber ebenso nicht abrichtbare Werkzeuge verwendet werden, solange diese eine Modifikation gemäß Gleichung (1) aufweisen. Je nach Herstellverfahren, mit dem diese nichtabrichtbaren Werkzeuge hergestellt werden, ist es möglich, die durch $\rho_F$ gegebene Richtung konstanter Modifikation frei oder zumindest in gewissen Grenzen frei zu wählen, womit sich wiederum das Diagonalverhältnis beim Wälzschleifen und somit auch der Arbeitsbereich beeinflussen lassen. Diese freie Wahl von $\rho_F$ ist auch beim Zeilenabrichten des Werkzeuges möglich.

Das Verfahren kann auch bei anderen Fertigungsverfahren eingesetzt werden, die ein verzahntes Werkzeug und die Kinematik eines Schraubwälzgetriebes nutzen und einen Vorschub des Werkzeugs erlauben. Diese weiteren Fertigungsverfahren sind beispielsweise Wälzfräsen, Schälwälzfräsen, Schaben und Honen. Die Werkzeuge müssen dabei ebenfalls eine Modifikation gemäß Gleichung (1) aufweisen. Je nach Fertigungsverfahren des Werkzeugs, ist auch hier eine freie Wahl von $\rho_F$ auf dem Werkzeug möglich.

**Anwendungsbeispiele**

Im Folgenden werden einige Anwendungsbeispiele beschrieben, an denen auch der Vorteil der hier beschriebenen Erfindung gegenüber dem Stand der Technik aufgezeigt wird.

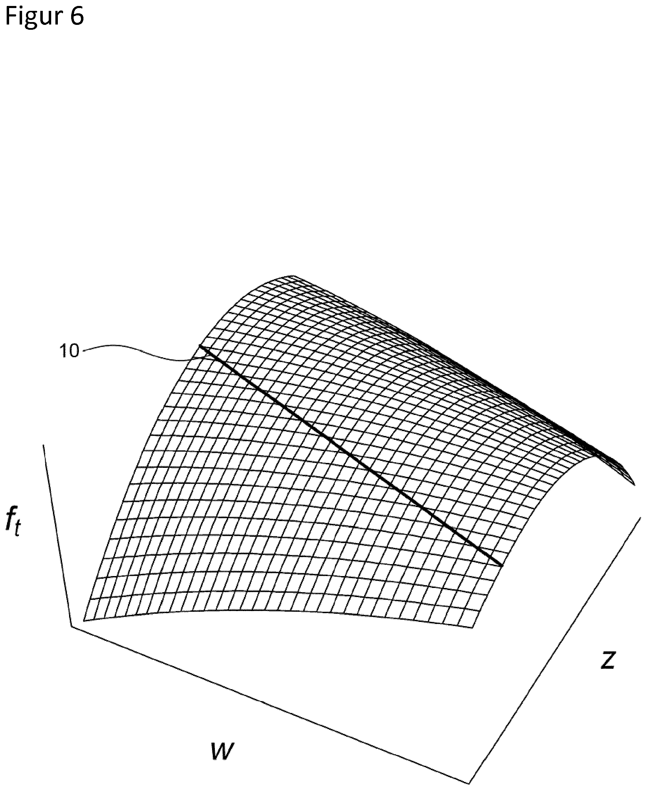

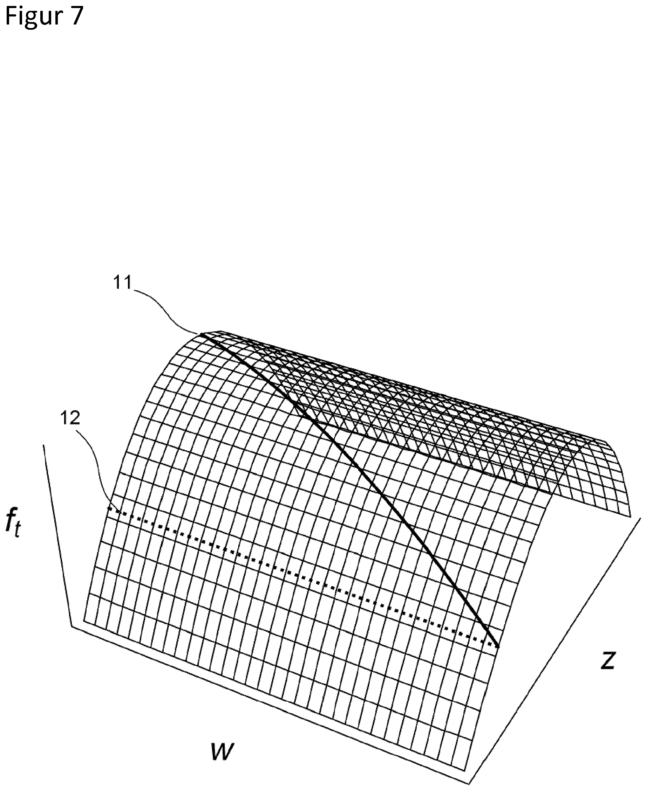

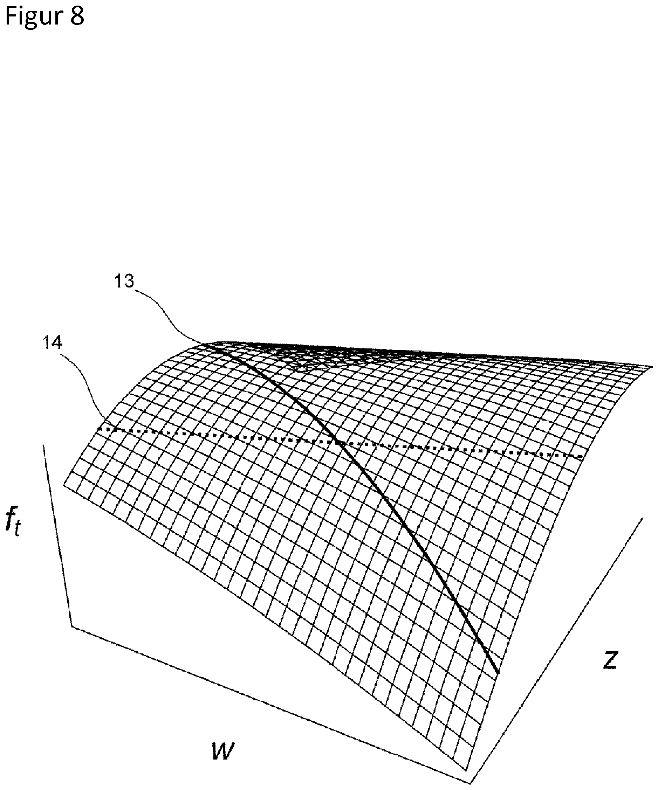

Figur 6 zeigt eine natürlich verschränkte Flankenlinienballigkeit, wie diese durch eine reine Korrektur der Schleifkinematik erzeugt werden kann. Die Richtung, entlang der die erzeugte Modifikation konstant ist, ist durch den Kontaktpfad 10 gegeben. Mit dem hier beschriebenen Verfahren, kann diese Richtung jedoch frei gewählt werden. Um eine reine, nicht verzerrte Flankenlinienballigkeit zu erzeugen, wird, wie in Figur 7 gezeigt, die Richtung so gewählt, dass die Linie mit konstanter Modifikation 12 parallel zur w-Achse verläuft. Die entlang des Kontaktpfads 11 erzeugte Modifikation hat keinen konstanten Wert. Die Richtung konstanter Modifikation kann jedoch auch beliebig gewählt werden, sodass eine, wie in Figur 8 gezeigte, in eine gezielte Richtung laufende Balligkeit erzeugt werden kann. Solche Balligkeiten erzeugen eine gezielte Verschränkung und sind, wie nicht verschränkte Flankenlinienballigkeiten, frei von Formabweichungen.

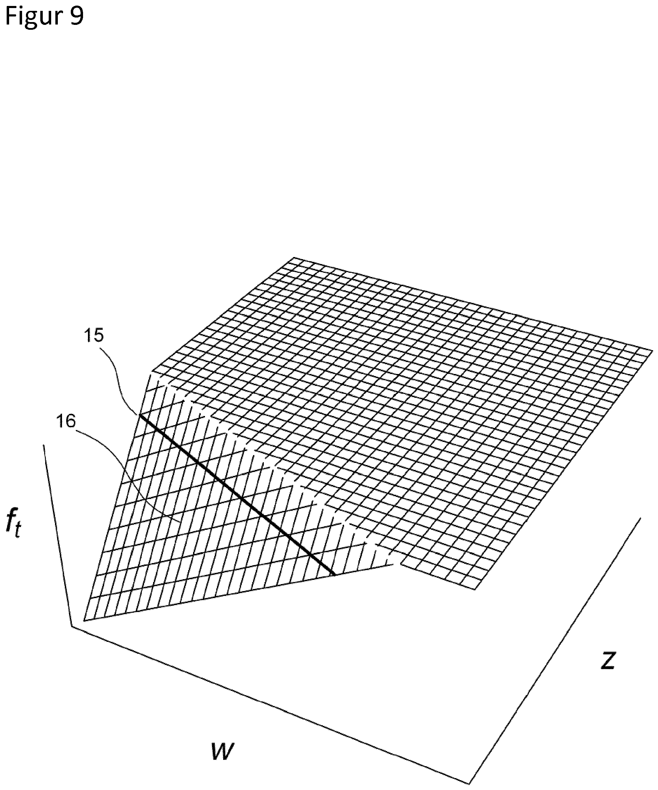

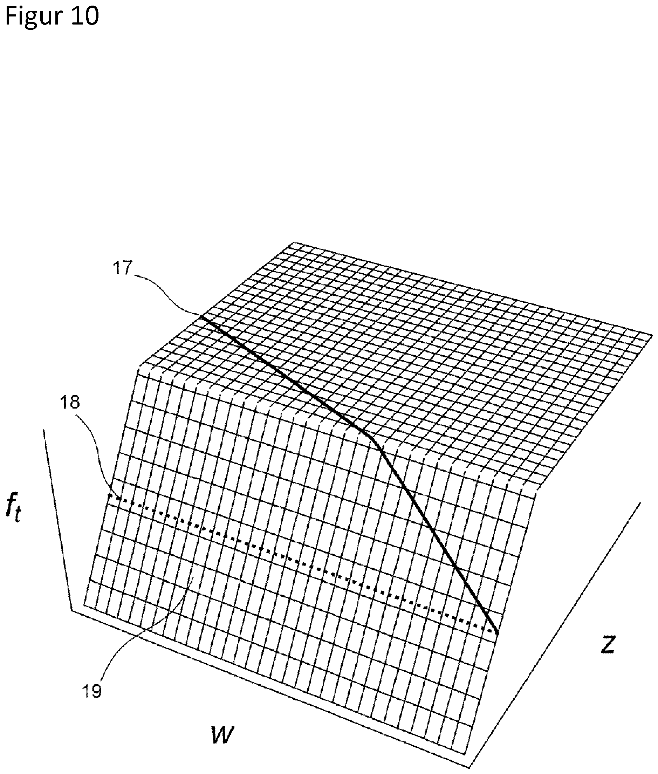

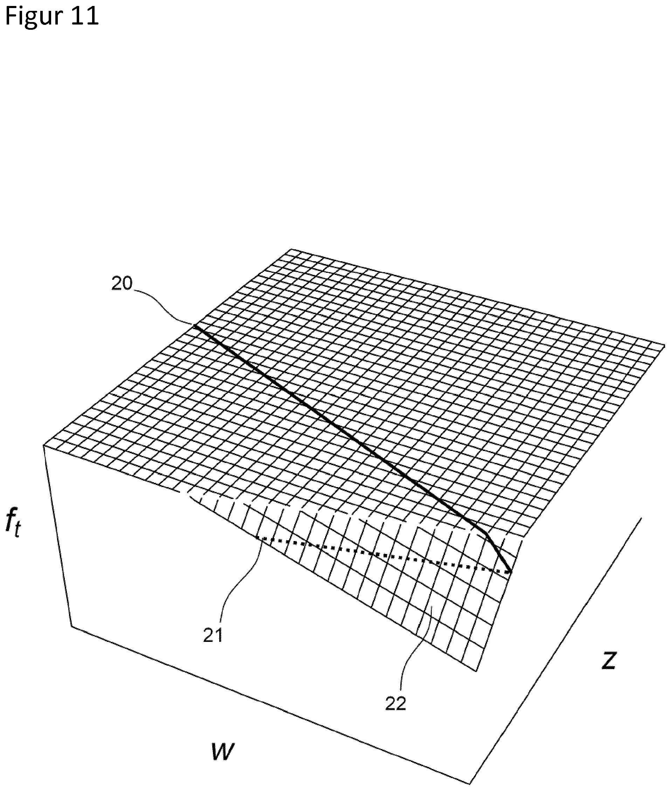

Ein weiteres Anwendungsbeispiel sind Endrücknahmen. Diese können gemäß dem Stand der Technik nur in verzerrter Form 16, wie in Figur 9 gezeigt, durch korrigierte Schleifkinematik gefertigt werden. Die Linie konstanter Modifikation verläuft entlang des Kontaktpfads 15. Gewünscht ist jedoch ein Verlauf dieser Linie parallel zur w-Achse, wie 18 in Figur 10 zeigt, was mit dem hier beschriebenen Verfahren möglich gemacht wird. Dies führt zu einer nicht verzerrten Endrücknahme 19. Eine Variation der Endrücknahmen sind dreieckförmige Endrücknahmen 22, wie in Figur 11 gezeigt. Die Linie konstanter Modifikation 21 verläuft hier in einer gezielt vorgegebenen Richtung, typischerweise parallel zur Eingriffslinie der Verzahnung. Die hier dargestellten Endrücknahmen und dreiecksförmigen Endrücknahmen haben lineare Verläufe ohne Übergangsbereiche. Möglich sind hier jedoch auch beispielsweise kreisförmige, logarithmische, parabelförmige und exponentielle Verläufe, mit und ohne Übergangsbereich oder auch jede andere Form des Verlaufs.

**Patentansprüche**

1. Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges,

    wobei eine gezielte Modifikation der Oberflächengeometrie des Werkzeuges erzeugt wird, welche im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist, wobei die Modifikation des Werkzeuges durch das Diagonalwälzverfahren eine entsprechende Modifikation auf der Oberfläche des Werkstückes erzeugt,
    **dadurch gekennzeichnet,**
    **dass** die gezielte Modifikation auf der Oberfläche des Werkstückes eine gerichtete Balligkeit ohne Formabweichungen ist, wobei eine vorgegebene Richtung der Balligkeit durch eine entsprechende Wahl der ersten bzw. zweiten Richtung der Modifikation auf dem Werkzeug und des Diagonalverhältnisses erreicht wird.

2. Verfahren nach Anspruch 1, wobei die Balligkeit verschränkungsfrei ist oder wobei die Balligkeit eine Verschränkung mit einer frei vorgegebenen Richtung auf der Zahnflanke aufweist, wobei die Richtung der Verschränkung vorteilhafterweise so gewählt wird, dass die Linien konstanter Modifikation mit einem Winkel kleiner 60°, vorteilhafterweise kleiner 30°, weiter vorteilhafterweise kleiner 10°, weiter bevorzugt parallel zur Eingriffslinie der Verzahnung verlaufen, und/oder wobei die Balligkeit ausschließlich über die Modifikation des Werkzeuges und ohne einer Modifikation der Maschinenkinematik bei der Bearbeitung des Werkstückes erzeugt wird, und/oder wobei die Balligkeit kreisförmig oder parabelförmig oder logarithmisch ist oder aus mehreren kreis-, parabel- oder logarithmisch-förmigen Segmenten zusammengesetzt ist.

3. Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges,

    wobei eine gezielte Modifikation der Oberflächengeometrie des Werkzeuges erzeugt wird, welche im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist,

wobei die Modifikation des Werkzeuges durch das Diagonalwälzverfahren eine entsprechende Modifikation auf der Oberfläche des Werkstückes erzeugt,

**dadurch gekennzeichnet,**

**dass** die gezielte Modifikation eine reine Flankenlinienmodifikation darstellt, wobei die erste bzw. zweite Richtung der Modifikation des Werkzeuges und das Diagonalverhältnis so gewählt werden, dass die erste Richtung auf Stirnschnittebenen des Werkstückes abgebildet wird.

4. Verfahren nach Anspruch 3, wobei die Flankenlinienmodifikation zumindest innerhalb bestimmter Randbedingungen frei vorgegeben wird, wobei die Flankenlinienmodifikation bevorzugt als eine Funktion $F_{Ft2}$ vorgegeben wird, und/oder die Position des Abrichters zum Werkzeug beim Abrichten in Abhängigkeit von dem Werkzeugdrehwinkel und/oder der Werkzeugbreitenposition gemäß einer Funktion $F_{Ft1}$ variiert wird.

5. Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges,

   wobei eine gezielte Modifikation der Oberflächengeometrie des Werkzeuges erzeugt wird, welche im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist, wobei die Modifikation des Werkzeuges durch das Diagonalwälzverfahren eine entsprechende Modifikation auf der Oberfläche des Werkstückes erzeugt,

   **dadurch gekennzeichnet,**

   **dass** die gezielte Modifikation eine Endrücknahme ist, wobei die erste bzw. zweite Richtung der Modifikation des Werkzeuges und das Diagonalverhältnis in Abhängigkeit von der gewünschten Richtung der Endrücknahme gewählt werden.

6. Verfahren nach Anspruch 5, wobei die Linien konstanter Modifikation mit einem Winkel kleiner 60°, vorteilhafterweise kleiner 30°, weiter vorteilhafterweise kleiner 10°, weiter bevorzugt parallel zur Eingriffslinie der Verzahnung verlaufen und/oder wobei die Endrücknahme eine Dreiecksrücknahme ist, wobei die Linien konstanter Modifikation in einem Winkel $\alpha$ ungleich null mit der Zahnkante aufweisen.

7. Verfahren nach einem der Ansprüche 5 oder 6, wobei der Verlauf der Endrücknahme senkrecht zu den Linien konstanter Modifikation planar, parabelförmig, teilkreisförmig, logarithmisch, exponentiell oder elliptisch ist oder abschnittsweise aus solchen Formen besteht oder abschnittsweise solche Formen sowie Übergangsbereiche umfasst, welche bevorzugt einen tangentialen Übergang bereitstellen, wobei der Verlauf der Endrücknahme senkrecht zu den Linien konstanter Modifikation insbesondere in einem ersten Abschnitt planar sein kann und in einem Übergangsbereich in einen unmodifizierten Abschnitt oder einen Abschnitt mit einer anderen Modifikation übergeht.

8. Verfahren nach einem der Ansprüche 5 bis 7, wobei an Ober- und Unterkante unterschiedliche Endrücknahmen vorgesehen sind, und insbesondere Endrücknahmen mit unterschiedlichen Verläufen der Linien konstanter Modifikation, wobei zur Bearbeitung der beiden Endrücknahmen mit unterschiedlichen Diagonalverhältnissen gearbeitet wird, und/oder wobei das Werkzeug mindestens einen modifizierten und einen unmodifizierten Bereich und/oder mindestens zwei Bereiche mit unterschiedlichen Modifikationen, insbesondere mit Modifikationen mit unterschiedlicher Ausrichtung und insbesondere unterschiedlicher erster Richtung, und/oder zwei modifizierte Bereiche, zwischen welchen ein unmodifizierter Bereich liegt, aufweist, wobei bevorzugt in mindestens zwei Bereichen mit unterschiedlichen Diagonalverhältnissen gearbeitet wird.

9. Verfahren nach einem der vorangegangenen Ansprüche, wobei die gewünschte Modifikation der Oberflächengeometrie des Werkstückes auf der Zahnradflanke im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist,

   und die zur Herstellung dieser Modifikation der Oberflächengeometrie des Werkstückes verwendete Modifikation der Oberflächengeometrie des Werkzeuges im Wälzbild zumindest lokal in einer ersten Richtung des Werkzeuges einen konstanten Wert aufweist und weiterhin bevorzugt in einer zweiten Richtung des Werkzeuges, welche senkrecht zur ersten Richtung verläuft, durch die gleiche, gegebenenfalls linear um einen Faktor gestauchte Funktion $F_{Ft1}$ gegeben ist, wobei die Makrogeometrie des Werkzeuges und/oder die Eingrifflinie des Abrichtwerkzeuges und/oder das Diagonalverhältnis und/oder der Stauchungsfaktor so gewählt werden, dass die Modifikation des Werkzeuges entlang einer ersten Linie, auf welcher sich der Berührpunkt bei der Bearbeitung des Werkstückes auf dem Werkzeug bewegt, der gewünschten Modifikation des Werkstückes entlang einer zweiten Linie, auf welcher sich der Berührpunkt auf dem Werkstück bewegt, entspricht.

10. Verfahren nach einem der vorangegangenen Ansprüche, wobei die gezielte Modifikation der Oberflächengeometrie des Werkzeuges erzeugt wird, indem die Position des Abrichters zum Werkzeug beim Abrichten in Abhängigkeit von dem Werkzeugdrehwinkel und/oder der Werkzeugbreitenposition variiert wird, und/oder wobei die gezielte Modifikation der Oberflächengeometrie des Werkzeuges durch eine Veränderung der Maschinenkinematik während des Abrichtprozesses in Abhängigkeit von dem Werkzeugdrehwinkel und/oder der Werkzeugbreitenposition erzeugt wird, insbesondere dadurch, dass eine oder mehrere der folgenden Korrekturen der Achsbewegungen zur herkömmlichen Abrichtkinematik vorgenommen werden:

a) Variation des Achsabstandes des Abrichters zum Werkzeug in Abhängigkeit des Werkzeugdrehwinkels oder der Werkzeugbreite (Zustellung)
b) Variation des Axialvorschubs des Werkzeugs bzw. des Abrichters in Abhängigkeit des Werkzeugdrehwinkels oder der Werkzeugbreite (Shiften)
c) Variation des Achskreuzwinkels des Werkzeuges und des Abrichters in Abhängigkeit des Werkzeugdrehwinkels oder der Werkzeugbreite (Schwenken)
d) Variation der Werkzeugdrehzahl in Abhängigkeit des Werkzeugdrehwinkels oder der Werkzeugbreite.

11. Verzahnmaschine mit einer Ansteuerungsfunktion, welche ausgebildet ist, im Rahmen der Bearbeitung eines Werkstückes die gezielte Modifikation durch Durchführung des Verfahrens nach einem der Ansprüche 1 bis 10 zu erzeugen, wobei die Verzahnmaschine bevorzugt eine Eingabe- und/oder Berechnungsfunktion aufweist, über welche die Ausrichtung der Modifikation vorgebbar und/oder bestimmbar ist.

12. Verzahnmaschine nach Anspruch 11, wobei die Eingabefunktion die Eingabe einer gewünschten Modifikation erlaubt und die Berechnungsfunktion die zu deren Herstellung notwendigen Modifikationen und/oder die zur Erzeugung der Modifikationen benötigten Veränderungen der Maschinenkinematik während des Bearbeitungsprozesses und/oder ggf. während des Abrichtprozesses bestimmt, wobei bevorzugt eine Ansteuerungsfunktion vorgesehen ist, welche die Maschinenkinematik während des Bearbeitungsprozesses und/oder ggf. während des Abrichtprozesses entsprechend verändert.

13. Computersystem und/oder Softwareprogramm zur Bestimmung der zur Herstellung eines Werkstückes mit einer gewünschten Modifikation notwendigen Modifikationen des Werkzeuges und der notwendigen Bearbeitungsparameter bei der Durchführung eines Verfahrens nach einem der vorangegangenen Ansprüche, mit einer Funktion zur Eingabe einer gewünschten Modifikation und einer Berechnungsfunktion, welche aus den gewünschten Modifikationen des Werkstücks die zu deren Erzeugung benötigten Parameter des Bearbeitungsvorgangs des Werkstückes und die benötigte Modifikation des Werkzeugs bestimmt.

14. Computersystem und/oder Softwareprogramm nach Anspruch 13 mit einer Schnittstelle zur oder installierbar auf einer Verzahnmaschine, so dass durch das Computersystem und/oder Softwareprogramm die Veränderungen der Maschinenkinematik während des Abrichtprozesses und/oder die Parameter des Bearbeitungsvorgangs vorgebbar und/oder bestimmbar sind.

15. Verzahntes Werkstück, insbesondere Zahnrad, mit mindestens einer Endrücknahme, und/oder Getriebe mit einem oder mehreren verzahnten Werkstücken mit mindestens einer Modifikation, **dadurch gekennzeichnet, dass** die Modifikation im Wälzbild zumindest lokal in einer ersten Richtung einen konstanten Wert aufweist und in einer zweiten Richtung, welche senkrecht zur ersten Richtung verläuft, durch eine Funktion $F_{Ft2}$ gegeben ist, wobei an Ober- und Unterkante als Modifikation Endrücknahmen mit unterschiedlichen Verläufen der Linien konstanter Modifikation vorgesehen sind.

## Claims

1. Method for the production of a workpiece having a corrected gear tooth geometry and/or a modified surface structure by a diagonal generating method by means of a modified tool,

wherein a specific modification of the surface geometry of the tool is produced which has a constant value at least locally in the generating pattern in a first direction of the tool and is given by a function $F_{Ft1}$ in a second direction of the tool which extends perpendicular to the first direction,

wherein the modification of the tool by the diagonal generating method produces a corresponding modification on the surface of the workpiece,

**characterized in that**

the specific modification on the surface of the workpiece is a directed crowning without shape deviations, wherein a predefined direction of the crowning is achieved by a corresponding selection of the first or second directions of the modification on the tool and of the diagonal ratio.

2. Method in accordance with claim 1, wherein the crowning is free of twist or wherein the crowning has a twist with a freely predefined direction on the tooth flank, wherein the direction of the twist is advantageously selected such that the lines of constant modification extend at an angle less than 60°, advantageously less than 30°, further advantageously less than 10°, further preferably in parallel with the line of action of the gear teeth, and/or wherein the crowning is produced only via the modification of the tool and without any modification of the machine kinematics during the machining of the workpiece, and/or wherein the crowning is circular or parabolic or logarithmic or is composed of a plurality of circular, parabolic or logarithmic segments.

3. Method for the production of a workpiece having a corrected gear tooth geometry and/or a modified surface structure by a diagonal generating method by means of a modified tool,

wherein a specific modification of the surface geometry of the tool is produced which has a constant value at least locally in the generating pattern in a first direction of the tool and is given by a function $F_{Ft1}$ in a second direction of the tool which extends perpendicular to the first direction,

wherein the modification of the tool by the diagonal generating method produces a corresponding modification on the surface of the workpiece,

**characterized in that**

the specific modification represents a pure tooth trace modification, wherein the first or second directions of the modification of the tool and the diagonal ratio are selected such that the first direction is mapped onto transverse sectional planes of the workpiece.

4. Method in accordance with claim 3, wherein the tooth trace modification is freely predefined at least within certain conditions, wherein the tooth trace modification is preferably predefined as function $F_{Ft2}$ and/or the position of the dresser to the tool during the dressing is varied in dependence on the angle of rotation of the tool and/or on the tool width position in accordance with a function $F_{Ft1}$

5. Method for the production of a workpiece having a corrected gear tooth geometry and/or a modified surface structure by a diagonal generating method by means of a modified tool,

wherein a specific modification of the surface geometry of the tool is produced which has a constant value at least locally in the generating pattern in a first direction of the tool and is given by a function $F_{Ft1}$ in a second direction of the tool which extends perpendicular to the first direction,

wherein the modification of the tool by the diagonal generating method produces a corresponding modification on the surface of the workpiece,

**characterized in that**

the specific modification is an end relief, wherein the first or second directions of the modification of the tool and the diagonal ratio are selected in dependence on the desired direction of the end relief,

6. Method in accordance with claim 5, wherein the lines of constant modification extend at an angle of less than 60°, advantageously less than 30°, further advantageously less than 10°, further preferably in parallel with the line of action of the gear teeth and/or wherein the end relief is a triangular end relief, wherein the lines of constant modification have an angle $\alpha$ different from zero with the tooth edge.

7. Method in accordance with one of the claims 5 or 6, wherein the extent of the end relief perpendicular to the lines of constant modification is planar, parabolic, in the form of a part circle, logarithmic, exponential or elliptical or sectionally consists of such shapes or sectionally comprises such shapes and transitional regions which preferably provide a tangential transition, wherein the extent of the end relief perpendicular to the lines of constant modification, in particular in a first section, can be planar and merges in a transition region into an unmodified section or a section having another modification.

8. Method in accordance with one of the claims 5 to 7, wherein different end reliefs are provided at the upper edge and at the lower edge, and in particular end reliefs having different extents of the lines of constant modification, wherein work is carried out with different diagonal ratios for machining the two end reliefs, and/or wherein the tool comprises at least one modified region and one unmodified region and/or at least two regions with different modifications, in particular with modifications having a different orientation and in particular a different first direction, and/or two modified regions between which an unmodified region is disposed, wherein work is preferably carried out in at least two regions with different diagonal ratios.

9. Method in accordance with one of the preceding claims, wherein the desired modification of the surface geometry of the workpiece on the tooth gear flank has a constant value at least locally in the generating pattern in a first direction of the workpiece and is given by a function $F_{Ft2}$ in a second direction of the workpiece which extends perpendicular to the first direction,

   and the modification of the surface geometry of the tool used for producing this modification of the surface geometry of the workpiece has a constant value at least locally in the generating pattern in a first direction of the tool and further preferably is given in a second direction of the tool which extends perpendicular to the first direction by the same function $F_{Ft1}$, optionally compressed linearly by a factor,
   wherein the macrogeometry of the tool and/or the line of action of the dressing tool and/or the diagonal ratio and/or the compression factor are selected such that the modification of the tool along a first line on which the contact point moves on the tool on the machining of the workpiece corresponds to the desired modification of the workpiece along a second line on which the contact point moves on the workpiece,

10. Method in accordance with one of the preceding claims, wherein the specific modification of the surface geometry of the tool is produced in that the position of the dresser in relation to the tool is varied during the dressing process in dependence on the angle of rotation of the tool and/or on the tool width position, and/or wherein the specific modification of the surface geometry of the tool is produced by a change of the machine kinematics during the dressing process in dependence on the angle of rotation of the tool and/or on the tool width position, in particular in that one or more of the following corrections of the axial movements relative to the conventional dressing kinematics are carried out:

    a) varying the axial spacing of the dresser from the tool in dependence on the angle of rotation of the tool or on the tool width (feed),
    b) varying the axial feed of the tool or of the dresser in dependence on the angle of rotation of the tool or on the tool width (shift);
    c) varying the axial cross angle of the tool and of the dresser in dependence on the angle of rotation of the tool or on the tool width (pivot);
    d) varying the speed of the tool in dependence on the angle of rotation of the tool or on the tool width.

11. Gear manufacturing machine having a control function which is configured to produce the specific modification within the framework of the machining of a workpiece by carrying out the method in accordance with one of the claims 1 to 10, wherein the gear manufacturing machine advantageously comprises an input function and/or a calculation function via which the orientation of the modification can be predefined and/or determined,

12. Gear manufacturing machine according to claim 11, wherein the input function preferably allows the input of a desired modification and the calculation function determines the modifications required for its manufacture and/or the changes of the machine kinematics required for producing the modifications during the machining process and/or optionally during the dressing process, wherein a control function is preferably provided which correspondingly changes the machine kinematics during the machining process and/or optionally during the dressing process.

13. Computer system and/or software program for determining the modifications of the tool required for the manufacture of a workpiece having a desired modification and/or the required machining parameters on the carrying out of a method in accordance with one of the preceding claims,
    having a function for inputting a desired modification and having a calculation function which determines the parameters of the machining process of the workpiece required for the production of the desired modifications from the desired modifications of the workpiece and the required modification of the tool.

14. Computer system and/or software program in accordance with claim 13 having an interface to or installable on a gear manufacturing machine so that the changes of the machine kinematics during the dressing process and/or the parameters of the machining process can be predefined and/or determined by the computer system and/or the software program.

**15.** Geared workpiece, in particular a gear wheel, having at least one end relief, and/or a transmission having one or more geared workpieces having at least one modification, **characterized in that** the modification has a constant value at least locally in the generating pattern in a first direction, and is given by a function $F_{Ft2}$ in a second direction which extends perpendicular to the first direction, wherein end reliefs having different extents of the lines of constant modification are provided on the upper and lower edges.

**Revendications**

**1.** Procédé de fabrication d'une pièce à usiner avec géométrie de denture corrigée et/ou structure de surface modifiée selon un procédé de taillage par génération à avance en diagonale au moyen d'un outil modifié,

dans lequel une modification ciblée de la géométrie de surface de l'outil est générée, qui présente, dans l'image du taillage par génération, au moins localement dans une première direction de l'outil, une valeur constante et est donnée, dans une seconde direction de l'outil, qui s'étend perpendiculairement à la première direction, par une fonction $F_{Ft1}$,

dans lequel la modification de l'outil selon le procédé de taillage par génération à avance en diagonale génère une modification correspondante sur la surface de la pièce à usiner,

**caractérisé en ce que**

la modification ciblée sur la surface de la pièce à usiner est un bombage dirigé sans écart de forme, une direction prédéfinie du bombage étant obtenue par un choix correspondant de la première ou la seconde direction de la modification sur l'outil et du rapport de la diagonale.

**2.** Procédé selon la revendication 1, dans lequel le bombage est sans vrillage ou dans lequel le bombage présente un vrillage avec une direction librement prédéfinie sur le flanc de dent, la direction du vrillage étant avantageusement choisie de telle manière que les lignes de modification constante s'étendent selon un angle inférieur à 60°, avantageusement inférieur à 30°, de manière encore plus avantageuse inférieur à 10°, de préférence encore en parallèle par rapport à la ligne d'engrènement de la denture, et/ou dans lequel le bombage est généré uniquement par le biais de la modification de l'outil et sans modification de la cinématique de la machine lors de l'usinage de la pièce à usiner, et/ou dans lequel le bombage est en forme de cercle ou en forme de parabole ou logarithmique ou est composé de plusieurs segments en forme de cercle, de parabole ou de forme logarithmique.

**3.** Procédé de fabrication d'une pièce à usiner avec géométrie de denture corrigée et/ou structure de surface modifiée selon un procédé de taillage par génération à avance en diagonale au moyen d'un outil modifié,

dans lequel une modification ciblée de la géométrie de surface de l'outil est générée, qui présente, dans l'image du taillage par génération, au moins localement dans une première direction de l'outil, une valeur constante et est donnée, dans une seconde direction de l'outil, qui s'étend perpendiculairement à la première direction, par une fonction $F_{Ft1}$,

dans lequel la modification de l'outil selon le procédé de taillage par génération à avance en diagonale génère une modification correspondante sur la surface de la pièce à usiner,

**caractérisé en ce que**

la modification ciblée représente une modification uniquement de la ligne de flanc, la première ou la seconde direction de la modification de l'outil et le rapport de la diagonale étant choisis de telle manière que la première direction est reproduite sur des plans de coupe apparente de la pièce à usiner.

**4.** Procédé selon la revendication 3, dans lequel la modification de la ligne de flanc est librement prédéfinie au moins dans des conditions aux limites données, la modification de la ligne de flanc étant de préférence prédéfinie comme fonction $F_{Ft2}$, et/ou la position du dresseur par rapport à l'outil étant variée lors du dressage en fonction de l'angle de rotation de l'outil et/ou de la position en largeur de l'outil selon une fonction $F_{Ft1}$.

**5.** Procédé de fabrication d'une pièce à usiner avec géométrie de denture corrigée et/ou structure de surface modifiée selon un procédé de taillage par génération à avance en diagonale au moyen d'un outil modifié,

dans lequel une modification ciblée de la géométrie de surface de l'outil est générée, qui présente, dans l'image du taillage par génération, au moins localement dans une première direction de l'outil, une valeur constante et est donnée, dans une seconde direction de l'outil, qui s'étend perpendiculairement à la première direction, par une fonction $F_{Ft1}$,

dans lequel la modification de l'outil selon le procédé de taillage par génération à avance en diagonale génère une modification correspondante sur la surface de la pièce à usiner,

**caractérisé en ce que**

la modification ciblée est une dépouille d'extrémité, la première ou la seconde direction de la modification de l'outil et le rapport de la diagonale étant choisis en fonction de la direction souhaitée de la dépouille d'extrémité.

6. Procédé selon la revendication 5, dans lequel les lignes de modification constante s'étendent selon un angle inférieur à 60°, avantageusement inférieur à 30°, de manière encore plus avantageuse inférieur à 10°, de préférence encore en parallèle par rapport à la ligne d'engrènement de la denture et/ou dans lequel la dépouille d'extrémité est une dépouille en triangle, les lignes de modification constante présentant un angle $\alpha$ différent de zéro avec l'arête de la dent.

7. Procédé selon l'une des revendications 5 ou 6, dans lequel le tracé de la dépouille d'extrémité perpendiculairement aux lignes de modification constante est plan, en forme de parabole, en forme d'arc de cercle, logarithmique, exponentiel ou elliptique ou est constitué sur certaines parties de telles formes ou comprend sur certaines parties de telles formes ainsi que des zones de transition, qui fournissent de préférence une transition tangentielle, le tracé de la dépouille d'extrémité perpendiculairement aux lignes de modification constante pouvant être en particulier plan dans une première partie et devenant, dans une zone de transition, une partie non modifiée ou une partie avec une autre modification.

8. Procédé selon l'une des revendications 5 à 7, dans lequel des dépouilles d'extrémité différentes sont prévues sur l'arête supérieure et l'arête inférieure, et en particulier des dépouilles d'extrémité avec des tracés différents des lignes de modification constante, dans lequel, pour usiner les deux dépouilles d'extrémité, différents rapports de la diagonale sont appliqués, et/ou dans lequel l'outil comporte au moins une zone modifiée et une zone non modifiée et/ou au moins deux zones avec des modifications différentes, en particulier avec des modifications ayant une orientation différente et en particulier une première direction différente, et/ou deux zones modifiées, entre lesquelles se trouve une zone non modifiée, dans lequel le travail se fait de préférence dans au moins deux zones avec différents rapports de la diagonale.

9. Procédé selon l'une des revendications précédentes, dans lequel la modification souhaitée de la géométrie de surface de la pièce à usiner sur le flanc de la roue dentée présente, dans l'image du taillage par génération, au moins localement dans une première direction de la pièce à usiner, une valeur constante et est donnée, dans une seconde direction de la pièce à usiner, qui s'étend perpendiculairement à la première direction, par une fonction $F_{Ft2}$,

et la modification de la géométrie de surface de l'outil utilisée pour réaliser cette modification de la géométrie de surface de la pièce à usiner présente, dans l'image du taillage par génération, au moins localement dans une première direction de l'outil, une valeur constante et est en outre de préférence donnée, dans une seconde direction de l'outil, qui s'étend perpendiculairement à la première direction, par la même fonction $F_{Ft1}$, le cas échéant ayant subi une compression d'un certain facteur de manière linéaire,

dans lequel la macrogéométrie de l'outil et/ou la ligne d'attaque de l'outil de dressage et/ou le rapport de la diagonale et/ou le facteur de compression sont choisis de telle sorte que la modification de l'outil le long d'une première ligne, sur laquelle le point de contact se déplace sur l'outil lors de l'usinage de la pièce à usiner, correspond à la modification souhaitée de la pièce à usiner le long d'une seconde ligne, sur laquelle le point de contact se déplace sur la pièce à usiner.

10. Procédé selon l'une des revendications précédentes, dans lequel la modification ciblée de la géométrie de surface de l'outil est générée en variant la position du dresseur par rapport à l'outil lors du dressage en fonction de l'angle de rotation de l'outil et/ou de la position en largeur de l'outil, et/ou dans lequel la modification ciblée de la géométrie de surface de l'outil est générée par une modification de la cinématique de la machine pendant le processus de dressage en fonction de l'angle de rotation de l'outil et/ou de la position en largeur de l'outil, en particulier par le fait qu'une ou plusieurs des corrections suivantes des déplacements d'axe par rapport à la cinématique de dressage classique sont effectuées :

a) variation de l'écart entre les axes du dresseur et de l'outil en fonction de l'angle de rotation de l'outil ou de la largeur d'outil (approche)

b) variation de l'avance axiale de l'outil ou du dresseur en fonction de l'angle de rotation de l'outil ou de la largeur d'outil (décalage)

c) variation de l'angle de croisement des axes de l'outil et du dresseur en fonction de l'angle de rotation de l'outil ou de la largeur d'outil (pivotement)

d) variation de la vitesse de rotation de l'outil en fonction de l'angle de rotation de l'outil ou de la largeur d'outil.

11. Machine à tailler les engrenages comprenant une fonction de commande, qui est conçue pour, dans le cadre de l'usinage d'une pièce à usiner, générer la modification ciblée en exécutant le procédé selon l'une des revendications 1 à 10, la machine à tailler les engrenages comportant de préférence une fonction de saisie et/ou de calcul, par le biais de laquelle l'orientation de la modification peut être prédéfinie et/ou déterminée.

12. Machine à tailler les engrenages selon la revendication 11, dans laquelle la fonction de saisie permet la saisie d'une modification souhaitée et la fonction de calcul détermine les modifications nécessaires pour la réaliser et/ou les modifications de la cinématique de la machine nécessaires pour générer les modifications pendant le processus d'usinage et/ou le cas échéant pendant le processus de dressage, une fonction de commande étant de préférence prévue, qui modifie en conséquence la cinématique de la machine pendant le processus d'usinage et/ou le cas échéant pendant le processus de dressage.

13. Système informatique et/ou programme logiciel destiné à déterminer les modifications requises de l'outil pour fabriquer une pièce à usiner avec une modification souhaitée et les paramètres d'usinage requises lors de l'exécution d'un procédé selon l'une des revendications précédentes,
comprenant une fonction de saisie d'une modification souhaitée et une fonction de calcul, qui détermine, à partir des modifications souhaitées de la pièce à usiner, les paramètres du processus d'usinage de la pièce à usiner nécessaires pour générer celles-ci et la modification nécessaire de l'outil.

14. Système informatique et/ou programme logiciel selon la revendication 13, comprenant une interface avec une machine à tailler les engrenages ou pouvant être installée sur celle-ci, de telle sorte que les modifications de la cinématique de la machine pendant le processus de dressage et/ou les paramètres du processus d'usinage peuvent être prédéfinis et/ou déterminés par le système informatique et/ou le programme logiciel.

15. Pièce dentée à usiner, en particulier roue dentée, comprenant au moins une dépouille d'extrémité, et/ou engrenage avec une ou plusieurs pièces dentées à usiner comprenant au moins une modification, **caractérisée en ce que** la modification présente, dans l'image du taillage par génération, au moins localement dans une première direction, une valeur constante et est donnée, dans une seconde direction, qui s'étend perpendiculairement à la première direction, par une fonction $F_{Ft2}$, dans laquelle des dépouilles d'extrémité avec différents tracés des lignes de modification constante sont prévues comme modification sur l'arête supérieure et inférieure.

# Figur 1

# Figur 2

## Figur 3

a)

b)

Figur 4

# Figur 5

a)

b)

c)

Figur 6

Figur 7

Figur 8

Figur 9

Figur 10

Figur 11

Figur 12

Figur 13

Figur 14

Figur 15

Figur 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1995010 B1
- DE 102009000774 A1
- DE 19706867 A1
- DE 102012015846 A1
- DE 3704607
- EP 1995010 A
- DE 10208531

**In der Beschreibung aufgeführte Nicht-Patentliteratur**

- **NIEMANN, G ; WINTER, H.** Maschinenelemente. Springer Verlag, 1983, vol. 3
- **ZIERAU, S.** Die geometrische Auslegung konischer Zahnräder und Paarungen mit parallelen Achsen. Institut für Konstruktionslehre, Technische Universität Braunschweig
- **ZIERAU.** Die geometrische Auslegung konischer Zahnräder und Paarungen mit parallelen Achsen. Institut für Konstruktionslehre, Technische Universität Braunschweig